(19) Europäisches Patentamt
European Patent Office
Office européen des brevets

(11) EP 4 372 035 A1

(12) EUROPEAN PATENT APPLICATION
published in accordance with Art. 153(4) EPC

(43) Date of publication:
22.05.2024 Bulletin 2024/21

(21) Application number: 22842151.7

(22) Date of filing: 13.07.2022

(51) International Patent Classification (IPC):
*C08J 9/28 (2006.01)* *C01B 32/05 (2017.01)*
*C08G 73/06 (2006.01)* *C08G 73/10 (2006.01)*

(52) Cooperative Patent Classification (CPC):
C01B 32/05; C08G 73/06; C08G 73/10; C08J 9/28

(86) International application number:
PCT/JP2022/027586

(87) International publication number:
WO 2023/286809 (19.01.2023 Gazette 2023/03)

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME
Designated Validation States:
KH MA MD TN

(30) Priority: 13.07.2021 JP 2021115869
13.07.2021 JP 2021115886
13.07.2021 JP 2021115898
13.07.2021 JP 2021115903
02.05.2022 JP 2022076229

(71) Applicant: Asahi Kasei Kabushiki Kaisha
Tokyo 1000006 (JP)

(72) Inventors:
- MORI, Hirotaka
Tokyo 100-0006 (JP)
- YAMASHITA, Junya
Tokyo 100-0006 (JP)
- HIROSAWA, Kazu
Tokyo 100-0006 (JP)
- IWAMA, Tatsuhiro
Tokyo 100-0006 (JP)

(74) Representative: Strehl Schübel-Hopf & Partner
Maximilianstrasse 54
80538 München (DE)

# (54) POROUS POLYIMIDE HAVING HIGHLY UNIFORM NANO STRUCTURE

(57) The present invention provides a porous polyimide or polyimide wet gel with excellent physical properties. One aspect provides a porous polyimide in which an average pore size (d) obtained by using small-angle x-ray scattering is 1.0 nm to 7.0 nm. One aspect provides a porous polyimide in which the minimum value of the differential coefficient when the logarithmic value log[I(q)] of the scattering intensity I(q) is differentiated by the logarithmic value log[q] of the scattering vector q is -1.0 to 0.0 within a range in which the size of the scattering vector q in small-angle x-ray scattering is 0.025 $nm^{-1}$ to 0.075 $nm^{-1}$.

FIG. 1

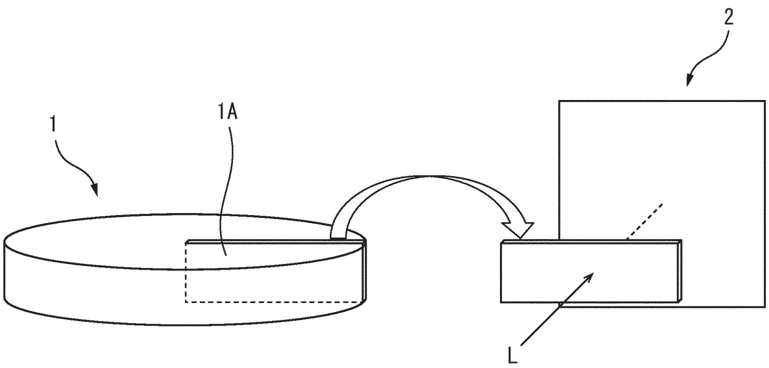


EP 4 372 035 A1

## Description

TECHNICAL FIELD

The present disclosure relates to a porous polyimide having highly uniform nano structure, and further relates to a polyimide wet gel and a porous carbon sheet.

BACKGROUND ART

Aerogels, while have been conventionally defined as porous substances obtained by replacement of solvents contained in gels with gases by supercritical drying, have been, in recent years, more broadly recognized as porous substances obtained by removing solvents from solvent-containing colloids or polymer network forms with suppression of shrinkage, a reduction in volume, and the like. Aerogels have various characteristics such as low density, high porosity, porousness (mesopore), high specific surface area, high specific strength, high heat insulating properties, high electrical insulating properties, and high sound insulating properties, due to fine pore structure thereof. Organic and inorganic aerogels, for example, silica aerogels, polymer aerogels (e.g., polyimide aerogels) and carbon aerogels are known as type of aerogels.
For example, polymer aerogels are known as porous substances obtained by removing solvents from colloids or polymer networks without shrinkage or a reduction in volume. Of polymer aerogels, polyimide aerogels can be useful in various applications where the heat resistance is required due to the contribution of satisfactory heat resistance inherent in polyimide.
PTLs 1 and 2 each describe a crosslinked polyimide aerogel and a production method thereof. The aerogel has a crosslinked polyamide formed with a triacid chloride crosslinking agent. The aerogel includes a polyimide oligomer component and the crosslinked polyamide, in which the crosslinked polyamide is bound to the polyimide oligomer component, and the polyimide oligomer component includes a reaction product of diamine and acid dianhydride, at a proportion of (n+1): n (n represents the number of repeating units in the oligomer).
PTL 3 describes a method for producing a crosslinked polyimide aerogel. The method includes synthesizing polyamide acids by polycondensation using acid dianhydrides and diamines as monomers, forming a polyimide wet gel by low-temperature permeation imidization using polyamino monomers as crosslinking agents, and producing a crosslinked polyimide aerogel by a supercritical drying step.
NPL 1 describes a method for producing a polyimide aerogel from an amine-capped oligomer crosslinked with 1,3,5-benzenetricarbonyl chloride (BTC). The literature indicates that an aerogel made according to the method has a comparable or more elastic modulus and a higher surface area than one having the same density as those of crosslinking of, for example, 1,3,5-tris(4-aminophenoxy)benzene (TAPB) or octa(aminophenoxy)silsesquioxane (OAPS), previously reported.
NPLs 2 and 3 report polyimide aerogels in which a linear aliphatic skeleton is introduced into the polyimide main chain, using polyamide acid composed of diamine linked by a linear aliphatic chain and an acid dianhydride as raw materials. These literatures describe that the polyimide aerogel has flexibility derived from a linear aliphatic structure and that a sheet-shaped polyimide aerogel can be fabricated.
NPL 4 describes hyperbranched polyimides synthesized from dianhydrides and triisocyanates.
NPL 5 describes a method for producing a nanoporous polyimide aerogel. The method includes crosslinking a polyamine acid oligomer capped with an anhydride, with an aromatic triamine in a solution, for chemical imidization to obtain a polyimide gel, and supercritically drying the gel to obtain a nanoporous polyimide aerogel.
NPL 6 describes a polyimide aerogel synthesized from a combination of 3,3',4,4'-biphenyltetracarboxylic dianhydride (BPDA) and 4,4'-oxydianiline (ODA), or a combination of 4,4'-oxydianiline (ODA) and 9,9'-bis(4-aminophenyl)fluorene (BAPF), followed by crosslinking with 1,3,5-benzenetricarbonyltri chloride (BTC).
NPL 7 describes the relationship between the structure and properties of a polyimide aerogel having skeletons of pyromellitic dianhydride (PMDA) and biphenyltetracarboxylic dianhydride (BPDA) and having various diamine fractions.
NPL 8 describes a rigid polymer network in which an aromatic polyimide (PI) skeleton is terminated with a symmetrical crosslinking agent. Using 1,3,5-tris(4-aminophenyl)benzene (TAB) or tetra(4-aminophenyl)methane (TAPM) as the crosslinking agent, a polyamide acid precursor is bonded to TAB or TAPM at the end to produce a polyamide acid network.
Because of having properties such as high conductivity, adsorption and chemical stability, porous carbon materials are widely used as electrode materials, catalyst carriers and the like. There have been known, as porous carbon materials, for example, porous carbon materials having pores in the nano order, such as molecular sieve carbon, activated carbon, carbon nanotubes, carbon nanofibers, and template carbon produced from zeolite templates; porous carbon materials having pores in the submicron order, such as vapor-grown carbon and carbon aerogels; and porous carbon materials having pores in the micron order, such as carbon foams, carbon fiber woven fabrics, and reticulated

vitreous carbon.

Porous carbon materials having pores in the nano order are generally formed by chemical approaches, and their shapes include powder (zero-dimensional), fiber (one-dimensional), relatively thin sheet (two-dimensional), and bulk shape of various shapes such as relatively thick sheet and block (three-dimensional). Porous carbon materials having relatively large pores in the micron order can be generally formed by physical approaches such as foaming, and are often produced in shapes ranging from fiber to bulk. It is difficult to produce porous carbon materials having pores in the submicron order by chemical or physical approaches, and for example, powdered vapor-grown carbon and carbon aerogels, and bulk-shaped carbon aerogel and the like are only known. Carbon aerogels can be produced, for example, by carbonizing polymer aerogels such as resorcinol-based phenol resins at high temperature.

NPLs 1 to 7 contain the above-mentioned descriptions. NPL 4 describes a method for synthesizing monolithic multiscale micro/meso/macroporous polymers based on highly branched polyimides synthesized from acid dianhydrides and triisocyanates. The literatures describe that the microporous polymer has characteristics inherent in the molecular network, and withstands thermal decomposition and transforms into a multiscale nanoporous carbon material having mesoporosity and macroporosity. NPL 6 describes that shrinkage is suppressed by incorporating the bulky moiety into the polymer skeleton.

NPL 9 describes that when resorcinol and formaldehyde are polyfused under alkali conditions, clusters of surface-functionalized phenolic resin are formed, and a gel is formed by crosslinking the clusters with covalent bond, followed by treatment in a supercritical state to obtain a low density organic aerogel (0.1 g/cm$^3$).

[CITATION LIST]

[PATENT LITERATURE]

[PTL 1] US 9,434,832
[PTL 2] US 10,358,539
[PTL 3] China Patent No. 108203516

[NON-PATENT LITERATURE]

[NPL 1] Mary Ann B. Meador, et al., "Polyimide Aerogels with Amide Cross-Links: A Low Cost Alternative for Mechanically Strong Polymer Aerogels", ACS Appl. Mater. Interfaces, (2015), 7(2), 1240-1249

[NPL 2] Jessica L. Cashman, et al., "Flexible Polyimide Aerogels Derived from the Use of a Neopentyl Spacer in the Backbone", ACS Appl. Polym. Mater., (2020), 2, pp.2179-2189

[NPL 3] Marcos Pantoja, et al., "Increased Flexibility in Polyimide Aerogels Using Aliphatic Spacers in the Polymer Backbone", ACS Appl. Mater. Interfaces, (2019), 11, pp.9425-9437

[NPL 4] Chidambareswarapattar et al., Robust monolithic multiscale nanoporous polyimides and conversion to isomorphic carbon, RSC Adv.z, 2013, 3, pp.26459-26469

[NPL 5] Mary Ann B Meador, et al., "Mechanically strong, flexible polyimide aerogels crosslinked with aromatic triamine", ACS Appl. Mater. Interfaces, (2012), 4(2), pp.536-544

[NPL 6] Rocco P. Viggiano, et al., "Effect of Bulky Substituents in the Polymer Backbone on the Properties of Polyimide Aerogels", ACS Appl. Mater. Interfaces, (2017), 9(9), pp.8287-8296

[NPL 7] Shahriar Ghaffari Mosanenzadeh, et al., "Structure to properties relations of BPDA and PMDA backbone hybrid diamine polyimide aerogels", Polymer, (2019), 176(2), pp.213-226

[NPL 8] Naoki Yoshihara, et al., "Rigid Polymer Networks End-Linked with Tri- and Tetra-armed Crosslinkers", Macromol. Chem. Phys., (2014), 215(10), 988-997

[NPL 9] R.W. Pekala, et al., "Organic aerogels from the polycondensation of resorcinol with formaldehyde", J. Mater. Sci., (1989), 24(9), 3221-3227

SUMMARY

[TECHNICAL PROBLEM]

However, none of the above-mentioned prior art could realize excellent physical properties in porous polyimides, polyimide wet gels or porous carbon sheets.

First, the polyimide aerogels described in PTLs 1 and 2, and NPLs 1 to 6 are considered to have a pore structure (macropore) causing diffuse reflection of light, and have low light transmittability. The pore structure also includes micropores in addition to macropores, and has wide pore size distribution, and thus the uniformity of the polyimide skeleton structure tends to deteriorate and the mechanical strength tends to be poor, and especially in a bending test, there is a tendency that the bending elastic modulus, bending strength and strain at break deteriorate. In the polyimide aerogels described in NPLs 2 and 3, since the polyimide aerogels having a linear aliphatic structure are crosslinked, the aerogels have high flexibility but tends to have poor mechanical strength, and especially in bending tests, the bending elastic modulus or bending strength tends to deteriorate. Also, similar to the polyimide aerogels described in PTLs 1 and 2 and NPL 1, the polyimide aerogels described in NPLs 2 and 3 also tend to have low uniformity in the structure of the polyimide skeleton.

Second, in recent years, the applications desired for the polyimide aerogel have become broader, and for example, applications to thermal insulating materials, low-dielectric materials, filter materials and the like are being considered. Porous carbon sheets can also be useful as catalyst carriers, electrode materials, filter materials and the like. However, the aerogels described in PTLs 1 and 2 have low toughness (resistance to bending) and cannot be said to be applicable to a wide range of uses.

Third, in recent years, the applications desired for the polyimide aerogel have become broader, and for example, use as flexible and highly heat-resistant thermal insulating material is being considered. However, the aerogels described in PTLs 1 and 2 do not have sufficient heat resistance against heat processing, leading to a problem that the aerogel is deformed during heat processing and the pore structure is impaired. The polyimide aerogels fabricated by the methods described in NPLs 1 and 5 to 7 can be formed in a sheet in principle, but has a problem of insufficient heat resistance leading to shrinkage at high temperature. In NPLs 2 and 3, the introduction of an aliphatic skeleton into the main chain of the polyimide aerogel enables forming in a sheet, however, similar to NPLs 1 and 5 to 7, the heat resistance cannot be said to be sufficient due to the introduction of a linear aliphatic structure whose heat resistance is generally inferior to that of an aromatic skeleton. In the method described in NPL 4, the polyimide is polymerized and gelled using triisocyanate. However, this method requires high temperature and long reaction conditions in the polymerization and gelation. Therefore, even if the polymerization solution is spread into a sheet, the rate of volatilization of the solvent is overwhelmingly faster than the polymerization and gelation rate, thereby making it impossible to form a sheet-shaped wet gel, thus failing to obtain a sheet-shaped porous polyimide.

Fourth, in conventional methods as described in PTLs 1 and 2 and NPLs 1, 6 and 7, polyamide acid is imidized in a solution to obtain a polyimide solution, and then a polyimide is gelled by introducing a crosslinking point to obtain a polyimide wet gel. However, the polyimide is difficult to dissolve in general-purpose organic solvents and easily undergoes aggregation, precipitation and sedimentation in the solution during gelation. In the conventional methods described in PTL 3 and NPL 8, polyamide acid is first gelled to obtain a polyamide acid wet gel, and then the polyamide acid wet gel is imidized to obtain a polyimide wet gel. However, the polyamide acid wet gel is easily deformed in the solution during imidization, and a polyimide wet gel may not be obtained. For example, PTL 3 describes that imidization is carried out at low temperature of -30°C to 5°C for a long time, and NPL 8 describes that the molecular weight distribution of a polyamide acid is narrowed in addition to performing imidization at low temperature, However, it was difficult for the conventional techniques described above to produce a polyimide wet gel with excellent physical strength.

Fifth, in conventional methods as described in PTLs 1 and 2 and NPLs 1, 6 and 7, polyamide acid is imidized in a solution to obtain a polyimide solution, and then a polyimide is gelled by introducing a crosslinking point to obtain a polyimide wet gel. However, the polyimide is difficult to dissolve in general-purpose organic solvents and easily undergoes aggregation, precipitation and sedimentation in the solution during gelation. Therefore, there is a limitation on the structure of polyamide acid that can be used. In conventional methods as described in PTL 3 and NPL 8, polyamide acid is first gelled to obtain a polyamide acid wet gel, and then the polyamide acid wet gel is imidized to obtain a polyimide wet gel. However, the polyamide acid wet gel is easily deformed in the solution during imidization, and a polyimide wet gel may not be obtained. Therefore, for example, as described in PTL 3, imidization is carried out at low temperature of -30°C to 5°C for a long time, and NPL 8 discloses that when a polyamide acid wet gel is imidized in a mixture of acetic anhydride and pyridine, the shape of the sample deforms significantly.

Sixth, conventionally, it has been difficult to produce a porous carbon material having a sheet shape, which is a porous carbon material having pores in the submicron order. As described in NPLs 1 and 5 to 7, polyimide aerogels are known. NPLs 2 and 3 also report polyimide aerogel sheets spread into a sheet. Examples of commercially available polyimide aerogel sheet include AeroZero (trade name) manufactured by BLUESHIFT Materials Inc. However, these conventional polyimide aerogel sheets have low heat resistance and the pore structure collapses under carbonization conditions, thus failing to obtain porous carbon sheets. In the method described in NPL 4, polyimide is polymerized and gelled using triisocyanate, and then this is carbonized. In the method described in NPL 9, resorcinol and formaldehyde are reacted to polymerize and gel a phenol resin. However, these methods require high temperature and long reaction conditions in the polymerization and gelation. Therefore, even if the polymerization solution is spread into a sheet, the rate of volatilization of the solvent is overwhelmingly faster than the polymerization and gelation rate, thereby making it

impossible to form a sheet-shaped wet gel, thus failing to obtain a porous carbon sheet.

It is an object of the present disclosure to provide a porous polyimide, a polyimide wet gel or a porous carbon sheet that can solve one or more of the above problems. More specifically, it is an object of first and second aspects of the present to provide a porous polyimide with satisfactory toughness. It is an object of a third aspect of the present disclosure to provide a sheet-shaped porous polyimide having satisfactory heat resistance. It is an object of a fourth aspect of the present disclosure to provide a polyimide wet gel with excellent physical strength. It is an object of a fifth aspect of the present disclosure to provide a polyimide wet gel and a method for producing a porous polyimide, which can suppress the deformation of a polyamide acid wet gel during imidization. It is an object of a sixth aspect of the present disclosure to provide a porous carbon sheet having submicron order pores, and a method for producing the same.

[SOLUTION TO PROBLEM]

The present disclosure includes the following items.

[1] A porous polyimide, wherein an average pore size (D) determined by small-angle X-ray scattering is 1.0 nm or more and 7.0 nm or less.

[2] The porous polyimide according to item 1, wherein, in a range where the size of a scattering vector q of small-angle X-ray scattering is 0.025 $nm^{-1}$ or more and 0.075 $nm^{-1}$ or less, when a logarithmic value log[I(q)] of a scattering intensity I(q) is differentiated by a logarithmic value log[q] of the scattering vector q, the minimum value of a differential coefficient is -1.0 or more and 0.0 or less.

[3] The porous polyimide according to item 1 or 2, wherein an average pore diameter (L) determined by the following formula:

$$L = 4V/A$$

based on a pore volume (V) and a BET specific surface area (A) determined by a gas adsorption method is 5 nm or more and 500 nm or less.

[4] The porous polyimide according to any one of items 1 to 3, wherein a bending elastic modulus in a three-point bending test is 100 MPa or more.

[5] The porous polyimide according to any one of items 1 to 4, wherein a bending elastic modulus in a three-point bending test is 200 MPa or more.

[6] The porous polyimide according to any one of items 1 to 5, wherein a bending strength in a three-point bending test is 5 MPa or more.

[7] The porous polyimide according to any one of items 1 to 6, wherein a bending strength in a three-point bending test is 10 MPa or more.

[8] The porous polyimide according to any one of items 1 to 7, wherein a bulk density is 0.05 $g/cm^3$ or more and 0.50 $g/cm^3$ or less.

[9] The porous polyimide according to any one of items 1 to 8, wherein a BET specific surface area is 100 $m^2/g$ or more and 2,000 $m^2/g$ or less.

[10] The porous polyimide according to any one of items 1 to 9, which has a sheet shape.

[11] The porous polyimide according to any one of items 1 to 10, wherein a polyimide constituting the porous polyimide has a polyimide main skeleton and a crosslinked structure that crosslinks the polyimide main skeleton.

[12] A porous polyimide, wherein an average pore diameter (L) determined by the following formula:

$$L = 4V/A$$

based on a pore volume (V) and a BET specific surface area (A) determined by a gas adsorption method is 5 nm or more and 500 nm or less, and

a bending elastic modulus in a three-point bending test is 150 MPa or more.

[13] The porous polyimide according to item 12, wherein the bending elastic modulus in a three-point bending test is 200 MPa or more.

[14] A porous polyimide, wherein an average pore diameter (L) determined by the following formula:

$$L = 4V/A$$

based on a pore volume (V) and a BET specific surface area (A) determined by a gas adsorption method is 5 nm or more and 500 nm or less, and
a bending strength in a three-point bending test is 10 MPa or more.
[15] The porous polyimide according to any one of items 12 to 14, wherein a polyimide constituting the porous polyimide has a polyimide main skeleton and a crosslinked structure that crosslinks the polyimide main skeleton.
[16] A porous polyimide comprising a polyimide main skeleton having an aromatic group in a molecular backbone and a crosslinked structure having an aromatic group in a molecular backbone, wherein

an average pore diameter (L) determined by the following formula:

$$L = 4V/A$$

based on a pore volume (V) and a BET specific surface area (A) determined by a gas adsorption method is 5 nm or more and 500 nm or less, and
a bending elastic modulus in a three-point bending test is 50 MPa or more.

[17] The porous polyimide according to any one of items 12 to 16, wherein a bulk density is 0.05 $g/cm^3$ or more and 0.50 $g/cm^3$ or less.
[18] The porous polyimide according to any one of items 12 to 17, wherein a BET specific surface area is 10 $m^2/g$ or more and 2,000 $m^2$ /g or less.
[19] The porous polyimide according to any one of items 12 to 18, wherein, in a polyimide constituting the porous polyimide, a ratio of the number of carbonyl carbon atoms to the total number of carbon atoms is 13.5% or more.
[20] A sheet-shaped porous polyimide, wherein an average pore diameter (L) determined by the following formula:

$$L = 4V/A$$

based on a pore volume (V) and a BET specific surface area (A) determined by a gas adsorption method is 5 nm or more and 500 nm or less, and
a BET specific surface area after heat treatment at 300°C for 1 hour is 10 $m^2$ /g or more and 2,000 $m^2$ /g or less.
[21] The porous polyimide according to item 20, wherein a bulk density is 0.05 $g/cm^3$ or more and 0.50 $g/cm^3$ or less.
[22] The porous polyimide according to item 20 or 21, wherein, in a polyimide constituting the porous polyimide, a ratio of the number of carbonyl carbon atoms to the total number of carbon atoms is 13.5% or more.
[23] The porous polyimide according to any one of items 20 to 22, wherein a polyimide constituting the porous polyimide has a polyimide main skeleton and a crosslinked structure that crosslinks the polyimide main skeleton.
[24] The porous polyimide according to any one of items 1 to 23, wherein the crosslinked structure is a structure by a tri- or higher-valent group derived from an optionally substituted monocyclic or polycyclic aromatic ring, or a tri- or higher-valent group derived from a linked aromatic ring in which a plurality of optionally substituted aromatic rings are linked to each other by direct binding or by binding via a hetero atom.
[25] The porous polyimide according to any one of items 1 to 24, wherein the polyimide main skeleton has a structure represented by the following general formula (1):

[Chemical Formula 1]

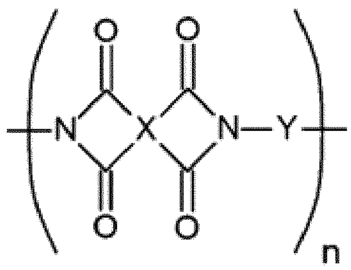

(1)

wherein

X is a tetravalent organic group,
Y is a divalent organic group, in which,
X is a tetravalent group derived from an optionally substituted monocyclic or polycyclic aromatic ring, or a tetravalent group derived from a linked aromatic ring in which a plurality of optionally substituted aromatic rings are linked to each other by direct binding or by binding via a hetero atom, and/or,
Y is a divalent group derived from an optionally substituted monocyclic or polycyclic aromatic ring, or a divalent group derived from a linked aromatic ring in which a plurality of optionally substituted aromatic rings are linked to each other by direct binding or by binding via a hetero atom, and
n is a positive integer, and a degree of polymerization of the polyimide main skeleton is n in the general formula (1).

[26] The porous polyimide according to any one of items 1 to 25, wherein a polyimide constituting the porous polyimide contains a polymerization product of a polymerization component containing a tetracarboxylic dianhydride, a diamine, and a tri- or higher-functional amine, and a ratio of the tri- or higher-functional amine based on 100% by mass in total of the tetracarboxylic dianhydride, the diamine and the tri- or higher-functional amine is 1% by mass or more and 40% by mass or less.
[27] The porous polyimide according to any one of items 1 to 26, wherein an average thickness is 10 mm or less.
[28] The porous polyimide according to any one of items 1 to 27, wherein a polyimide constituting the porous polyimide contains a polymerization product of a polymerization component containing a tetracarboxylic dianhydride and a diamine,

pyromellitic anhydride accounts for 50 mol% or more of the tetracarboxylic dianhydride, and

the end of the polyimide is an anhydride structure derived from pyromellitic anhydride.

[29] A polyimide wet gel, wherein, when qI(q) obtained by multiplying the scattering intensity I(q) by q is plotted against the scattering vector q of small-angle X-ray scattering, qI(q) has a maximum value in a range of $0.04\ nm^{-1} < q < 2.0\ nm^{-1}$, and an average pore size $D_W$ calculated from the peak position of qI(q) is 0.8 nm or more and 8.0 nm or less.
[30] The polyimide wet gel according to item 29, wherein, in a range where the size of a scattering vector q of small-angle X-ray scattering is $0.080\ nm^{-1}$ or more and $0.12\ nm^{-1}$ or less, when a logarithmic value log[I(q)] of a scattering intensity I(q) is differentiated by a logarithmic value log[q] of the scattering vector q, the minimum value of a differential coefficient is -1.0 or more and 0.0 or less.
[31] The polyimide wet gel according to item 29 or 30, wherein a strain at break in a three-point bending test is 10% or more.
[32] The polyimide wet gel according to any one of items 29 to 31, wherein a polyimide constituting the polyimide wet gel has a molecular chain represented by the following general formula (1):

[Chemical Formula 2]

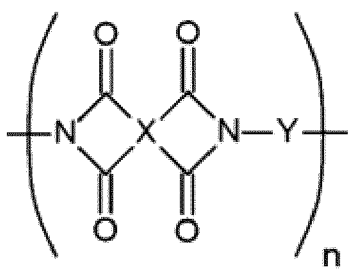

(1)

wherein X is a tetravalent organic group, Y is a divalent organic group and n is a positive integer, X and/or Y in the general formula (1) has/have a structure imparting linearity to the molecular chain, and n is a degree of polymerization of the polyimide.
[33] The polyimide wet gel according to any one of items 29 to 32, wherein a polyimide constituting the polyimide wet gel has a molecular chain represented by the following general formula (1):

[Chemical Formula 3]

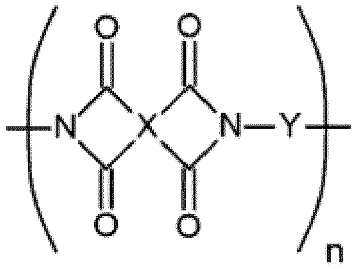

(1)

wherein X is a tetravalent organic group, Y is a divalent organic group and n is a positive integer, a ratio of a structure derived from pyromellitic anhydride to X present in the molecular chain is 50 mol% or more, and the end of the molecular chain is derived from pyromellitic anhydride.

[34] The polyimide wet gel according to any one of items 29 to 33, which has a sheet shape.

[35] The polyimide wet gel according to any one of items 29 to 34, wherein a porous polyimide obtained by subjecting to supercritical carbon dioxide drying after replacing the solvent in the polyimide wet gel with acetone has:

BET specific surface area: 100 $m^2$ /g or more and 2,000 $m^2$ /g or less,
bulk density: 0.05 g/$cm^3$ or more and 0.50 g/$cm^3$ or less,
bending strength: 5 MPa or more,
bending elastic modulus: 100 MPa or more, and
average pore size (D) determined by small-angle X-ray scattering; 1.0 nm or more and 7.0 nm or less.

[36] A method for producing a polyimide wet gel, which comprises the steps of:

adding a crosslinking agent having three or more functional groups to a polyamide acid solution to obtain a polyamide acid wet gel, and
immersing the polyamide acid wet gel in a solution containing a dehydrating imidization agent to obtain a polyimide wet gel, wherein
the concentration of the dehydrating imidization agent in the solution is 1% by weight or more and 50% by weight or less.

[37] The method according to item 36, wherein the temperature in the step of obtaining a polyamide acid wet gel and the step of obtaining a polyimide wet gel is kept at 10°C or higher.

[38] The method according to item 36 or 37, wherein the temperature of the step of obtaining a polyamide acid wet gel and the step of obtaining a polyimide wet gel is kept at 120°C or lower.

[39] The method according to any one of items 36 to 38, wherein the step of obtaining a polyamide acid wet gel is carried out by spreading a mixture obtained by adding the crosslinking agent having three or more functional groups to the polyamide acid solution into a sheet.

[40] The method according to any one of items 36 to 39, wherein the dehydrating imidization agent is a combination of acetic anhydride and triethylamine.

[41] The method according to any one of items 36 to 40, wherein a porous polyimide constituting the polyimide wet gel has a BET specific surface area after heat treatment at 300°C for 1 hour of 10 $m^2$/g or more and 2,000 $m^2$/g or less.

[42] The method according to any one of items 36 to 41, wherein a porous polyimide constituting the polyimide wet gel has a bending strength in a three-point bending test of 10 MPa or more and a bending elastic modulus of 100 MPa or more.

[43] The method according to any one of items 36 to 42, wherein a porous polyimide constituting the polyimide wet gel determined by small-angle X-ray scattering has an average pore size (D) of 1.0 nm or more and 7.0 nm or less.

[44] The method according to any one of items 36 to 43, wherein a polyimide constituting the polyimide wet gel has a molecular chain represented by the following general formula (1):

[Chemical Formula 4]

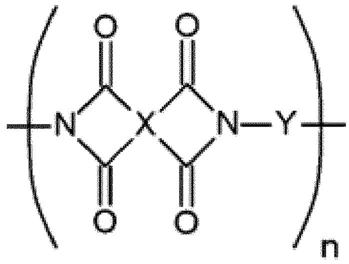

(1)

wherein X is a tetravalent organic group, Y is a divalent organic group and n is a positive integer, X and/or Y in the general formula (1) has/have a structure imparting linearity in the molecular chain, and n is a degree of polymerization of the polyimide.

[45] A method for producing a porous polyimide, which comprises the steps of:

obtaining the polyimide wet gel by the method according to any one of items 36 to 44, and
removing the solution from the polyimide wet gel to obtain a porous polyimide.

[46] A porous carbon sheet which is a carbonized product of the porous polyimide according to any one of items 1 to 28, and
an average pore diameter (L) determined by the following formula:

$$L = 4V/A$$

based on a pore volume (V) and a BET specific surface area (A) determined by a gas adsorption method is 5 nm or more and 500 nm or less.

[47] The porous carbon sheet according to item 46, wherein a bulk density is 0.01 g/cm$^3$ or more and 0.80 g/cm$^3$ or less.

[48] The porous carbon sheet according to item 46 or 47, wherein an average thickness is 10 mm or less.

[49] The porous carbon sheet according to any one of items 46 to 48, wherein a BET specific surface area is 10 m$^2$ or more and 2,000 m$^2$ or less.

[50] A method for producing a porous carbon sheet, which comprises the step of carbonizing the porous polyimide sheet according to any one of items 1 to 28 by heating to 400°C or higher to obtain a porous carbon sheet, wherein an average pore diameter (L) determined by the following formula:

$$L = 4V/A$$

based on a pore volume (V) and a BET specific surface area (A) determined by a gas adsorption method of the porous carbon sheet is 5 nm or more and 500 nm or less.

[51] A method for producing a porous carbon sheet, which comprises the steps of:

obtaining a porous polyimide sheet by the method according to item 45, and
carbonizing the sheet by heating to 400°C or higher to obtain a porous carbon sheet, wherein
an average pore diameter (L) determined by the following formula:

$$L = 4V/A$$

based on a pore volume (V) and a BET specific surface area (A) determined by a gas adsorption method of the porous carbon sheet is 5 nm or more and 500 nm or less.

[Effects of the Invention]

According to the first and second aspects of the present disclosure, porous polyimide with excellent toughness can be provided. According to the third aspect or the present disclosure, a sheet-shaped porous polyimide with satisfactory

heat resistance can be provided. According to the fourth aspect or the present disclosure, a polyimide wet gel with excellent physical strength can be provided. According to the fifth aspect or the present disclosure, it is possible to provide a polyimide wet gel and a method for producing a porous polyimide, which can suppress the deformation of a polyamide acid wet gel during imidization. According to the sixth aspect or the present disclosure, it is possible to provide a porous carbon sheet having pores in the submicron order and a production method thereof.

BRIEF DESCRIPTION OF DRAWINGS

FIG. 1 is a diagram illustrating small-angle X-ray scattering measurement.

DESCRIPTION OF EMBODIMENTS

Hereinafter, one embodiment of the present invention (hereinafter abbreviated as "embodiment") will be described in detail. The present invention is not limited to the following embodiment, and can be variously modified and carried out within the gist thereof. The characteristic values mentioned in the present disclosure are, unless otherwise noted, values measured in a manner understood by those skilled in the art to be described in or equivalent to those described in the item of [EXAMPLES] of the present disclosure.

<<<Porous Polyimide>>>

One aspect of the present invention provides a porous polyimide composed of polyimide (hereinafter also referred to as "porous polyimide composition"). The porous polyimide may include any component other than the polyimide as long as the effects of the present invention are not impaired.

< <First Aspect> >

In the porous polyimide according to one aspect, the average pore size (D) determined by small-angle X-ray scattering is 1.0 nm or more, or 1.5 nm or more, or 2.0 nm or more, in terms of having a pore structure suitable for an aerogel. From the viewpoint of obtaining satisfactory bending elastic modulus, bending strength and strain at break, in one aspect, the average pore size is 7.0 nm or less, or 6.0 nm or less, or 5.0 nm or less.

In a small-angle X-ray scattering intensity profile from a large-sized structure, the scattering intensity is large in a region where the scattering vector q is small, and the scattering intensity is small in a region where q is large. Meanwhile, when the structure size is sufficiently smaller than the reciprocal of the observed q, the scattering intensity does not show q dependence and takes a constant value. Therefore, when the amount of change in X-ray scattering intensity per unit change of the scattering vector q in an ultra-small angle region is small, it is considered that there are fewer structural parts of a size that causes diffuse reflection of visible light, which is advantageous in terms of the transparency.

In one aspect, in a range where the size of a scattering vector q of small-angle X-ray scattering is 0.025 $nm^{-1}$ or more and 0.075 $nm^{-1}$ or less, when a logarithmic value log[I(q)] of a scattering intensity I(q) is differentiated by a logarithmic value log[q] of the scattering vector q, the minimum value of a differential coefficient (also simply referred to as minimum differential coefficient value) is preferably -1.0 or more, or -0.95 or more, or -0.90 or more. The absolute value of the minimum differential coefficient value is desirably close to zero, and in one aspect, it is 0.0 or less, and from the viewpoint of ease of producing the porous polyimide, in one embodiment, it is -0.01 or less, or may be -0.05 or less. When the porous polyimide has an average pore size (D) in a range of the present disclosure and the minimum differential coefficient value within the above range, it is considered that there are many micropores and few large-sized structural parts in the porous polyimide. Since such a porous polyimide has a desired pore structure and excellent structural uniformity, it is possible to achieve both satisfactory toughness (more specifically, bending elastic modulus, bending strength and strain at break) and satisfactory transparency.

In small-angle X-ray scattering measurement, X-rays are incident on the surface of a thin piece cut out from the porous polyimide. In one aspect, the surface of the thin piece is a cross section in the direction in which the outer diameter of the porous polyimide is the smallest (e.g., thickness direction in the sheet). Calculation of the average pore size (D) and quantification of structural non-uniformity can be carried out as follows.

<Calculation of Average Pore Size (D)>

For the scattering pattern $I(2\theta,\varphi)$ in small-angle X-ray scattering (SAXS) measurement, a one-dimensional scattering profile $I_{obs}(2\theta)$ is obtained by circular averaging as shown in the following formula (1):
[Mathematical Formula 1]

$$I_{\text{obs}}(2\theta) = \frac{1}{2\pi P}\int_0^{2\pi} \frac{I(2\theta,\phi)}{\cos^3 2\theta}\mathrm{d}\phi \qquad (1)$$

where

P: Polarization factor
2θ: Scattering angle
φ: Azimuth angle

The one-dimensional profile calculated by the above formula (1) includes, in addition to scattering derived from the sample, scattering from sources other than the sample, such as window material and air scattering. Therefore, empty cell scattering correction is carried out using the following formula (2):
[Mathematical Formula 2]

$$I(2\theta) = \left[\frac{I_{\text{obs,sample}}(2\theta)}{t_{\text{sample}}T} - \frac{I_{\text{obs,empty}}(2\theta)}{t_{\text{empty}}}\right] \qquad (2)$$

where

I(2θ): Scattering intensity after empty cell scattering correction
$I_{obs}$ (2θ): Scattering intensity before correction (circular average profile obtained by formula (1))
t: Measurement time
T: X-ray transmittance of sample

Vacancies in the porous body are present at random, and the influence of interference between vacancies is considered to be small. At this time, the scattering intensity I(q) is considered to follow the Guinier law represented by the following formula (3):
[Mathematical Formula 3]

$$I(q) = A\exp\left[-\frac{R_g^2 q^2}{3}\right] \qquad (3)$$

where the scattering vector q = 4πsinλ/λ (λ: incident X-ray wavelength) (see R. J. Roe, "Method of "X-ray and Neutron Scattering in Polymer Science", Oxford, Oxford University Press (2000)).

Here, A is a constant and $R_g$ is a radius of inertia of a scatterer. When the above formula (3) is established, from the following formula (4):
[Mathematical Formula 4]

$$\frac{d}{dq}\left[q^2 I(q)\right] = 2Aq\left(1-\frac{R_g^2 q^2}{3}\right)\exp\left[-\frac{R_g^2 q^2}{3}\right] \qquad (4)$$

the point $q_{peak}$ where $q^2$ I(q), which is obtained by multiplying the circular average profile I(q) of the porous polyimide by $q^2$, takes a maximum value, is $q_{peak} = 3^{1/2}/R_g$, and $R_g$ can be estimated from $q_{peak}$.

Average pore size (D) = $3^{1/2}/q_{peak}$ is calculated from the value of the point $q_{peak}$ where $q^2$ I(q) takes a maximum value when $q^2$ I(q) is plotted against q.

<Calculation of Minimum Differential Coefficient Value (Quantification of Structural Non-Uniformity)>

A polymer gel generally has non-uniformity in crosslink density or non-uniformity in concentration of polymers frozen by crosslinking. For this reason, in the scattering profile of the polymer gel, excess scattering due to structural non-uniformity is often seen in the region where q is small. Scattering due to structural non-uniformity is described as, for example, $I(q) = \exp[-\Xi^2 q^2]$ ($\Xi$: correlation length of structural non-uniformity), and the intensity of this excess scattering reflects the magnitude of the structural non-uniformity of the polymer gel (see M. Shibayama et al., J. Chem. Phys. 1992, 97, 6829).

In excess scattering, the scattering intensity tends to increase rapidly as the scattering vector q becomes smaller, and is often expressed as "upturn in small angle region". When expressed as $I(q) \propto q^{-\alpha}$, in a double logarithmic plot of I(q) against q, "small angle region upturns" corresponds to the fact that an index $\alpha$ suddenly increases in the small angle region. When $I(q) \propto q^{-\alpha}$, the differential coefficient dlog[I(q)]/dlog[q] = -$\alpha$, thus making it possible to quantify the magnitude of upturn in the small angle region, due to the q dependence of dlog[I(q)]/dlog[q].

Using the circular average profile of the porous polyimide, dlog[I(q)]/dlog[q] is calculated. Specifically, numerical differentiation is carried out using Igor Pro 8.0 (WaveMetrics Inc.) according to the definition of the following formula (5): [Mathematical Formula 5]

$$\frac{dlog[I(q_i)]}{dlog[q_i]} = \frac{log[I(q_{i+1})] - log[I(q_{i-1})]}{log[q_{i+1}] - log[q_{i-1}]} \quad (5)$$

For dlog[I(q)]/dlog[q] thus obtained, the minimum value at $0.025\ nm^{-1} \leq q \leq 0.075\ nm^{-1}$ is calculated, and the minimum differential coefficient value of the porous polyimide of the present disclosure is obtained as an index of the structural non-uniformity of the porous polyimide.

In the porous polyimide according to one aspect, the average pore diameter (L) determined by the following formula:

$$L = 4V/A$$

based on a pore volume (V) and a BET specific surface area (A) determined by a gas adsorption method is 5 nm or more and 500 nm or less. Such a pore diameter is an index representing a characteristic pore size of an aerogel. In one aspect, the average pore diameter (L) is 5 nm or more, or 6 nm or more, or 7 nm or more, or 8 nm or more, or 9 nm or more, or 10 nm or more, and in one aspect, it is 500 nm or less, or 300 nm or less, or 200 nm or less, or 100 nm or less, or 50 nm or less, or 30 nm or less, or 20 nm or less.

In one aspect, the bending elastic modulus in a three-point bending test of the porous polyimide is 100 MPa or more. The bending elastic modulus falling within the above range has the advantage of enabling the porous polyimide to exhibit excellent toughness useful for various applications of an aerogel. In one aspect, the bending elastic modulus is 100 MPa or more, or 150 MPa or more, or 200 MPa or more. The upper limit of the bending elastic modulus is not limited, but may be 1,000 MPa or less, from the viewpoint of ease of producing the porous polyimide, in one aspect.

In one aspect, the porous polyimide is composed of a polyimide main skeleton having an aromatic group in the molecular skeleton (also referred to as aromatic polyimide main skeleton in the present disclosure) and a crosslinked structure having an aromatic group in the molecular skeleton (also referred to as aromatic crosslinked structure in the present disclosure), and the bending elastic modulus in a three-point bending test is 50 MPa or more. When the porous polyimide is composed of an aromatic polyimide main skeleton and an aromatic crosslinked structure, the aromatic structure imparts the rigidity to the molecule. Thus, in this case, even though the bending elastic modulus is relatively low, the porous polyimide can exhibit excellent toughness useful for various applications of an aerogel. From the above viewpoint, in one aspect, when the porous polyimide is composed of an aromatic polyimide main skeleton and an aromatic crosslinked structure, the bending elastic modulus of the porous polyimide is 50 MPa or more, or 100 MPa or more, or 200 MPa or more, or 300 MPa or more, or 400 MPa or more. When the porous polyimide is composed of an aromatic polyimide main skeleton and an aromatic crosslinked structure, the upper limit of the bending elastic modulus of the porous polyimide is not limited, but may be 1,000 MPa or less, from the viewpoint of ease of producing the porous polyimide, in one aspect.

In one aspect, the bending strength in a three-point bending test porous polyimide is 5 MPa or more. The bending strength falling within the above range has the advantage of enabling the porous polyimide to exhibit excellent bending resistance useful for various applications of an aerogel. In one aspect, the bending strength is 5 MPa or more, or 10 MPa or more. The upper limit of the bending strength is not limited, but may be 100 MPa or less, or 50 MPa or

less, or 30 MPa or less, from the viewpoint of ease of producing the porous polyimide, in one aspect.

In one aspect, the bulk density of the porous polyimide is 0.05 g/cm$^3$ or more and 0.50 g/cm$^3$ or less. The bulk density falling within the above range means that the porous polyimide can have a characteristic pore size of an aerogel. In one aspect, the bulk density is 0.05 g/cm$^3$ or more, or 0.06 g/cm$^3$ or more, or 0.07 g/cm$^3$ or more, or 0.08 g/cm$^3$ or more, or 0.09 g/cm$^3$ or more, or 0.10 g/cm$^3$ or more, and in one aspect, it is 0.50 g/cm$^3$ or less, or 0.40 g/cm$^3$ or less, or 0.30 g/cm$^3$ or less.

< <Second Aspect>>

In the porous polyimide according to the second aspect, the average pore diameter (L) determined by the following formula:

$$L = 4V/A$$

based on a pore volume (V) and a BET specific surface area (A) determined by a gas adsorption method is 5 nm or more and 500 nm or less. Such a pore diameter is an index representing a characteristic pore size of an aerogel. In one aspect, the average pore diameter (L) is 5 nm or more, or 6 nm or more, or 7 nm or more, or 8 nm or more, or 9 nm or more, or 10 nm or more, and in one aspect, it is 500 nm or less, or 300 nm or less, or 200 nm or less, or 100 nm or less, or 50 nm or less, or 30 nm or less, or 20 nm or less.

In one aspect, the BET specific surface area of the porous polyimide is 10 m$^2$ /g or more and 2,000 m$^2$ /g or less. The BET specific surface area falling within the above range means that the porous polyimide has a pore structure suitable for an aerogel. In one aspect, the BET specific surface area is 10 m$^2$ /g or more, or 50 m$^2$ /g or more, or 100 m$^2$ /g or more, or 200 m$^2$ /g or more, or 300 m$^2$ /g or more, and in one aspect, it is 2,000 m$^2$/g or less, or 1,500 m$^2$/g or less, or 1,000 m$^2$ /g or less, or 800 m$^2$ /g or less.

In one aspect, the bending elastic modulus in a three-point bending test porous polyimide is 150 MPa or more. The bending elastic modulus falling within the above range has the advantage of enabling the porous polyimide to exhibit excellent toughness useful for various applications of an aerogel. In one aspect, the bending elastic modulus is 150 MPa or more, or 200 MPa or more, or 300 MPa or more, or 400 MPa or more. The upper limit of the bending elastic modulus is not limited, but may be 1,000 MPa or less, from the viewpoint of ease of producing the porous polyimide, in one aspect.

In one aspect, the porous polyimide is composed of a polyimide main skeleton having an aromatic group in the molecular skeleton (also referred to as aromatic polyimide main skeleton in the present disclosure) and a crosslinked structure having an aromatic group in the molecular skeleton (also referred to as aromatic crosslinked structure in the present disclosure), and the bending elastic modulus in a three-point bending test is 50 MPa or more. When the porous polyimide is composed of an aromatic polyimide main skeleton and an aromatic crosslinked structure, the aromatic structure imparts the rigidity to the molecule. Thus, in this case, even though the bending elastic modulus is relatively low, the porous polyimide can exhibit excellent toughness useful for various applications of an aerogel. From the above viewpoint, in one aspect, when the porous polyimide is composed of an aromatic polyimide main skeleton and an aromatic crosslinked structure, the bending elastic modulus of the porous polyimide is 50 MPa or more, or 100 MPa or more, or 200 MPa or more, or 300 MPa or more, or 400 MPa or more. When the porous polyimide is composed of an aromatic polyimide main skeleton and an aromatic crosslinked structure, the upper limit of the bending elastic modulus of the porous polyimide is not limited, but may be 1,000 MPa or less, from the viewpoint of ease of producing the porous polyimide, in one aspect.

In one aspect, the bending strength in a three-point bending test porous polyimide is 10 MPa or more. The bending strength falling within the above range means that the porous polyimide can have a characteristic pore size of an aerogel. In one aspect, the bending strength is 10 MPa or more, or 12 MPa or more, or 13 MPa or more, or 14 MPa or more, or 15 MPa or more. The upper limit of the bending strength is not limited, but may be 100 MPa or less, or 50 MPa or less, or 30 MPa or less, from the viewpoint of ease of producing the porous polyimide, in one aspect.

In one aspect, the bulk density of the porous polyimide is 0.05 g/cm$^3$ or more and 0.80 g/cm$^3$ or less. The bulk density falling within the above range means that the porous polyimide can have a characteristic pore size of an aerogel. In one aspect, the bulk density is 0.05 g/cm$^3$ or more, or 0.06 g/cm$^3$ or more, or 0.07 g/cm$^3$ or more, or 0.08 g/cm$^3$ or more, or 0.09 g/cm$^3$ or more, or 0.10 g/cm$^3$ or more, and in one aspect, it is 0.80 g/cm$^3$ or less, or 0.70 g/cm$^3$ or less, or 0.60 g/cm$^3$ or less, or 0.50 g/cm$^3$ or less, or 0.40 g/cm$^3$ or less.

< <Third Aspect> >

In the porous polyimide according to the second aspect, the average pore diameter (L) determined by the following formula:

$$L = 4V/A$$

based on a pore volume (V) and a BET specific surface area (A) determined by a gas adsorption method is 5 nm or more and 500 nm or less. Such a pore diameter is an index representing a characteristic pore size of an aerogel. In one aspect, the average pore diameter (L) is 5 nm or more, or 6 nm or more, or 7 nm or more, or 8 nm or more, or 9 nm or more, or 10 nm or more, and in one aspect, it is 500 nm or less, or 300 nm or less, or 200 nm or less, or 100 nm or less, or 50 nm or less, or 30 nm or less, or 20 nm or less.

In one aspect, the BET specific surface area of the porous polyimide is 10 $m^2$ /g or more and 2,000 $m^2$ /g or less. The BET specific surface area falling within the above range means that the porous polyimide has a pore structure suitable for an aerogel. In one aspect, the BET specific surface area is 10 $m^2$ /g or more, or 50 $m^2$ /g or more, or 100 $m^2$ /g or more, or 200 $m^2$ /g or more, or 300 $m^2$ /g or more, and in one aspect, it is 2,000 $m^2$ /g or less, or 1,500 $m^2$/g or less, or 1,000 $m^2$ /g or less, or 800 $m^2$ /g or less.

In one aspect, the BET specific surface area after heat treatment at 300°C for 1 hour of the porous polyimide is 10 $m^2$ /g or more and 2,000 $m^2$ /g or less. The BET specific surface area falling within the above range means that the porous polyimide maintains a pore structure after heat treatment In one aspect, the BET specific surface area is 10 $m^2$ /g or more, or 50 $m^2$ /g or more, or 100 $m^2$ /g or more, or 200 $m^2$ /g or more, or 300 $m^2$ /g or more, and in one aspect, it is 2,000 $m^2$ /g or less, or 1,500 $m^2$ /g or less, or 1,000 $m^2$ /g or less, or 800 $m^2$ /g or less.

In one aspect, the bulk density of the porous polyimide is 0.05 g/$cm^3$ or more and 0.80 g/$cm^3$ or less. The bulk density falling within the above range means that the porous polyimide has a pore structure suitable for an aerogel. In one aspect, the bulk density is 0.05 g/$cm^3$ or more, or 0.06 g/$cm^3$ or more, or 0.07 g/$cm^3$ or more, or 0.08 g/$cm^3$ or more, or 0.09 g/$cm^3$ or more, or 0.10 g/$cm^3$ or more, and in one aspect, it is 0.80 g/$cm^3$ or less, or 0.70 g/$cm^3$ or less, or 0.60 g/$cm^3$ or less, or 0.50 g/$cm^3$ or less, or 0.40 g/$cm^3$ or less.

The bulk density after heat treatment at 300°C for 1 hour of the porous polyimide is preferably in the same numerical range as the above-mentioned bulk density in that the porous polyimide maintains a pore structure well even after heat treatment. That is, in one aspect, the bulk density after heat treatment at 300°C for 1 hour is 0.05 g/$cm^3$ or more, or 0.06 g/$cm^3$ or more, or 0.07 g/$cm^3$ or more, or 0.08 g/$cm^3$ or more, or 0.09 g/$cm^3$ or more, or 0.10 g/$cm^3$ or more, and in one aspect, it is 0.80 g/$cm^3$ or less, or 0.70 g/$cm^3$ or less, or 0.60 g/$cm^3$ or less, or 0.50 g/$cm^3$ or less, or 0.40 g/$cm^3$ or less.

<<Structure of Porous Polyimide of First to Third Aspects>>

Preferred examples of structures of porous polyimides according to first to third aspects will be described below. Note that the structure described below is common to the first to third aspects unless otherwise specified.

In the first to third aspects, the porous polyimide has a sheet shape in one aspect. The thickness of the sheet is not limited, but in one aspect, the average thickness may be 10 mm or less, or 8 mm or less, or 5 mm or less, or 3 mm or less, or 1 mm or less, or 500 μm or less, or 400 μm or less, or 300 μm or less, and in one aspect, it may be 0.1 μm or more. The porous polyimide, which has a sheet shape, particularly a sheet shape having an average thickness of 10 mm or less, can be applied as an aerogel sheet to various applications, for example, thermal insulating materials, low-dielectric materials, filter materials and the like.

Examples of the procedure for control of the average pore size (D), average pore diameter (L), minimum differential coefficient value, BET specific surface area and bulk density of the present disclosure within the scope of the present embodiment can include, but are not limited to:

(1) controlling the molecular structure of the polyimide, and/or
(2) performing gelation before imidization, in production of the polyimide.

<Molecular Structure of Polyimide>

The polyimide constituting the porous polyimide of the first to third aspects is, in one aspect, a crosslinked polyimide having a polyimide main skeleton and a crosslinked structure that crosslinks the polyimide main skeleton.

In one aspect, the polyimide includes a polymerization component containing a tetracarboxylic dianhydride, a diamine, and a tri- or higher-functional amine, or a polymerization product thereof. The ratio of the tri- or higher-functional amine based on 100% by mass in total of the tetracarboxylic dianhydride, the diamine and the tri- or higher-functional amine is preferably 1% by mass or more or 1.5% by mass or more, from the viewpoint that the crosslinking density of the polyimide is in a proper range to obtain a desired pore structure of the porous polyimide, and is preferably 40% by mass or less, or 35% by mass or less, or 30% by mass or less, from the same viewpoint.

Each of the polyimide main skeleton and the crosslinked structure may have an aliphatic structure or an aromatic

structure, or a combination thereof.

The polyimide according to the first and second aspects preferably has an aromatic structure in the molecular skeleton.

The polyimide according to the third aspect preferably has no aliphatic carbon atoms in the molecular skeleton (i.e., in the main chain).

[Carbonyl Carbon Ratio]

In polyimide, a large ratio of carbonyl carbons to the number of carbon atoms in the molecule is an index of a high ratio of imide rings. When the ratio of imide rings is high, the interaction between atoms in the molecular skeleton is large, so that the toughness of the porous polyimide tends to be high in the first and second aspects, and the heat resistance tends to be high in the third aspect. The ratio of carbonyl carbons to the total number of carbon atoms in the polyimide molecule (also referred to as carbonyl carbon ratio in this disclosure) is preferably 13.5% or more, or 14% or more, or 15% or more, or 16% or more, or 17% or more, or 18% or more, or 19% or more, or 20% or more, and is preferably 40% or less, or 35% or less, or 30% or less. In particular, when the molecular skeleton of the polyimide contains aliphatic carbon atoms, the carbonyl carbon ratio is preferably 18% or more, or 19% or more. The carbonyl carbon ratio is determined from the ratio of the sum of the integral values of peaks attributed to carbon atoms of the polyimide molecular skeleton and the integral value of peaks attributed to carbonyl carbon using $^{13}C$ NMR (nuclear magnetic resonance spectrometry).

[Polyimide Main Skeleton]

The polyimide main skeleton may have an aliphatic structure, an aromatic structure, or a combination thereof.

The polyimide according to the third aspect preferably has no aliphatic carbon atom in the molecular skeleton. Aliphatic carbon atoms in the molecular skeleton tend to cause deterioration the inherent rigidity of polyimide molecules. Therefore, from the viewpoint of suppressing the deformation of the pore structure during heat treatment of the porous polyimide, it is preferable that no aliphatic carbon atoms are present in the molecular skeleton. Furthermore, since aliphatic carbon atoms present in sites other than the molecular skeleton (i.e., as substituents) do not cause the problem of deterioration of the rigidity of the polyimide, even if aliphatic carbon atoms are present in sites other than the molecular skeleton, there is no inconvenience.

In one aspect, the polyimide has a polyimide main skeleton represented by the following general formula (1):

[Chemical Formula 5]

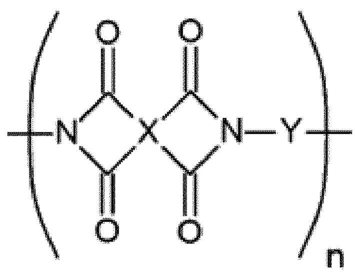

(1)

wherein X is a tetravalent organic group, Y is a divalent organic group and n is a positive integer. In the present disclosure, the organic group means a group having 1 or more carbon atoms. In one aspect, n is a degree of polymerization the polyamide main skeleton.

In one aspect, the polyimide main skeleton is produced by polymerizing a tetracarboxylic dianhydride represented by the following general formula (2):

[Chemical Formula 6]

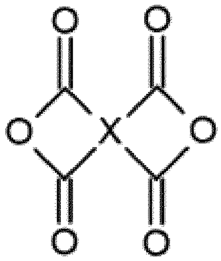 (2)

wherein X is a tetravalent organic group, with a diamine represented by the following general formula (3):

$H_2N-Y-NH_2$ (3)

wherein Y is a divalent organic group. In a preferred aspect, X is a tetravalent group derived from an optionally substituted monocyclic or polycyclic aromatic ring (i.e., obtained by removing four hydrogen atoms from such a ring), or a tetravalent group derived from a linked aromatic ring in which a plurality of optionally substituted aromatic rings are linked to each other by direct binding or by binding via a hetero atom (i.e., obtained by removing four hydrogen atoms from such a ring), and/or Y is a divalent group derived from an optionally substituted monocyclic or polycyclic aromatic ring (i.e., obtained by removing two hydrogen atoms from such a ring), or a divalent group derived from a linked aromatic ring in which a plurality of optionally substituted aromatic rings are linked to each other by direct binding or by binding via a hetero atom (i.e., obtained by removing two hydrogen atoms from such a ring). In this case, since the polyimide main skeleton has a rigid structure, highly tough porous polyimide can be obtained in the first and second aspects, and in the third aspect, the deformation of the pore structure during heat treatment of the porous polyimide can be suppressed.

(Tetracarboxylic Dianhydride)

In one aspect, X in the above general formula (2) contains a substituted or unsubstituted aliphatic group or aromatic group, or a combination thereof. The aliphatic group may be a linear or cyclic, branched or non-branched, saturated or unsaturated aliphatic group. The aromatic group may be composed of a carbocyclic ring and/or a heterocyclic ring (a hetero ring). The number of carbon atoms of X may be preferably 6 or more, or 8 or more, or 10 or more, and may be preferably 50 or less, or 36 or less, or 18 or less, or 12 or less. In the first and second aspects, from the viewpoint of obtaining a porous polyimide with excellent toughness, or in the third aspect, from the viewpoint of obtaining a porous polyimide with excellent heat resistance, at least a part of the molecular skeleton of the tetracarboxylic dianhydride is preferably composed of an aromatic group.

Examples of the tetracarboxylic dianhydride having an aromatic group include 4,4'-(hexafluoroisopropylidene)diphthalic anhydride (6FDA), 5-(2,5-dioxotetrahydro-3-furanyl)-3-methyl-cyclohexene-1,2-dicarboxylic anhydride, pyromellitic dianhydride (PMDA), 1,2,3,4-benzenetetracarboxylic dianhydride, 3,3',4,4'-benzophenonetetracarboxylic dianhydride (BTDA), 2,2',3,3'-benzophenonetetracarboxylic dianhydride, 3,3',4,4'-biphenyltetracarboxylic dianhydride (BPDA), 3,3',4,4'-diphenylsulfonetetracarboxylic dianhydride (DSDA), 2,2',3,3'-biphenyltetracarboxylic dianhydride, methylene-4,4'-diphthalic dianhydride, 1,1-ethylidene-4,4'-diphthalic dianhydride, 2,2-propylidene-4,4'-diphthalic dianhydride, 1,2-ethylene-4,4'-diphthalic dianhydride, 1,3-trimethylene-4,4'-diphthalic dianhydride, 1,4-tetramethylene-4,4'-diphthalic dianhydride, 1,5-pentamethylene-4,4'-diphthalic dianhydride, 4,4'-oxydiphthalic dianhydride (ODPA), thio-4,4'-diphthalic dianhydride, sulfonyl-4,4'-diphthalic dianhydride, 1,3-bis(3,4-dicarboxyphenyl)benzene dianhydride, 1,3-bis(3,4-dicarboxyphenoxy)benzene dianhydride, 1,4-bis(3,4-dicarboxyphenoxy)benzene dianhydride, 1,3-bis[2-(3,4-dicarboxyphenyl)-2-propyl]benzene dianhydride, 1,4-bis[2-(3,4-dicarboxyphenyl)-2-propyl]benzene dianhydride, bis[3-(3,4-dicarboxyphenoxy)phenyl]methane dianhydride, bis[4-(3,4-dicarboxyphenoxy)phenyl]methane dianhydride, 2,2-bis[3-(3,4-dicarboxyphenoxy)phenyl]propane dianhydride, 2,2-bis[4-(3,4-dicarboxyphenoxy)phenyl]propane dianhydride (BPADA), bis(3,4-dicarboxyphenoxy)dimethylsilane dianhydride, 1,3-bis(3,4-dicarboxyphenyl)-1,1,3,3-tetramethyldisiloxane dianhydride, 2,3,6,7-naphthalenetetracarboxylic dianhydride, 1,4,5,8-naphthalenetetracarboxylic dianhydride, 1,2,5,6-naphthalenetetracarboxylic dianhydride, 3,4,9,10-perylenetetracarboxylic dianhydride, 2,3,6,7-anthracenetetracarboxylic dianhydride, 1,2,7,8-phenanthrenetetracarboxylic dianhydride and the like.

In one aspect, X is a tetravalent group obtained by removing four hydrogen atoms from an optionally substituted monocyclic or polycyclic aromatic ring (also referred to as a simple aromatic group in this disclosure), or a tetravalent group obtained by removing four hydrogen atoms from a linked aromatic ring in which a plurality of optionally substituted aromatic rings are linked to each other by direct binding or by binding via a hetero atom (also referred to as bent skeleton-containing group in the present disclosure). Examples of the substituent include groups having an aliphatic or aromatic

group, or combinations thereof. The number of carbon atoms of the substituent is preferably 4 or less. In another aspect, X is a group having a freely rotatable structure (an aliphatic carbon atom in one aspect) in the molecular skeleton (also referred to as freely rotatable group in the present disclosure).

The fact that X is a simple aromatic group is advantageous in terms of obtaining a porous polyimide with high toughness in the first and second aspects, and is advantageous in terms of obtaining a porous polyimide with excellent heat resistance enabling the desired pore structure to be kept satisfactorily even after heat treatment. The simple aromatic group X is preferably a tetrayl group obtained by removing four hydrogen atoms from a benzene ring or a fused ring thereof, that is, an arenetetrayl group. The fused ring may be a naphthalene ring, anthracene or the like. As the acid dianhydride in which X is a simple aromatic group, pyromellitic dianhydride (PMDA), 1,4,5,8-naphthalenetetracarboxylic dianhydride (NTCDA), and 2,3,6,7-naphthalenetetracarboxylic dianhydride and the like are preferable, and pyromellitic dianhydride (PMDA) is particularly preferable.

When X is a bent skeleton-containing group, in the first and second aspects, from the viewpoint of obtaining a porous polyimide with high toughness, in the third aspect, from the viewpoint of obtaining a porous polyimide with excellent heat resistance enabling the desired pore structure to be kept satisfactorily even when subjected to heat treatment, X is preferably a tetravalent group obtained by removing four hydrogen atoms from a compound in which two benzene rings are linked to each other by direct binding or by binding via a hetero atom, such as biphenyl, benzophenone or diphenyl ether.

Examples of the acid anhydride in which X is a group derived from biphenyl include 3,3',4,4'-biphenyltetracarboxylic dianhydride (BPDA), 2,3,3',4'-biphenyltetracarboxylic dianhydride ($\alpha$-BPDA),

examples of the acid anhydride in which X is a group derived from benzophenone include 3,3',4,4'-benzophenonetetracarboxylic dianhydride (BTDA),
examples of the acid anhydride in which X is a group derived from diphenyl ether include 4,4'-oxydiphthalic dianhydride (ODPA), 3,3',4,4'-biphenyl ether tetracarboxylic dianhydride, 2,3,3',4'-biphenyl ether tetracarboxylic dianhydride, and
examples of the acid anhydride in which X is a group derived from diphenylsulfone include 3,3',4,4'-biphenylsulfonetetracarboxylic dianhydride (DSDA), respectively.

In the first and second aspects, when X is a freely rotatable group, X is a tetravalent group obtained by removing four hydrogen atoms from an aromatic compound in which aromatic rings (particularly, benzene rings) are single-bonded via an aliphatic carbon atom (via a substituted or unsubstituted aliphatic hydrocarbon group in one aspect) in one aspect.

In the third aspect, when X is a freely rotatable group, the porous polyimide tends to be easily deformed during heat treatment. Therefore, in the polyimide in case where an acid dianhydride having a freely rotatable group is used, it is desirable to suppress the deformation during heat treatment by increasing the proportion of carbonyl carbons (i.e., increasing the proportion of imide rings), and more specifically, adjusting the proportion of carbonyl carbons to 18% or more.

Examples of the acid dianhydride in case where X is a freely rotatable group include 2,2'-bis(3,4-dicarboxyphenyl)hexafluoropropanoic dianhydride and 2,2'-bis(3,4-dicarboxyphenyl)propanoic dianhydride.

In the first and second aspects, from the viewpoint of obtaining a porous polyimide with excellent toughness, an in the third aspect, from the viewpoint of obtaining a porous polyimide with excellent heat resistance, X is preferably a simple aromatic group or a bent skeleton-containing group, and more preferably a simple aromatic group.

(Diamine)

In one aspect, Y in the above general formula (3) contains a substituted or unsubstituted aliphatic group, an aromatic group, or a combination thereof. The aliphatic group may be linear or cyclic, branched or unbranched, saturated or unsaturated. The aromatic group may be composed of a carbocyclic ring and/or a heterocyclic ring (a hetero ring). It is preferable that at least a part of the molecular skeleton of the diamine is composed of an aromatic group. The number of carbon atoms of Y is preferably 6 to 24, more preferably 6 to 18, and still more preferably 6 to 12.

The molecular skeleton of the diamine in the third aspect preferably has no aliphatic carbon atom.

Examples of the diamine include 4,4-(diaminodiphenyl)sulfone (4,4-DAS), 3,4-(diaminodiphenyl)sulfone, 3,3-(diaminodiphenyl)sulfone (3,3-DAS), 2,2'-bis(trifluoromethyl)benzidine (TFMB), 2,2'-dimethyl-4,4'-diaminobiphenyl (DMBZ), 1,4-diaminobenzene (PPDA), 1,3-diaminobenzene (MPDA), 4-aminophenyl-4'-aminobenzoate (APAB), 4,4'-diaminobenzoate (DABA), 4,4'-(or 3,4'-, 3,3'-, 2,4'-)diaminodiphenyl ether, 4,4'-(or 3,3'-)diaminodiphenylsulfone, 4,4'-(or 3,3'-)diaminodiphenyl sulfide, 4,4'-benzophenonediamine, 3,3'-benzophenonediamine, 4,4'-di(4-aminophenoxy)phenylsulfone, 4,4'-di(3-aminophenoxy)phenylsulfone, 4,4'-bis(4-aminophenoxy)biphenyl, 1,4-bis(4-aminophenoxy)benzene, 1,3-bis(4-aminophenoxy)benzene, 2,2-bis{4-(4-aminophenoxy)phenyl}propane, 4,4'-diaminodiphenylmethane (4,4'-DADPM), 3,3',5,5'-tetramethyl-4,4'-diaminodiphenylmethane, 2,2'-bis(4-aminophenyl)propane, 2,2',6,6'-tetramethyl-4,4'-diaminobiphenyl, 2,2',6,6'-tetratrifluoromethyl-4,4'-diaminobiphenyl, bis{(4-aminophenyl)-2-propyl} 1,4-benzene, 9,9-bis(4-aminophenyl)fluorene, 9,9-bis(4-aminophenoxyphenyl)fluorene, 3,3'-dimethylbenzidine, 3,3'-dimethoxybenzidine and 3,5-diaminobenzoic acid, 2,6-diaminopyridine, 2,4-diaminopyridine, bis(4-aminophenyl-2-propyl)-1,4-benzene, 3,3'-bis(trifluoromethyl)-4,4'-diaminobiphenyl (3,3'-TFDB), 2,2'-bis[3(3-aminophenoxy)phenyl]hexafluoropropane (3-BDAF), 2,2'-bis[4(4-aminophenoxy)phenyl]hexafluoropropane (4-BDAF), 2,2'-bis(3-aminophenyl)hexafluoropropane (3,3'-6F), 2,2'-bis(4-aminophenyl)hexafluoropropane (4,4'-6F), 1,5-diaminonaphthalene (1,5-DAN) and the like.

In one aspect, Y is a divalent group derived from an optionally substituted monocyclic or polycyclic aromatic ring (i.e., obtained by removing two hydrogen atoms from such a ring), or a divalent group derived from a linked aromatic ring in which a plurality of optionally substituted aromatic rings are linked to each other by direct binding or by binding via a hetero atom (i.e., obtained by removing two hydrogen atoms from such a ring). More specifically, examples of Y include a divalent group obtained by removing two hydrogen atoms from an optionally substituted monocyclic or polycyclic aromatic ring, or a plurality of optionally substituted aromatic rings bound directly (e.g., biphenyl) (also referred to as wholly aromatic group in the present disclosure), a divalent group obtained by removing two hydrogen atoms from a plurality of optionally substituted aromatic rings that are bound to each other via a hetero atom (e.g., benzophenone, diphenyl ether, diphenyl sulfone, benzanilide, etc.) (also referred to as hetero skeleton-containing group in the present disclosure), and a divalent group having an aliphatic carbon atom in the molecular framework (also referred to as aliphatic skeleton-containing group in the present disclosure). Examples of the substituent include groups having an aliphatic or aromatic group, or a combination thereof. The number of carbon atoms in the substituent is preferably 4 or less.

The aromatic ring constituting the wholly aromatic ring may be a carbocyclic ring or a heterocyclic ring, or a combination thereof. Examples of the diamine in which Y is a wholly aromatic group include p-phenylenediamine (PPDA), m-phenylenediamine (MPDA), 2,4-diaminotoluene, 2,5-diaminotoluene, 2,4-diaminoxylene, 2,5-diaminoxylene (2,5-dimethyl-p-phenylenediamine (DMPDA)), 2,5-dihydroxy-1,4-phenylenediamine, 2,4,6-trimethyl-1,3-phenylenediamine, 1,5-diaminonaphthalene (1,5-DAN), 3,6-diaminodurene (2,3,5,6-tetramethyl-p-phenylenediamine (TMPDA)), benzidine, 2,2'-dimethylbenzidine (DMBZ), 3,3'-dimethylbenzidine, 2,2'-bis(trifluoromethyl)benzidine (TFMB), 3,3'-dihydroxy-4,4'-diaminobiphenyl, and 3,3'-dimethoxy-4,4'-diaminobiphenyl, 5-amino-2-(4-aminophenyl)-benzoimidazole (ABI), of which, preferred are one or more selected from the group consisting of p-phenylenediamine (PPDA), m-phenylenediamine (MPDA), 2,5-diaminotoluene, 2,5-dimethyl-p-phenylenediamine (DMPDA), 2,3,5,6-tetramethyl-p-phenylenediamine (TMPDA), 1,5-diaminonaphthalene (1,5-DAN), benzidine, 2,2'-dimethylbenzidine (DMBZ), 3,3'-dimethylbenzidine and 2,2'-bis(trifluoromethyl)benzidine (TFMB).

Examples of the diamine in which Y is a hetero skeleton-containing group include 3,3'-diaminodiphenylsulfone (3DAS), 4,4'-diaminodiphenylsulfone (4DAS), 4,4'-diaminobenzophenone (4,4'-DABP), 3,3'-diaminobenzophenone (3,3'-DABP), 4,4'-diaminobenzanilide (DABA), 4,4'-oxydianiline (ODA) and the like.

Examples of the diamine in which Y is an aliphatic skeleton-containing group include 9,9-bis(4-aminophenyl)fluorene, 9,9-bis(4-aminophenoxyphenyl)fluorene, N,N-dimethyl-1,3-propanediamine, 2,2-bis(4-aminophenyl)hexafluoropropane (6FDA), hexamethylenediamine, 4,4'-diaminodiphenylmethane (4,4'-DADPM), 1,4-bis(4-aminophenoxy)butane (BAP4), 1,3-bis(4-aminophenoxy)-2,2-dimethylpropane (BAPN) and the like.

In the first and second aspects, from the viewpoint of obtaining a porous polyimide with excellent toughness, and in the third aspect, from the viewpoint of obtaining a porous polyimide with excellent heat resistance, Y is preferably a wholly aromatic group or a hetero skeleton-containing group, and more preferably a wholly aromatic group.

In imidization, an isoimide skeleton is sometimes by-produced in addition to an imide skeleton. In the polyimide main skeleton of the present disclosure, it is desirable that the ratio of the isoimide skeleton to the imide skeleton is as small as possible. As shown in the following general formulas (α) and (β):

[Chemical Formula 7]

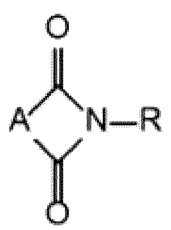
(α)

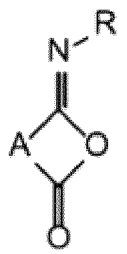
(β)

wherein A is a structure that imparts X of the present disclosure, and R is a structure that imparts Y of the present disclosure, the isoimide skeleton (the above general formula (β)) is generally considered to be more unstable than the imide skeleton (the above general formula (α)), and has a bent (i.e., the A structure and the R structure are not on a

straight line). When the polyimide main skeleton in the porous polyimide contains a large amount of an isoimide skeleton, shrinkage or deformation tends to occur during imidization and drying, and the heat resistance of the porous polyimide tends to be poor. It is known that the isoimide skeleton is produced when acetic anhydride-pyridine, which is a typical dehydration imidization reagent, is reacted with amide acid, however, it is known that when acetic anhydride-triethylamine is reacted, the skeleton is no longer produced and only the imide skeleton is rapidly produced (see, for example, Latest Polyimides: "Fundamentals and Applications", written by Yoshio Imai and Rikio Yokota, edited by Japan Polyimide Study Group, 2002, published by NTS Inc. and R. J. Angelo et al., "Recent Advances in Polyimide Science and Technology", W. D. Weber and M. R. Gupta eds., (1987), pp.67-91. Soc. Plast. Eng., New York). The ratio of the isoimide skeleton to the imide skeleton in the polyimide main skeleton of the present disclosure can be measured by infrared spectroscopy (see, for example, NPL 2 of the present disclosure). In one aspect, the ratio of the isoimide skeleton based on 100% by mass in total of the imide skeleton and the isoimide skeleton in the imide main skeleton is preferably 10 mol% or less.

[Crosslinked Structure]

The crosslinked structure is a tri- or higher-functional structure, and is, in one aspect, derived from a tri- or higher-functional crosslinking agent. The functional group of the crosslinking agent is a group having the reactivity with an acid anhydride group or amino group as a terminal group of polyamide acid. Thus, the crosslinking agent has a function to form a polyamide acid gel by crosslinking of polyamide acids. The crosslinking agent is typically a tri- or higher-functional carboxylic acid or amine, more typically a tri- or higher-functional amine.

In the first aspect, the crosslinked structure is a structure by a tri- or higher-valent group derived from an optionally substituted monocyclic or polycyclic aromatic ring, or a tri- or higher-valent group derived from a linked aromatic ring in which a plurality of optionally substituted aromatic rings are linked to each other by direct binding or by binding via a hetero atom.

In one aspect, the crosslinking agent is a compound represented by the following general formula (4):

$$Z\text{-}(R)_a \qquad (4)$$

wherein Z is an a-valent organic group, R each independently an amino group or a carboxy group, and a is an integer of 3 or more.

In one aspect, Z in the general formula (4) contains a substituted or unsubstituted aliphatic group or aromatic group, or a combination thereof. In the first aspect, Z preferably has an aromatic group. The aliphatic group may be a linear or cyclic, branched or non-branched, saturated or unsaturated aliphatic group. The aromatic group may be composed of a carbocyclic ring and/or a heterocyclic ring (a hetero ring).

The number of carbon atoms of Z is preferably 6 to 24, more preferably 6 to 18, and still more preferably 6 to 12.

In one aspect, all R(s) are amino groups or carboxy groups, and preferably amino groups.

In one aspect, a is 3 or 4, and preferably 3.

In one aspect, Z is a tri- or higher-valent group derived from an optionally substituted monocyclic or polycyclic aromatic ring (i.e., obtained by removing three or more hydrogen atoms from such a ring), or a tri- or higher-valent group derived from a linked aromatic ring in which a plurality of optionally substituted aromatic rings are linked to each other by direct binding or by binding via a hetero atom (i.e., obtained by removing three or more hydrogen atoms from such a ring). More specifically, examples of Z include a tri- or higher-valent group obtained by removing three or more from an optionally substituted monocyclic or polycyclic aromatic ring, or a plurality of optionally substituted aromatic rings bound directly (e.g., biphenyl) (also referred to as wholly aromatic group in the present disclosure), a tri- or higher-valent group obtained by removing three or more hydrogen atoms from a plurality of optionally substituted aromatic rings that are bound to each other via a hetero atom (e.g., benzophenone, diphenyl ether, diphenyl sulfone, benzanilide, etc.) (also referred to as hetero skeleton-containing group in the present disclosure), and a tri- or higher-valent group having an aliphatic carbon atom in the molecular framework (also referred to as aliphatic skeleton-containing group in the present disclosure). Note that the molecular backbone of the crosslinking agent means a site that is involved in mutual bonding of three or more functional groups present in the crosslinking agent. Examples of the substituent include groups having an aliphatic or aromatic group, or a combination thereof. The number of carbon atoms in the substituent is preferably 4 or less.

Examples of the crosslinking agent in which Z is a wholly aromatic group include 1,3,5-tris(4-aminophenyl)benzene (TAB), 2,4,6-tris(4-aminophenyl)pyridine (TAPP), 1,3,5-benzenetricarbonyltri chloride (BTC) and the like.

Examples of the crosslinking agent in which Z is a hetero skeleton-containing group include 1,3,5-tris(4-aminophenoxy)benzene (TAPB) and the like.

Examples of the crosslinking agent in which Z is an aliphatic skeleton-containing group include 4,4',4"-(methanetriyl)trisaniline, 4,4',4",4'''-methanetetrayltetraaniline and the like.

In the first and second aspects, from the viewpoint of obtaining a porous polyimide with excellent toughness,

and in the third aspect, from the viewpoint of obtaining a porous polyimide with excellent heat resistance, Z is preferably a wholly aromatic group or a hetero skeleton-containing group, and more preferably a wholly aromatic group.

In one aspect, the polyimide has a structure represented by the following general formula (5):

[Chemical Formula 8]

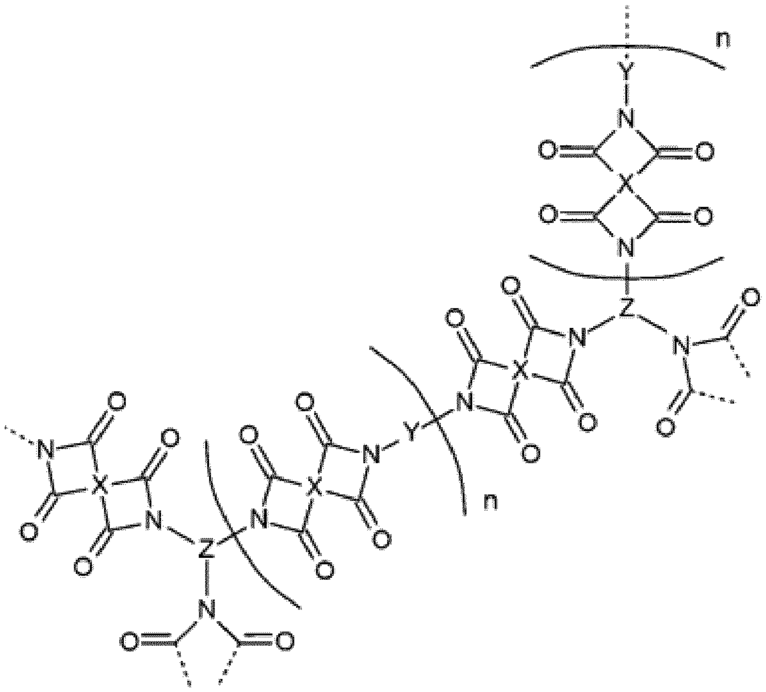

(5)

wherein X, Y and Z are respectively the same as defined as for X in the general formula (2), Y in the general formula (3) and Z in the general formula (4), and n is a positive integer.

n means a degree of polymerization of the main skeleton of the polyimide, and is preferably 5 or more, more preferably 6 or more, and still more preferably 7 or more. When n is 5 or more, and particularly 7 or more, the time required from adding the crosslinking agent to the polymer precursor solution to gelation tends to impart the time sufficient to form a desired shape from casting of the solution. The degree of polymerization n is preferably 30 or less, more preferably 25 or less, and still more preferably 20 or less. When n is 30 or less, and particularly 20 or less, there is a tendency to impart a polyimide wet gel with excellent physical strength and handling.

From the viewpoint of the toughness of the porous polyimide (for the first and second aspects) or the heat resistance (for the third aspect), examples of preferred combination of the structures of X, Y and Z include a combination in which X is a simple aromatic group, and Y and Z are respectively wholly aromatic groups or hetero skeleton groups; and a combination in which X is a simple aromatic group or a bent skeleton-containing group, and Y and Z are wholly aromatic groups. In particularly preferred one aspect of the first aspect, the polyimide main skeleton has an end derived from pyromellitic dianhydride (PMDA), and the crosslinked structure is derived from a tri- or higher-functional amine.

In preferred one aspect, the polyimide contains a polymerization product of a polymer component containing a tetracarboxylic dianhydride and a diamine, and pyromellitic anhydride accounts for 50 mol% or more, or 75 mol% or more, or 90 mol% or more, or 100 mol% or more of the tetracarboxylic dianhydride, and the end of the polyimide has an anhydride structure derived from pyromellitic anhydride. The pyromellitic anhydride has excellent reactivity with a crosslinking agent and therefore contributes to quick gelation and high physical strength of the gel.

<<Production of Porous Polyimide>>

In one aspect, the porous polyimide of the present disclosure can be produced by a method including:

a polymerization step of polymerizing the acid dianhydride of the present disclosure and the diamine in the present disclosure to obtain a polyamide acid,

a gelation step of crosslinking the polyamide acid by the crosslinking agent of the present disclosure to obtain a polyamide acid wet gel,

an imidization step of imidizing the polyamide acid wet gel to obtain a polyimide wet gel, and,

a drying step of drying the polyimide wet gel to obtain a polyimide aerogel.

A polyimide gel has been conventionally produced generally by a method including imidizing polyamide acid to obtain polyimide and gelling the polyimide. Such a method, because of causing easy aggregation of the polyimide during gelation, has a restriction on material selection, which requires selection of a polyimide having a molecular structure hardly leading to aggregation in order to stably obtain a polyimide aerogel having a desired pore structure. In particular, if a molecular backbone of polyimide has high rigidity, polyimide aggregation easily occurs during gelation after imidization and a polyimide having a desired pore structure is difficult to produce. Furthermore, in the first and second aspects, the polyimide gel obtained by gelation after imidization tends to have poor toughness, and therefore cannot be said to be useful for various desired uses of an aerogel. In the third aspect, a polyimide gel obtained by gelation after imidization is poor in shape retainability during heating and tends to be remarkably deformed particularly under severe heating conditions as in carbonization, and thus is often unsuitable for production of porous carbon.
Meanwhile, a method including subjecting polyamide acid to gelation and then imidization achieves the advantage of being capable of stably forming a desired pore structure without any restriction on a molecular structure of polyimide, by appropriate adjustment of gelation conditions. In particular, such a method can stably produce a polyimide aerogel having a desired pore structure even when rigidity of a molecular backbone of polyimide is high, and thus the benefit according to the method is particularly remarkably achieved when rigidity of a molecular backbone of polyimide is high polyimide. From such point of view, the method of imidizing polyamide acid after gelation is particularly advantageous when employing a combination in which, in the polyimide constituting the porous polyimide, X in the general formula (2) of the present disclosure is a simple aromatic group, and Y in the general formula (3) and Z in the general formula (4) are respectively wholly aromatic groups or hetero skeleton groups, and a combination in which X is a simple aromatic group or a bent skeleton-containing group, and Y and Z are wholly aromatic groups.

<Polymerization Step>

In the present step, the acid dianhydride and the diamine are polymerized in a polymerization solvent to obtain a polyamide acid. A solvent having the ability to dissolve the polyamide acid can be used as the polymerization solvent, and examples of the solvent include amide-based solvents, ether-based solvents, ester-based solvents, ketone-based solvents, phenol-based solvents, sulfone-based solvents, and sulfoxide-based solvents.
Examples of the amide-based solvent include N-methyl-2-pyrrolidone (NMP), N,N-dimethylformamide (DMF), and N,N-dimethylacetamide (DMAc).
Examples of the ester-based solvent include cyclic esters (e.g., lactones such as γ-butyrolactone (GBL), δ-valerolactone, ε-caprolactone, γ-crotonolactone, γ-hexanolactone, α-methyl-γ-butyrolactone, γ-valerolactone, α-acetyl-γ-butyrolactone, and δ-hexanolactone), methyl acetate, ethyl acetate, butyl acetate, and dimethyl carbonate.
Examples of the ketone-based solvent include acetone, methyl ethyl ketone, methyl isobutyl ketone, cyclohexanone, and cyclopentanone.
Examples of the phenol-based solvent include m-cresol and the like.
Examples of the sulfone-based solvent include methylsulfone, ethylphenylsulfone, diethylsulfone, diphenylsulfone, bisphenol S, solapsone, Dapsone, bisphenol A polysulfone, and sulfolane.
Examples of the sulfoxide-based solvent include dimethylsulfoxide (DMSO) and the like.
The boiling point of the solvent may be preferably 80°C or higher, or 100°C or higher, or 120°C or higher. Such a solvent having a high boiling point can decrease the rate of polymerization of the polyamide acid and the rate of gelation of the polyamide acid or polyimide, as compared with the rate of volatilization of the solvent, and thus can allow for, for example, polymerization and/or gelation around room temperature and is preferable in terms of process management. Such a high-boiling point solvent is preferably an amide-based solvent, more preferably at least one selected from the group consisting of N-methyl-2-pyrrolidone (NMP, boiling point 202°C), N,N-dimethylformamide (DMF, boiling point 153°C) and N,N-dimethylacetamide (DMAc, boiling point 165°C), and particularly preferably N-methyl-2-pyrrolidone (NMP).
In one aspect, the polymerization temperature may be 10°C or higher and may be 80°C or lower, or 60°C or lower, or 40°C or lower. In a preferred aspect, the temperature may be kept throughout the polymerization step without cooling or heating of the polymerization solvent (i.e., under an ambient environment).

< Gelation Step>

In the present step, the crosslinking agent in the present disclosure is added to a polyamide acid solution obtained in the polymerization step to obtain a polyamide acid wet gel. The crosslinking agent may be added in a single form or as a solution in a solvent (also referred to as "crosslinking agent solvent" in the present disclosure), to the polyamide acid solution. Suitable examples of the crosslinking agent solvent are the same as exemplified with respect

to the above polymerization solvent, and the above high-boiling point solvent is particularly preferable. The high-boiling point solvent is low in rate of volatilization as compared with the rate of gelation, and thus, for example, stable gelation at a gelation temperature of 10°C or higher and/or without any cooling operation of the system can be made. The polymerization solvent and the crosslinking agent solvent may be the same as or different from each other, and are preferably the same as each other.

In one aspect, the mixture may be cast on a substrate and left to stand to thereby allow gelation to progress. The thickness of the mixture may be selected depending on the thickness of an objective porous polyimide, and may be, in one aspect, 0.1 μm to 10 mm. The gelation atmosphere is not limited, and may be air, an inert gas (e.g., nitrogen), or the like.

The gelation temperature is preferably 10°C or higher from the viewpoint of a shorter gelation time and thus an improvement in process efficiency, and is preferably 80°C or lower, or 60°C or lower, or 40°C or lower from the viewpoint of stable formation of a desired pore structure. In preferred aspect, the temperature may be kept throughout the gelation step without cooling or heating of the solvent (i.e., under an ambient environment).

The gelation time is preferably 1 minute or more, or 2 minutes or more from the viewpoint of stable formation of a desired pore structure, and is preferably 60 minutes or less, or 30 minutes or less, or 10 minutes or less from the viewpoint of process efficiency.

<Imidization Step>

In the present step, the polyamide acid wet gel obtained in the gelation step is imidized to obtain a polyimide gel. In one aspect, a dehydrating imidization agent is used for imidization. The dehydrating imidization agent is not particularly limited as long as it can form an imide bond by dehydration cyclization of an amide bond of the polyamide acid wet gel and a carboxy group adjacent thereto. The dehydrating imidization agent may be typically a mixture of a dehydrating agent (carboxylic anhydride, etc.) and an imidization promotor (amine, etc.). Examples of the carboxylic anhydride include acetic anhydride, and examples of the amine include tertiary amines such as tiethylamine, and heterocyclic aromatic amines such as pyridine. Of these, a combination of acetic anhydride and tiethylamine, or a combination of acetic anhydride and pyridine is preferable. In particular, a combination of acetic anhydride and triethylamine is more preferable from the viewpoint of suppressing the production of isoimide groups, which are considered to have poor heat resistance and physical strength to imide groups.

In one aspect, imidization is carried out by immersing the polyamide acid wet gel in an imidization liquid formed by dissolution of the dehydrating imidization agent (more specifically, a combination of a dehydrating agent and an imidization promotor) in a solvent (also referred to as "immersion solvent" in the present disclosure). The total concentration of the dehydrating agent and the imidization promotor in 100% by mass of the imidization liquid is preferably 1% by mass or more, or 3% by mass or more from the viewpoint that imidization rapidly progresses, and is preferably 50% by mass or less, or 40% by mass or less, or 30% by mass or less, or 20% by mass or less from the viewpoint that the polyamide acid wet gel is suppressed in deformation to obtain a polyimide gel where a pore structure of the polyamide acid wet gel is favorably retained.

Suitable examples of the immersion solvent are the same as exemplified with respect to the above polymerization solvent. The polymerization solvent and the crosslinking agent solvent may be the same as or different from each other, and are preferably the same as each other. The immersion solvent is preferably an amide-based solvent, more preferably at least one selected from the group consisting of NMP, DMF and DMAc, further preferably NMP.

The imidization temperature may be, for example, 10°C or higher. In the first and second aspects, the imidization temperature may be 120°C or lower, or 100°C or lower, or 80°C or lower, or 60°C or lower, or 40°C or lower, and in the third aspect, it may be 80°C or lower, or 60°C or lower, or 40°C or lower. In preferred aspect, the temperature may be kept throughout the imidization step without cooling or heating of the immersion solvent (i.e., under an ambient environment).

As described above, a polyimide wet gel can be obtained.

< Drying Step>

In the present step, the polyimide wet gel obtained in the imidization step is dried to obtain a polyimide aerogel. The drying method is preferably supercritical drying from the viewpoint that a polymer network structure of the polyimide wet gel is favorably kept and a polyimide aerogel having a desired pore structure is stably obtained. Examples of the supercritical drying method can include a method including replacing the solvent contained in the polyimide wet gel with a ketone-based solvent such as acetone or a replacement solvent such as a lower alcohol, for example, ethanol, and furthermore replacing the replacement solvent with an inert gas such as carbon dioxide. A commercially available supercritical drying apparatus can be used in the supercritical drying.

< < <Polyimide Wet Gel>>>

The fourth aspect provides a polyimide wet gel. The polyimide wet gel according to one aspect may be a precursor of the porous polyimide according to the first to third aspects. That is, the porous polyimide according to the first to third aspects may be obtained by removing the solvent from the polyimide wet gel according to the fourth aspect. Alternatively, the polyimide wet gel according to one aspect may be a polyimide wet gel produced by the method for producing a polyimide wet gel according to the fifth aspect. In a typical aspect, the polyimide wet gel composed of polyimide and a solvent, but may contain components other than the above as long as the effects of the present invention are not impaired.

The solvent in the polyimide wet gel may be those exemplified in the present disclosure as an immersion solvent. In one aspect, the solid content of the polyimide wet gel is 3% by mass or more, or 4% by mass or more, or 5% by mass or more, and in one aspect, it is 20% by mass or less, or 15% by mass or less, or 10% by mass or less. The solid content rate charged during production of the polyimide wet gel may be regarded as the solid content rate of the polyimide wet gel.

The polyimide wet gel according to the fourth aspect is a polyimide wet gel, wherein, when qI(q) obtained by multiplying the scattering intensity I(q) by q is plotted against the scattering vector q of small-angle X-ray scattering, qI(q) has a maximum value in a range of $0.04\ nm^{-1} < q < 2.0\ nm^{-1}$ , and an average pore size $D_W$ calculated from the peak position of qI(q) is 0.8 nm or more and 8.0 nm or less. In one aspect, the average size $D_W$ is 0.8 nm or more, or 0.9 nm or more, or 1.0 nm or more, in terms of having a pore structure suitable for an aerogel, and in one aspect, from the viewpoint of obtaining satisfactory bending elastic modulus, bending strength and strain at break of the polyimide wet gel, the average size is 8.0 nm or less, or 7.0 nm or less, or 6.0 nm or less.

In a small-angle X-ray scattering intensity profile from a large-sized structure, the scattering intensity is large in a region where the scattering vector q is small, and the scattering intensity is small in a region where q is large. Meanwhile, when the structure size is sufficiently smaller than the reciprocal of the observed q, the scattering intensity does not show q dependence and takes a constant value. Therefore, when qI(q) has a maximum value in a range of $0.04\ nm^{-1} < q < 2.0\ nm^{-1}$, there are few large-sized structural parts that cause a decrease in physical strength of the polyimide wet gel, and thus it is advantageous particularly in terms of the bending elastic modulus, bending strength or strain at break.

In one aspect, in a range where the size of a scattering vector q of small-angle X-ray scattering is $0.080\ nm^{-1}$ or more and $0.12\ nm^{-1}$ or less, when a logarithmic value log[I(q)] of a scattering intensity I(q) is differentiated by a logarithmic value log[q] of the scattering vector q, the minimum value of a differential coefficient (also simply referred to as minimum differential coefficient value) is preferably -1.0 or more, or -0.95 or more, or -0.90 or more. The absolute value of the minimum differential coefficient value is desirably close to zero, and in one aspect, it is 0.0 or less, and from the viewpoint of ease of producing the porous polyimide wet gel, in one embodiment, it is -0.01 or less, or may be -0.05 or less. When the polyimide wet gel has an average pore size ($D_W$) in a range of the present disclosure and the minimum differential coefficient value within the above range, it is considered that there are many micropores and few large-sized structural parts in the porous polyimide. Since such polyimide wet gel has a desired pore structure and excellent structural uniformity, it is possible to achieve both satisfactory toughness (more specifically, bending elastic modulus, bending strength and strain at break) and satisfactory transparency.

In small-angle X-ray scattering measurement, X-rays are incident on the surface of a thin piece cut out from the polyimide wet gel. In one aspect, the surface of the thin piece is a cross section in the direction in which the outer diameter of the polyimide wet gel is the smallest (e.g., thickness direction in the sheet). Calculation of the average pore size ($D_W$) and quantification of structural non-uniformity can be carried out as follows.

<Calculation of Average Pore Size ($D_W$)>

For the scattering pattern $I(2\theta,\varphi)$ in small-angle X-ray scattering (SAXS) measurement, a one-dimensional scattering profile $I_{obs}(2\theta)$ was obtained by circular averaging as shown in the following formula (a):
[Mathematical Formula 6]

$$I_{\mathrm{obs}}(2\theta) = \frac{1}{2\pi P}\int_0^{2\pi}\frac{I(2\theta,\phi)}{\cos^3 2\theta}\mathrm{d}\phi \qquad \text{(a)}$$

where

P: Polarization factor
2θ: Scattering angle
φ: Azimuth angle

The one-dimensional profile calculated by the above formula (a) includes, in addition to scattering derived from the sample, scattering from sources other than the sample, such as window material and air scattering. Therefore, empty cell scattering correction is carried out using the following formula (b):
[Mathematical Formula 7]

$$I(2\theta) = \left[\frac{I_{obs,\,sample}(2\theta)}{t_{sample}T} - \frac{I_{obs,\,empty}(2\theta)}{t_{empty}}\right] \qquad \text{(b)}$$

where

I(2θ): Scattering intensity after empty cell scattering correction
$I_{obs}$ (2θ): Scattering intensity before correction (circular average profile obtained by formula (a))
t: Measurement time
T: X-ray transmittance of sample

The scattering intensity of the wet gel includes the scattering of the solvent as a background. Solvent scattering is subtracted by the following formula (c):

$$I(q) = I_{gel}(q) - (1-\varphi)I_{solv}(q) \qquad \text{(c)}$$

where

$I_{gel}$ (q), $I_{solv}$ (q): Wet gel and solvent after correction of formula (b), Scattering intensity of solvent
φ: Solid volume fraction
Scattering intensity φ: Solid volume fraction.

Vacancies in the porous body are present at random, and the influence of interference between vacancies is considered to be small. At this time, the scattering intensity I(q) is considered to follow the Guinier law represented by the following formula (d):
[Mathematical Formula 8]

$$I(q) = A\exp\left[-\frac{R_g^2 q^2}{3}\right] \qquad \text{(d)}$$

where the scattering vector q = 4πsinθ/λ (λ: incident X-ray wavelength) (see R. J. Roe, "Method of "X-ray and Neutron Scattering in Polymer Science", Oxford, Oxford University Press (2000)).
Here, A is a constant and $R_g$ is a radius of inertia of a scatterer. When the above formula (d) is established, from the following formula (e):
[Mathematical Formula 9]

$$\frac{d}{dq}[qI(q)] = A\left(1 - \frac{2R_g^2 q^2}{3}\right)\exp\left[-\frac{R_g^2 q^2}{3}\right] \qquad \text{(e)}$$

the point $q_{peak}$ where qI(q), which is obtained by multiplying the circular average profile I(q) of the porous polyimide wet gel by q, takes a maximum value, is $q_{peak} = (3/2)^{1/2}/R_g$ , and $R_g$ can be estimated from $q_{peak}$.
Average pore size ($D_W$) = $(3/2)^{1/2}/q_{peak}$ is calculated from the value of the point $q_{peak}$ where qI(q) takes a

maximum value when qI(q) is plotted against q.

<Calculation of Minimum Differential Coefficient Value (Quantification of Structural Non-Uniformity)>

A polymer gel generally has non-uniformity in crosslink density or non-uniformity in concentration of polymers frozen by crosslinking. For this reason, in the scattering profile of the polymer gel, excess scattering due to structural non-uniformity is often seen in the region where q is small. Scattering due to structural non-uniformity is described as, for example, $I(q) = \exp[-\Xi^2 q^2]$ ($\Xi$: correlation length of structural non-uniformity), and the intensity of this excess scattering reflects the magnitude of the structural non-uniformity of the polymer gel (see M. Shibayama et al., J. Chem. Phys. 1992, 97, 6829).

In excess scattering, the scattering intensity tends to increase rapidly as the scattering vector q becomes smaller, and is often expressed as "upturn in small angle region". When expressed as $I(q) \leq \propto q^{-\alpha}$, in a double logarithmic plot of I(q) against q, "small angle region upturns" corresponds to the fact that an index $\alpha$ suddenly increases in the small angle region. When $I(q) \propto q^{-\alpha}$, the differential coefficient $d\log[I(q)]/d\log[q] = -\alpha$, thus making it possible to quantify the magnitude of upturn in the small angle region, due to the q dependence of dlog[I(q)]/dlog[q].

Using the circular average profile of the porous polyimide wet gel, dlog[I(q)]/dlog[q] is calculated. First, at each measurement point of log[I(q)], smoothing is carried out by moving averaging of ±1 point before and after ("Boxcar" smoothing). That is, when the value after smoothing is $\log[I(q_i)]_s$,

$$\log[I(q_i)]_s = (\log[I(q_{i-1})] + \log[I(q_i)] + \log[I(q_{i+1})])/3$$

Using the resulting $\log[I(q_i)]_s$, numerical differentiation is carried out by the following formula (f).
[Mathematical Formula 10]

$$\frac{d\log[I(q_i)]}{d\log[q_i]} = \frac{\log[I(q_{i+1})]_s - \log[I(q_{i-1})]_s}{\log[q_{i+1}] - \log[q_{i-1}]} \qquad (f)$$

Igor Pro 8.0 (WaveMetrics Inc.) is used for smoothing and numerical differentiation. For the thus obtained dlog[I(q)]/dlog[q], the minimum value at $0.080\ nm^{-1} \leq q <_\ 0.12\ nm^{-1}$ was calculated, and the minimum differential coefficient value of the porous polyimide wet gel of the present disclosure is obtained as an index of the structural non-uniformity of the porous polyimide wet gel.

In one aspect, the strain at break in a three-point bending test of the polyimide wet gel is 10% or more, or 12% or more, or 15% or more. High strain at break is an index of satisfactory toughness of the polyimide wet gel. The upper limit of the strain at break is not limited, but may be 100%, in one aspect.

The polyimide constituting the polyimide wet gel according to the fourth aspect may be the same as those exemplified in the first to third or fifth aspects. In one aspect, the polyimide constituting the polyimide wet gel has a molecular chain represented by the following general formula (1):

[Chemical Formula 9]

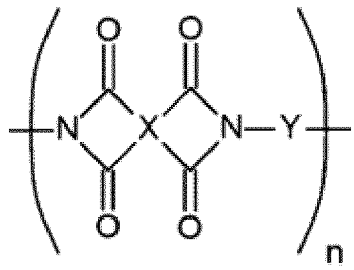

(1)

wherein X is a tetravalent organic group, Y is a divalent organic group, and n is a positive integer.

In one aspect, in general formula (1), X and/or Y has/have a structure that imparts linearity to the molecular chain, and n is the degree of polymerization of the polyimide. The structure that imparts linearity to the molecular chain will be described later in the fifth aspect.

Of X present in the molecular chain represented by general formula (1), the proportion of the structure derived from pyromellitic anhydride is preferably 50 mol% or more, or 75 mol% or more, or 90 mol% or more, and in one aspect, it is 100 mol%. In this case, the end of the molecular chain is preferably derived from pyromellitic anhydride. Because of having excellent reactivity with the crosslinking agent, the pyromellitic anhydride contributes to quick gelation and high physical strength of the gel.

There is no limitation on the form of the polyimide wet gel, and it may be in various forms such as bulk body, sheet and particles, but preferred aspect is bulk body or sheet, and particularly sheet, from the viewpoint of enjoying the advantages of satisfactory physical strength (particularly toughness) that the polyimide wet gel has. The thickness of the sheet is preferably 10 mm or less, or 5 mm or less, or 3 mm or less, or 1 mm or less, or 500 μm or less, or 400 μm or less, or 300 μm or less. The thickness of the sheet can be, for example, 50 μm or more.

In one aspect, the porous polyimide obtained by replacing the solvent in the polyimide wet gel with acetone and then subjecting to supercritical carbon dioxide drying (i.e., a porous polyimide for evaluation) has one or more or all of the following:

BET specific surface area: 100 $m^2$ /g or more and 2,000 $m^2$ /g or less,
Bulk density: 0.05 g/$cm^3$ or more and 0.50 g/$cm^3$ or less,
Bending strength: 5 MPa or more,
Bending elastic modulus: 100 MPa or more, and

Average pore size (D) determined by small-angle X-ray scattering: 1.0 nm or more and 7.0 nm or less. More specifically, the porous polyimide for evaluation is fabricated by the following procedure. The polyimide wet gel is immersed in a solution of acetone:NMP = 1:1 (weight ratio) for 24 hours, and then repeatedly subjected to washing with acetone and immersion in ethanol for 24 hours three times. The resulting gel is dried with a supercritical drying apparatus ("SCRD6", manufactured by Rexxam Co., Ltd) to obtain a porous polyimide for evaluation.

The BET specific surface falling within the above range means that the polyimide wet gel of the present embodiment is capable of easily forming a porous polyimide having a pore structure suitable for an aerogel. In one aspect, the BET specific surface area is 100 $m^2$ /g or more, or 200 $m^2$ /g or more, or 300 $m^2$ /g or more, and in one aspect, it is 2,000 $m^2$ /g or less, or 1,500 $m^2$ /g or less, or 1,000 $m^2$ /g or less, or 800 $m^2$ /g or less.

The bulk density falling within the above range means that the polyimide wet gel of the present embodiment is capable of easily forming a porous polyimide having a characteristic pore size in an aerogel. In one aspect, the bulk density is 0.05 g/$cm^3$ or more, or 0.06 g/$cm^3$ or more, or 0.07 g/$cm^3$ or more, or 0.08 g/$cm^3$ or more, or 0.09 g/$cm^3$ or more, or 0.10 g/$cm^3$ or more, and in one aspect, it is 0.50 g/$cm^3$ or less, or 0.40 g/$cm^3$ or less, or 0.30 g/$cm^3$ or less.

The bending strength falling within the above range means that the polyimide wet gel of the present embodiment is capable of easily forming a porous polyimide having physical strength suitable for an aerogel. In one aspect, the bending strength is 5 MPa or more, or 10 MPa or more. The upper limit of the bending strength is not limited, and in one aspect, from the viewpoint of ease of producing a porous polyimide, the bending strength may be 100 MPa or less.

The bending elastic modulus falling within the above range means that the polyimide wet gel of the present embodiment is capable of easily forming a porous polyimide having physical strength suitable for an aerogel. In one aspect, the bending elastic modulus is 100 MPa or more, or 150 MPa or more, or 200 MPa or more, or 300 MPa or more, or 400 MPa or more, and in one aspect, it is 1,000 MPa or less.

In one aspect, the average pore size (D) determined by small-angle X-ray scattering is 1.0 nm or more, or 1.5 nm or more, or 2.0 nm or more, in that the polyimide wet gel of the present embodiment is capable of easily forming a porous polyimide having a pore structure suitable for an aerogel. In one aspect, the average pore size is 7.0 nm or less, or 6.0 nm or less, or 5.0 nm or less in that the polyimide wet gel of the present embodiment is capable of easily forming a porous polyimide having satisfactory bending elastic modulus, bending strength and strain at break.

< < <Method for Producing Polyimide Wet Gel>>>

< <Fifth Aspect> >

The fifth aspect provides a method for producing a polyimide wet gel. The method includes a step of obtaining a polyamide acid wet gel and a step of obtaining a polyimide wet gel in this order. In one aspect, the polyimide wet gel according to the fourth aspect may be obtained by the method according to the fifth aspect. In one aspect, the porous polyimide according to the first to third aspects may be obtained by drying the polyamide acid wet gel obtained by the method according to the fifth aspect. In one aspect, drying may be carried out by the drying step described above with respect to the first to third aspects.

<Step of Obtaining Polyamide Acid Wet Gel>

The step of obtaining a polyamide acid wet gel includes adding a crosslinking agent having three or more functional groups to a polyamide acid solution to obtain a polyamide acid wet gel (PAA-WG).

The polyamide acid preferably includes tetracarboxylic dianhydride (also simply referred to as "acid dianhydride") and diamine as monomer units. The polyamide acid can be obtained, for example, by dissolving diamine and tetracarboxylic dianhydride in a solvent, and polymerizing the solution. The solution of the polyamide acid obtained by polymerization can be used as a polyamide acid solution as it is.

(Tetracarboxylic Dianhydride)

The tetracarboxylic dianhydride is a compound having two structures in which two carboxy groups are fused in one molecule. The tetracarboxylic dianhydride can be preferably, for example, a cyclic or acyclic, branched or unbranched, substituted or unsubstituted aliphatic or aromatic hydrocarbon group represented by the following general formula (2):

[Chemical Formula 10]

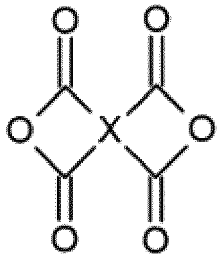

(2)

wherein, in the general formula (2), X is a tetravalent organic group. The tetracarboxylic dianhydride can be, for example, a cyclic or acyclic, branched or unbranched, substituted or unsubstituted aliphatic or aromatic hydrocarbon group. The aliphatic hydrocarbon group may be saturated or unsaturated. X is preferably a tetravalent organic group having an aromatic group. The number of carbon atoms of X is preferably 6 to 24, more preferably 6 to 18, and still more preferably 6 to 12.

(Diamine)

Diamine is a compound having two amino groups in one molecule, and is preferably represented by the general formula (3):

$$H_2N\text{-}Y\text{-}NH_2 \qquad (3)$$

wherein, in the formula (3), Y is a divalent organic group. The diamine can be, for example, a cyclic or acyclic, branched or unbranched, substituted or unsubstituted aliphatic or aromatic hydrocarbon group. The aliphatic hydrocarbon group may be saturated or unsaturated. Y is preferably a divalent organic group having an aromatic group. The carbon number of Y is preferably 6 to 24, more preferably 6 to 18, and still more preferably 6 to 12.

(Polymerization Solvent)

It is possible to use, as the solvent when polymerizing polyamide acid (also referred to as "polymerization solvent"), solvent capable of dissolving the resulting polyamide acid. Examples of the solvent include amide-based solvents, solvents having an ester group, an ether group, a ketone group, a hydroxyl group, a sulfone group and a sulfinyl group, and the like.

Examples of the amide-based solvent include N-methyl-2-pyrrolidone (NMP), N,N-dimethylformamide (DMF) and N,N-dimethylacetamide (DMAc). Examples of the cyclic ester include lactone-based solvents, for example, γ-butyrolactone (GBL), δ-valerolactone, ε-caprolactone, γ-crotonolactone, γ-hexanolactone, α-methyl-γ-butyrolactone, γ-valerolactone, α-acetyl-γ-butyrolactone and δ-hexanolactone. Examples of the solvent having an ester group include ester solvents, for example, methyl acetate, ethyl acetate, butyl acetate and dimethyl carbonate. Examples of the solvent

having a ketone group include ketone-based solvents, for example, acetone, methyl ethyl ketone, methyl isobutyl ketone, cyclohexanone and cyclopentanone. Examples of the solvent having a hydroxyl group include phenolic solvents, for example, m-cresol. Examples of the solvent having a sulfone group include methylsulfone, ethylphenylsulfone, diethylsulfone, diphenylsulfone, sulfolane, bisphenol S, sorapsone, dapsone, bisphenol A polysulfone and sulfolane. Examples of the solvent having a sulfinyl group include sulfoxide-based solvents, for example, dimethyl sulfoxide (DMSO).

The solvent is preferably a high-boiling point solvent, and is more preferably a solvent having a boiling point of higher than 80°C, still more preferably 100°C or higher, and yet more preferably 120°C or higher. By using the high-boiling point solvent, the polymerization and gelation rate of the polyamide acid can be decreased as compared with the rate of volatilization of the solvent, thus making it possible to form the polyamide acid wet gel sheet described below at around room temperature. The high-boiling point solvent is preferably an amide-based solvent, more preferably at least one selected from the group consisting of N-methyl-2-pyrrolidone (NMP, boiling point of 202°C), N,N-dimethylformamide (DMF, boiling point of 153°C), N,N-dimethylformamide (DMF, boiling point of 153°C) and N,N-dimethylacetamide (DMAc, boiling point of 165°C), and particularly preferably N-methyl-2-pyrrolidone (NMP).

(Polymerization Temperature)

The temperature when polymerizing the polyamide acid is preferably kept at 10°C or higher. The upper limit of the temperature is preferably kept at 120°C or lower, 100°C or lower, 80°C or lower, 60°C or lower, or 40°C or lower. It is particularly preferred that the polymerization is carried out under an ambient atmosphere without cooling or heating the polymerization solvent.

(Crosslinking Agent)

By adding a crosslinking agent to the polyamide acid solution, the polyamide acid can be gelled to obtain a polyamide acid wet gel. The crosslinking agent is not particularly limited as long as it has three or more functional groups. Three or more functional groups of the crosslinking agent can react with the amine end and/or the acid anhydride end of the polyamide acid to crosslink the molecular chains of the polyamide acid to form a polymer network structure.

The crosslinking agent having three or more functional groups is preferably represented by the following general formula (4):

$$Z(-R)_a \qquad (4)$$

wherein, in the general formula (4), Z is at least trivalent organic group. R is a group capable of forming a bond with the amine end and/or acid anhydride end of the polyamide acid, a is an integer of 3 or more and corresponds to the valence of Z. Z can be, for example, a cyclic or acyclic, branched or unbranched, substituted or unsubstituted aliphatic or aromatic hydrocarbon group. The aliphatic hydrocarbon group may be saturated or unsaturated. Z is preferably a trivalent organic group (a = 3) having an aromatic group. The number of carbon atoms of Z is preferably 6 to 24, more preferably 6 to 18, and still more preferably 6 to 12. Examples of R include a carboxy group, an amino group, and a combination thereof.

The crosslinking agent preferably has the following general formula: $Z(-NH_2)_3$. In the formula, Z is a trivalent organic group having an aromatic group, and the number of carbon atoms of Z is preferably 6 to 24, more preferably 6 to 18, and still more preferably 6 to 12. Specifically, examples of such a crosslinking agent include 1,3,5-tris(4-aminophenyl)benzene (TAB), 1,3,5-tris(4-aminophenoxy)benzene (TAPB) and 2,4,6-tris(4-aminophenyl)pyridine (TAPP).

The crosslinking agent may have the following general formula: $Z(-COOH)_3$. In the formula, Z is a trivalent organic group having an aromatic group, and the number of carbon atoms of Z is preferably 6 to 24, more preferably 6 to 18, and still more preferably 6 to 12. Specific examples of such a crosslinking agent include 1,3,5-benzenetricarboxylic acid (BTC) and the like.

(Crosslinking Agent Solvent)

In the step of adding a crosslinking agent to a polyamide acid solution to obtain a polyamide acid wet gel, the crosslinking agent may be added alone to the polyamide acid solution, or the crosslinking agent may be dissolved in a solvent in a system separate from the polyamide acid solution to form a crosslinking agent solution, followed by the addition of the crosslinking agent solution to the polyamide acid solution. Herein, the solvent of the crosslinking agent solution is also referred to as "crosslinking agent solvent". It is possible to use, as the crosslinking agent solvent, the same solvents as those explained in the above column of "polymerization solvent". The crosslinking agent solvent is preferably an amide-based solvent, more preferably at least one selected from the group consisting of NMP, DMF and DMAc, and still more preferably NMP. The crosslinking agent solvent may be different from the polymerization solvent, but the same solvent as the polymerization solvent can be preferably used. In one preferred aspect, both the polymerization solvent and the crosslinker solvent are NMP.

(Gelation Temperature)

The temperature in the step of obtaining a polyamide acid wet gel is preferably kept at 10°C or higher. Thus, a polyamide acid wet gel can be obtained in a short time. The upper limit of the temperature is not limited, but is preferably 120°C or lower, 100°C or lower, 80°C or lower, 60°C or lower, or 40°C or lower. It is particularly preferred that the gelation is carried out under an ambient atmosphere without cooling or heating the solvent.

(Gelation Time)

The reaction time (standing time) in the step of obtaining a polyamide acid wet gel is preferably 1 minute or more and 60 minutes or less, more preferably 1 minute or more and 30 minutes or less, and still more preferably 2 minutes or more and 10 minutes or less.

(Formation of Polyamide Acid Wet Gel Sheet)

The step of obtaining a polyamide acid wet gel may be carried out by spreading a mixture containing a crosslinking agent added thereto into a sheet. A polyamide acid wet gel sheet (PAA-WGs) can be obtained by allowing the mixture to stand for a while in a state of being spread into a sheet, thus allowing gelation to proceed. Herein, the term "sheet-shaped" is not limited, but is preferably a planar shape having an average thickness of 10 mm or less. The average thickness of the mixture spread into a sheet is preferably 10 mm or less, 5 mm or less, 3 mm or less, 1 mm or less, 500 μm or less, more preferably 400 μm or less, and still more preferably 300 μm or less. The lower limit of the average thickness of the mixture spread into a sheet is not limited, but can be set at, for example, 50 μm or more. After gelation, the average thickness of the resulting polyimide wet gel sheet is preferably 10 mm or less, 5 mm or less, 3 mm or less, 1 mm or less, 500 μm or less, more preferably 400 μm or less, and still more preferably 300 μm or less. The lower limit of the average thickness of the resulting polyimide wet gel sheet is not limited, but can be set at, for example, 50 μm or more.

It has been difficult to for a conventional method for producing a polyimide wet gel to form a polyimide wet gel sheet. That is, in the method in which a polyimide solution is obtained by imidizing polyamide acid in solution and then the polyimide is gelled by introducing crosslinking points among conventional methods, the polyimide is difficult to dissolve in general-purpose organic solvents and easily undergoes aggregation, precipitation and sedimentation in the solution during gelation. Therefore, it was difficult to form a polyimide wet gel sheet. In the method in which polyamide acid is first gelled to obtain a polyamide acid wet gel and then the polyamide acid wet gel is imidized among conventional methods, the polyamide acid wet gel is easily deformed during imidization and thus it was difficult to form a polyimide wet gel with small dimension, such as a sheet. To the contrary, in the method of the present disclosure, as described below, by using a solution with a low concentration of a dehydration imidizing agent in the imidization, the deformation of the polyamide acid wet gel can be suppressed, and it is easy to form a polyimide wet gel sheet.

When forming a polyamide acid wet gel sheet, it is preferable to use the high-boiling point solvent described above as the solvent. Since the high-boiling point solvent has slow rate of volatilization as compared with the rate of gelation, it is preferable that the polyamide acid wet gel sheet can be formed even if it is kept at 10°C or higher, and more preferably in an ambient environment without cooling the solvent.

<Step of Obtaining Polyimide Wet Gel>

The step of obtaining a polyimide wet gel includes obtaining a polyimide wet gel (PI-WG) by immersing a polyamide acid wet gel in a solution containing a dehydrating imidization agent. The above polyamide acid wet gel sheet may be used to obtain polyimide wet gel sheets (PI-WGs).

(Dehydrating Imidization Agent)

The dehydration imidization agent is not particularly limited as long as it can form an imide bond by dehydration cyclization of an amide bond of the polyamide acid wet gel and a carboxy group adjacent thereto. Typically, it is possible to use, as the dehydrating imidization agent, a mixture of a dehydrating agent (such as carboxylic anhydride) and an imidization promotor (such as amine). Examples of the carboxylic anhydride include acetic anhydride, and examples of the amine include tertiary amines such as triethylamine, and heterocyclic aromatic amines such as pyridine. The dehydration imidization agent is preferably a combination of acetic anhydride and triethylamine, or a combination of acetic anhydride and pyridine. Of these, a combination of acetic anhydride and triethylamine is more preferable from the viewpoint of suppressing the formation of an isoimide group which is considered to have inferior heat resistance and

physical strength to the imide group.

(Concentration of Dehydrating Imidization Agent)

In one aspect, the concentration of the dehydrating imidization agent in the solution in which the polyamide acid wet gel is immersed during imidization (more specifically, the total concentration of the dehydrating agent and the imidization promotor) is 1% by weight or more and 50% by weight or less based on the total weight of the solution (imidization solution). Although not to be bound by theory, the deformation of the polyamide acid wetted gel during imidization can be attributed in part to exposure to the dehydrating imidization agent, which is a poor solvent for the polyamide acid wetted gel. By using 50% by weight or more and 99% by weight or less of a solvent which is a good solvent for polyamide acid and polyimide, it is considered that the solution (imidization solution) can easily infiltrate into the inside of the gel, and thus the rate of imidization or the imidization ratio of the product tend to increase. Meanwhile, when the ratio of the poor solvent containing the dehydrating agent and the imidization promotor exceeds 50% by weight, the solution (imidization solution) becomes difficult to infiltrate into the gel, and the imidization rate or imidization ratio of the product decreases. Therefore, in the imidization, it is considered that the deformation of the polyamide acid wet gel can be suppressed when the concentration of the dehydrating imidization agent is 50% by weight or less. When the concentration of the dehydrating imidization agent is 1% by weight or more, the progress of imidization is promoted and a polyimide wet gel can be obtained in a shorter time. The concentration of the dehydrating imidization agent is preferably 1% by weight or more and 40% by weight or less, more preferably 1% by weight or more and 30% by weight or less, still more preferably 1% by weight or more and 20% by weight or less, and yet more preferably 3% by weight or more and 20% by weight or less.

(Immersion Solvent)

Although there is no limitation on the solvent in the solution in which the polyamide acid wet gel is immersed during imidization (also referred to as "immersion solvent"), it is possible to use the same solvents as those explained in the column "Polymerization Solvent" described above. The immersion solvent is preferably an amide-based solvent, more preferably at least one selected from the group consisting of NMP, DMF and DMAc, and still more preferably NMP. The polymerization solvent and the crosslinking agent solvent may be the same or different from each other, and preferably the same solvent as the polymerization solvent and crosslinker solvent can be used.

(Immersion Temperature)

The temperature in the step of obtaining a polyimide wet gel is preferably kept at 10°C or higher. This allows a polyimide wet gel to be obtained in a shorter time. In the method in which gelling is first carried out, followed by imidization among conventional methods, it was necessary to perform imidization at low temperature because the polyamide acid wet gel is easily deformed during imidization. To the contrary, in the method of the present disclosure, since the concentration of the dehydrating imidization agent is 50% by weight or less, the deformation of the polyamide acid wet gel can be suppressed even if it is kept at 10°C or higher, and more preferably in an ambient environment without cooling.

The upper limit of the temperature in the step of obtaining a polyimide wet gel is not limited, but is preferably 120°C or lower, 100°C or lower, 80°C or lower, 60°C or lower, or 40°C or lower. It is particularly preferred that the imidization is carried out under an ambient atmosphere without cooling or heating the immersion solution.

The temperature in both the step of obtaining a polyamide acid wet gel and the step of obtaining a polyimide wet gel is preferably kept at 10°C or higher. The temperature in both the step of obtaining a polyamide acid wet gel and the step of obtaining a polyimide wet gel is preferably kept at 120°C or lower, 100°C or lower, 80°C or lower, 60°C or lower, or 40°C or lower. It is particularly preferred that both the step of obtaining a polyamide acid wet gel and the step of obtaining a polyimide wet gel are carried out under an ambient environment without cooling or heating the system.

< <Method for Producing Porous Polyimide>>

The method for producing porous polyimide of the present disclosure further includes the step of removing the solution from the polyimide wet gel to obtain a porous polyimide (pPI). By using the above polyimide wet gel sheets (PI-WGs), porous polyimide sheets (pPIs) can be obtained.

<Solvent Removing Step>

The method for removing the solution from the polyimide wet gel is not particularly limited as long as at least

a part of the polymer network structure of the polyimide wet gel can be maintained to obtain a porous polyimide. The method for removing the solution is not particularly limited as long as it can be dried while maintaining the pore structure of the porous polyimide, but freeze drying or supercritical drying is preferable, and supercritical drying is more preferable. Supercritical drying can be carried out, for example, by replacing the solvent contained in the polyimide wet gel with a replacement solvent such as acetone or a lower alcohol, such as ethanol, and replacing the replacement solvent with an inert gas such as carbon dioxide. A commercially available supercritical drying apparatus can be used for supercritical drying.

<<Porous Polyimide>>

<Molecular Structure>

The polyimide constituting the porous polyimide preferably has a molecular chain represented by the following general formula (1):

[Chemical Formula 11]

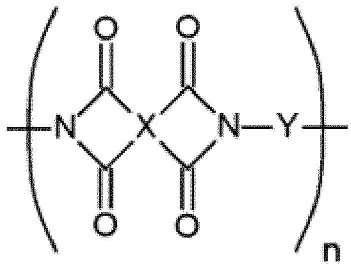

(1)

wherein, in the general formula (1), X is a tetravalent organic group, Y is a divalent organic group, and n is a positive integer. X and Y in the general formula (1) correspond to X in the general formula (2) and Y in the general formula (3), respectively.

X may have a structure imparting linearity or a structure imparting bendability to a molecular chain of the resulting polyimide. X preferably has a structure imparting linearity to a molecular chain of the resulting polyimide. In the present disclosure, "imparting linearity" to a molecular chain of the polyimide refers to having a structure where two single bonds connecting an objective monomer unit and two other monomer units adjacent thereto are arranged on a straight line. In the present disclosure, "imparting bendability" to a molecular chain of the polyimide refers to having a structure where two single bonds connecting an objective monomer unit and two other monomer units adjacent thereto are not arranged on a straight line. By imparting linearity to the molecular chains of the polyimide, it is possible to further suppress the deformation of the polyamide acid wet gel during imidization, and to provide a porous polyimide having high heat resistance.

X having the structure imparting linearity to a molecular chain of the polyimide is preferably, for example, a substituted or unsubstituted tetravalent aromatic ring (monocyclic aromatic ring) or polycyclic aromatic ring which is an aromatic ring or polycyclic aromatic ring having two acid anhydride groups at positions so that, when two acid anhydride groups form an imide bond with an amino group of diamine, two single bonds of the imide bond are arranged on a straight line. Examples of the aromatic ring or polycyclic aromatic ring in X include aromatic rings and fused aromatic rings, such as benzene, naphthalene, anthracene, phenanthrene, tetracene, triphenylene, chrysene and pyrene.

Examples of the tetracarboxylic dianhydride where X is an aromatic ring or polycyclic aromatic ring and has the structure imparting linearity to a molecular chain of the polyimide include compounds represented by the following general formulas:

[Chemical Formula 12]

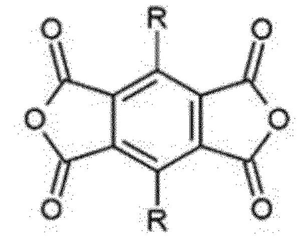

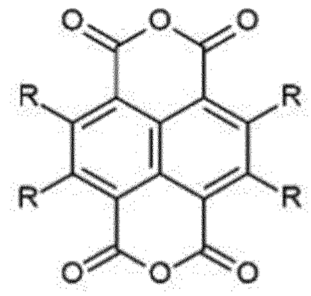

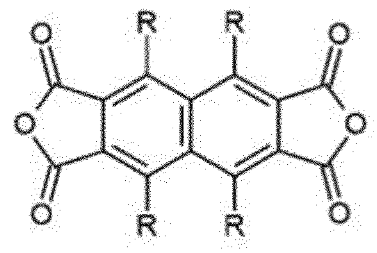

In the general formulas, R each may be independently a group selected from the group consisting of hydrogen, halogen, a hydroxyl group, an aryl group and an aliphatic hydrocarbon group. The aliphatic hydrocarbon group may be a branched or unbranched, saturated or unsaturated aliphatic hydrocarbon group.

Specific examples of the tetracarboxylic dianhydride having the structure imparting linearity to a molecular chain of the polyimide include pyromellitic dianhydride (PMDA), 1,4,5,8-naphthalene tetracarboxylic dianhydride (NTCDA), and 2,3,6,7-naphthalene tetracarboxylic dianhydride, and pyromellitic dianhydride (PMDA) is particularly preferable.

Specific examples of the tetracarboxylic dianhydride having the structure imparting bendability to a molecular chain of the polyimide include 3,3",4,4'-biphenyltetracarboxylic dianhydride (BPDA), 2,3,3',4'-biphenyltetracarboxylic dianhydride (α-BPDA), 3,3',4,4'-benzophenone tetracarboxylic dianhydride (BTDA), 4,4'-oxydiphthalic dianhydride (ODPA), 3,3',4,4'-biphenyl ether tetracarboxylic dianhydride, 2,3,3',4'-biphenyl ether tetracarboxylic dianhydride, 3,3',4,4'-biphenylsulfone tetracarboxylic dianhydride (DSDA), 2,2'-bis(3,4-dicarboxyphenyl)hexafluoropropanoic dianhydride, 2,2'-bis(3,4-dicarboxyphenyl)propanoic dianhydride, 1,2,4,5-cyclohexane tetracarboxylic dianhydride (HPMDA), 1,2,3,4-cyclopentane tetracarboxylic dianhydride (CPDA), 1,2,3,4-cyclobutane tetracarboxylic dianhydride (CBDA), 1-carboxymethyl-2,3.5-cyclopentanetricarboxylic acid-2,6:3,5-dianhydride (TCA-AH), 4,4'-(hexafluoroisopropylidene)diphthalic anhydride (6FDA), bicyclo[2.2.2]oct-7-ene-2,3,5,6-tetracarboxylic dianhydride (BTA), bicyclo[2,2,1]heptane-2,3.5,6-tetracarboxylic dianhydride (NBDAn), 1,3,3a,4,5,9b-hexahydro-5-(tetrahydro-2,5-dioxo-3-furanyl)naphtho[1,2-c]furan-1,3-dione (TDA) and the like.

The tetracarboxylic dianhydride having the structure imparting bendability to a molecular chain of the polyimide more preferably has an aromatic group, and examples thereof include 3,3',4,4'-biphenyltetracarboxylic dianhydride (BPDA), 2,3,3',4'-biphenyltetracarboxylic dianhydride (α-BPDA), 3,3',4,4'-benzophenone tetracarboxylic dianhydride (BTDA), 4,4'-oxydiphthalic dianhydride (ODPA), 3,3',4,4'-biphenyl ether tetracarboxylic dianhydride, 2.3,3',4'-biphenyl ether tetracarboxylic dianhydride, and 3,3',4,4'-biphenylsulfone tetracarboxylic dianhydride (DSDA). More preferred is 3,3',4,4'-biphenyltetracarboxylic dianhydride (BPDA).

Y may have a structure imparting linearity or a structure imparting bendability to a molecular chain of the resulting polyimide. Y preferably has a structure imparting linearity to a molecular chain of the resulting polyimide. By imparting linearity to the molecular chains of the polyimide, it is possible to further suppress the deformation of the polyamide acid wet gel during imidization, and to provide a porous polyimide having high heat resistance.

Y having the structure imparting linearity to a molecular chain of the polyimide is preferably, for example, a substituted or unsubstituted divalent aromatic ring or polycyclic aromatic ring which is an aromatic ring or polycyclic aromatic ring having two amino groups at positions so that, when two amino groups form an imide bond with an acid anhydride group of tetracarboxylic dianhydride, two single bonds of the imide bond are arranged on a straight line. Typically, positioning may be made where one amino group is located at the para-position relative to another amino group. Examples of the aromatic ring or polycyclic aromatic ring in Y include aromatic rings and fused aromatic rings, such as benzene, naphthalene, anthracene, phenanthrene, tetracene, triphenylene, chrysene and pyrene, and ring aggregates of aromatic rings bound via a single bond, such as biphenyl and triphenyl.

Examples of the diamine where Y is an aromatic ring or polycyclic aromatic ring and has the structure imparting

linearity to a molecular chain of the polyimide include compounds represented by the following general formulas:

[Chemical Formula 13]

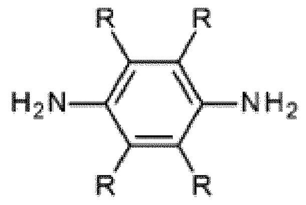

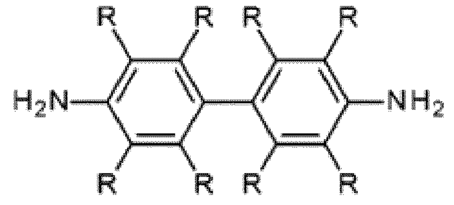

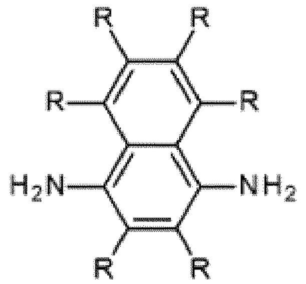

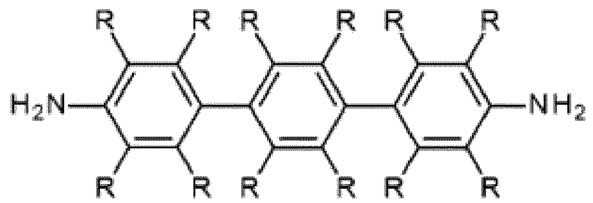

In the general formulas, R each may be independently a group selected from the group consisting of hydrogen, halogen, a hydroxyl group, an aryl group and an aliphatic hydrocarbon group. The aliphatic hydrocarbon group may be a branched or unbranched, saturated or unsaturated aliphatic hydrocarbon group.

Specific examples of the diamine having the structure imparting linearity to a molecular chain of the polyimide include p-phenylenediamine (PPDA), 2,5-dimethyl-p-phenylenediamine (DMPDA), 2,3,5,6-tetramethyl-p-phenylenediamine (TMPDA), 4,4'-diaminobiphenyl, 2,2'-dimethylbenzidine (DMBZ), 3,3'-dimethylbenzidine, 2,2'-bis(trifluoromethyl)benzidine (TFMB), 2,5-diaminotoluene, 2,5-dihydroxy-1,4-phenylenediamine, o-tolidine, 3,3'-dihydroxy-4,4'-diaminobiphenyl, and 3,3'-dimethoxy-4,4'-diaminobiphenyl. The diamine having the structure imparting linearity to a molecular chain of the polyimide is preferably at least one selected from the group consisting of p-phenylenediamine (PPDA), 2,5-dimethyl-p-phenylenediamine (DMPDA), 2,3,5,6-tetramethyl-p-phenylenediamine (TMPDA), 4,4'-diaminobiphenyl, 2,2'-dimethylbenzidine (DMBZ), 3,3'-dimethylbenzidine, and 2,2'-bis(trifluoromethyl)benzidine (TFMB).

Examples of the diamine having the structure imparting bendability to a molecular chain of the polyimide include aromatic diamines such as m-phenylenediamine (MPDA), 2,4-diaminotoluene, 2,4-diaminoxylene, 3,3'-diaminodiphenylsulfone (3DAS), 4,4'-diaminodiphenylsulfone (4DAS), 4,4'-diaminobenzophenone (4,4'-DABP), 3,3'-diaminobenzophenone (3,3'-DABP), 1,5-diaminonaphthalene (1,5-DAN), m-tolidine, 5-amino-2-(4-aminophenyl)-benzimidazole (ABI), 4,4'-diaminobenzanilide (DABA), 9,9-bis(4-aminophenyl)fluorene, and 9,9-bis(4-aminophenoxyphenyl)fluorene; and aliphatic diamines such as N,N-dimethyl-1,3-propanediamine (DMPDA), 2,4,6-trimethyl-1,3-phenylenediamine (TMPDA), 2,2-bis(4-aminophenyl)hexafluoropropane (6FDAm), 1,4-cyclohexanediamine (trans-isomer, cis-isomer, or cis- and trans-mixture) (CHDA), 1,4-bisaminomethylcyclohexane (trans-isomer, cis-isomer, or cis- and trans-mixture) (14BAC), 4,4'-oxydianiline (ODA), hexamethylenediamine, 1,3-diaminocyclohexane, 4,4'-diaminodicyclohexane, and 3,3'-diaminodicyclohexane.

Of such diamines having the structure imparting bendability, examples of the aromatic diamine preferably include 1,5-diaminonaphthalene (1,5-DAN).

(Combination of Monomers)

The combination of tetracarboxylic dianhydride and diamine is preferably a combination such that when the resulting polyimide is heat-treated at 300°C for 1 hour, the BET specific surface area of the polyimide is 10 $m^2$ /g or more and 2,000 $m^2$ /g or less. The BET specific surface area falling within the above range means that the porous polyimide maintains its pore structure after heat treatment, and a porous polyimide having high heat resistance can be obtained. In one aspect, the BET specific surface area is 10 $m^2$/g or more, 50 $m^2$ /g or more, 100 $m^2$ /g or more, 200 $m^2$ /g or more, or 300 $m^2$ /g or more, and in one aspect, 2,000 $m^2$ /g or less, 1,500 $m^2$/g or less, 1,000 $m^2$/g or less, or 800 $m^2$/g or less.

As for the combination of tetracarboxylic dianhydride and diamine, it is preferable that the above X and/or Y have a structure imparting linearity to the molecular chain of the polyimide, and it is more preferable that both the above X and Y to have a structure imparting linearity to the molecular chain. Although not to be bound by theory, it is considered

that imparting linearity to molecular chain makes it more rigid, and the deformation of the polyamide acid wet gel during imidization is further suppressed. Imparting linearity to the molecular chains makes it easier to adjust the BET specific surface area of the resulting polyimide after heat treatment at 300°C for 1 hour to 10 $m^2$/g or more and 2,000 $m^2$/g or less, thus making it possible to obtain a porous polyimide having high heat resistance. In the method in which imidization is first carried out, followed by gelation among conventional methods for producing a poylimide wet gel, when the polyimide molecular chain has linearity, the polyimide easily undergoes aggregation, precipitation and sedimentation, and thus it is difficult to use a monomers imparting linearity to such a molecular chain. To the contrary, in the method of the present disclosure, a monomer imparting linearity to such a molecular chain can be used when imidization is first carried out, followed by gelation.

The polyimide constituting the porous polyimide more preferably has a molecular structure represented by the following general formula (5):

[Chemical Formula 14]

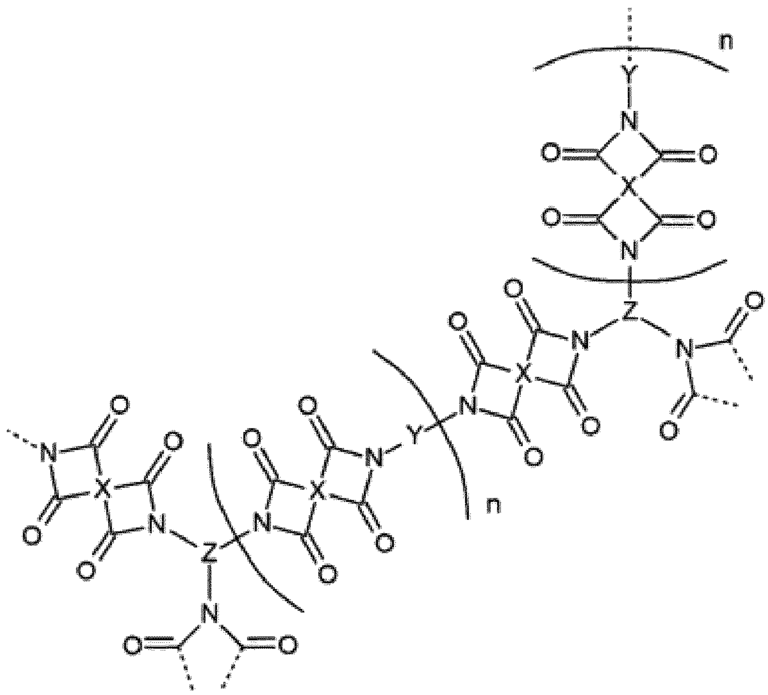

(5)

wherein, in the general formula (5), X, Y and Z are respectively the same as defined as for X in the general formula (2), Y in the general formula (3) and Z in the general formula (4), and n is a positive integer.

In the general formulas (1) and (5), n means the degree of polymerization of the polyimide. The degree of polymerization (n) of the polyimide can be preferably set at 3 to 50, more preferably 3 to 40, still more preferably 5 to 30, and yet more preferably 5 to 20.

<Other Physical Properties>

The average pore diameter of the porous polyimide can be in the submicron order to the nano order, and is preferably about 1 nm or more and 1 μm or less, more preferably 1 nm or more and 100 nm or less, and still more preferably 1 nm or more and 50 nm or less. The BET specific surface area of the porous polyimide before heat treatment at 300°C for 1 hour may be preferably about 10 $m^2$ /g to 2,000 $m^2$ /g. The BET specific surface area of the porous polyimide before heat treatment at 300°C for 1 hour may be more preferably 10 $m^2$ /g or more, 50 $m^2$ /g or more, 100 $m^2$ /g or more, 200 $m^2$ /g or more, 300 $m^2$ /g or more, or 400 $m^2$ /g or more, and more preferably 2,000 $m^2$ /g or less, 1,500 $m^2$/g or less, 1,000 $m^2$/g or less, or 800 $m^2$/g or less. The bulk density of the porous polyimide may be preferably about 0.1 to 0.5 g/$cm^3$.

< < <Porous Carbon Sheet>>>

<<Sixth Aspect>>

The sixth aspect provides a porous carbon sheet. The porous carbon sheet may have the following characteristics. In one aspect, the porous carbon sheet may be produced using the porous polyimide according to the first to third aspects. In one aspect, the porous carbon sheet may be produced using the polyimide wet gel according to the fourth aspect, or using the method for producing a polyimide wet gel or the method for producing a porous polyimide according to the fifth aspect.

<Average Pore Diameter (L)>

In the porous carbon sheet according to the present disclosure, the average pore diameter (L) obtained by the following formula:

$$L = 4V/A$$

based on a pore volume (V) and a BET specific surface area (A) determined by a gas adsorption method, is 5 nm or more and 500 nm or less. The average pore diameter (L) in this range is an index representing a pore size in the submicron order, and is a region that is difficult to produce by either chemical or physical approaches. It was difficult for conventional methods to produce a porous carbon sheet having an average pore diameter (L) in this range. Although not to be bound by theory, it is considered that this is because the porous resin sheet for producing the porous carbon sheet has poor heat resistance, and the pores collapse during carbonization. The average pore diameter (L) of the porous carbon sheet is preferably 5 nm or more, 5.5 nm or more, or 6 nm or more, and is preferably 300 nm or less, 200 nm or less, 100 nm or less, 50 nm or less, 30 nm or less, or 20 nm or less.

<Bulk Density>

The bulk density of the porous carbon sheet is preferably 0.01 g/cm$^3$ or more and 0.80 g/cm$^3$ or less. The bulk density in the above range is also an index representing a pore size in the submicron order, and is a region that is difficult to produce by either chemical or physical approaches. It was difficult for conventional methods to produce a porous carbon sheet having a bulk density in this range. Although not to be bound by theory, it is considered that this is because the porous resin sheet for producing the porous carbon sheet has poor heat resistance, and the pores collapse during carbonization. The bulk density of the porous carbon sheet is preferably 0.05 g/cm$^3$ or more, 0.06 g/cm$^3$ or more, 0.07 g/cm$^3$ or more, 0.08 g/cm$^3$ or more, 0.09 g/cm$^3$ or more, or 0.10 g/cm$^3$ or more, and is preferably 0.80 g/cm$^3$ or less, 0.70 g/cm$^3$ or less, 0.60 g/cm$^3$ or less, 0.50 g/cm$^3$ or less, or 0.40 g/cm$^3$ or less.

<BET Specific Surface Area>

The BET specific surface area of the porous carbon sheet is preferably 10 m$^2$ or more and 2,000 m$^2$ or less. The BET specific surface area in the above range is also an index representing a pore size in the submicron order, and is a region that is difficult to produce by either chemical or physical approaches. It was difficult for conventional methods to produce a porous carbon sheet having a BET specific surface area in this range. Although not to be bound by theory, it is considered that this is because the porous resin sheet for producing the porous carbon sheet has poor heat resistance, and the pores collapse during carbonization. The BET specific surface area of the porous carbon sheet is preferably 10 m$^2$ /g or more, 50 m$^2$ /g or more, 100 m$^2$ /g or more, 200 m$^2$ /g or more, or 300 m$^2$ /g or more, and is preferably 2,000 m$^2$ /g or less, 1,500 m$^2$ /g or less, 1,000 m$^2$ /g or less, or 800 m$^2$ /g or less.

<Sheet Shape>

The average thickness of the porous carbon sheet is not limited, but is preferably 10 mm or less. Although not to be bound by theory, in the case of a sheet, the porous resin sheet tends to shrink and the pores easily collapse due to heating during carbonization, and it was difficult for conventional methods to produce a porous carbon sheet having a sheet shape and pores in the submicron order. The average thickness is more preferably 5 mm or less, 3 mm or less, 2 mm or less, 1 mm or less, 800 μm or less, 500 μm or less, 300 μm or less, 200 μm or less, or 100 μm or less. The lower limit of the average thickness is not limited, but may be, for example, 10 μm or more, 20 μm or more, or 50 μm or more.

<<Method for Producing Porous Carbon Sheet>>

The method for producing a porous carbon sheet of the present disclosure includes the step of heating a porous resin sheet to 400°C or higher to carbonize the porous resin sheet to obtain a porous carbon sheet. In the resulting porous carbon sheet, the average pore diameter (L) determined the following formula:

$$L = 4V/A$$

based on the pore volume (V) and BET specific surface area (A) determined by a gas adsorption method is 5 nm or more and 500 nm or less.

<Carbonization>

The heating temperature during carbonization (hereinafter referred to as "carbonization temperature") is preferably 500°C or higher, 600°C or higher, 700°C or higher, 800°C or higher, 900°C or higher, or 1,000°C or higher. The upper limit of the carbonization temperature is not limited, but may be, for example, 2,000°C or lower, 1,500°C or lower, or 1,300°C or lower. When the carbonization temperature is within this range, the shape and pores of the porous resin sheet are less likely to collapse, and it is easy to obtain a porous carbon sheet.

The heating time during carbonization is preferably 30 minutes or more, 40 minutes or more, 50 minutes or more, or 60 minutes or more, and is preferably 300 minutes or less, 180 minutes or less, or 120 minutes or less at the desired carbonization temperature. When the heating time is within this range, the shape and pores of the porous resin sheet are unlikely to collapse, and it is easy to obtain a porous carbon sheet.

Before heating to a desired carbonization temperature, a pre-treatment may be carried out to gradually raise the temperature of the porous resin sheet. In the pre-treatment, the temperature is preferably raised to the desired carbonization temperature at a temperature rise rate of 1°C/min or more, 2°C/min or more, or 3°C/min or more, and is preferably 30°C/min or less, 20°C/min or less, or 10°C/min or less. When the temperature rise rate is within this range, the shape and pores of the porous resin sheet are less likely to collapse, and it is easy to obtain a porous carbon sheet.

After keeping the porous resin sheet at a desired carbonization temperature for a desired heating time, a post-treatment may be carried out to gradually drop the temperature of the porous resin sheet. In the post-treatment, the temperature drop rate is preferably 1°C/min or more, 2°C/min or more, or 3°C/min or more, and is preferably 30°C/min or less, 20°C/min or less, or 10°C/min or less. The temperature can be dropped to a desired temperature. When the temperature drop rate is within this range, the shape and pores of the porous resin sheet are less likely to collapse, and it is easy to obtain a porous carbon sheet.

The pre-treatment, carbonization and post-treatment can be carried out under any atmosphere. The pretreatment, carbonization and post-treatment can be carried out, for example, under air or an inert gas, preferably under an inert gas, and more preferably under a nitrogen atmosphere. Under an inert gas, the shape and pores of the porous resin sheet are less likely to collapse, it is easier to obtain a porous carbon sheet, and carbon dioxide emissions can be suppressed.

<Porous Resin Sheet>

The porous resin sheet has heat resistance to the extent that a porous carbon sheet having an average pore diameter (L) of 5 nm or more and 500 nm or less can be obtained by carbonizing the porous resin sheet. To highly control the heat resistance of a porous resin sheet, for example, controlling the molecular structure of the resin is exemplified.

Regarding the average pore diameter (L) of the porous resin sheet, the average pore diameter (L) determined by the following formula:

$$L = 4V/A$$

based on the pore volume (V) and BET specific surface area (A) determined by a gas adsorption method is preferably 5 nm or more and 500 nm or less. The average pore diameter (L) of the porous resin sheet is more preferably 3 nm or more, 4 nm or more, 5 nm or more, 6 nm or more, or 7 nm or more, and is more preferably 300 nm or less, 200 nm or less, or 150 nm or less. When the porous resin sheet is carbonized at 1,100°C for 1 hour, the retention rate of the average pore diameter (L) calculated by the following formula:

Retention rate of average pore diameter (L) = L after carbonization/L before carbonization × 100 (%)

is preferably 60% or more, 70% or more, 75% or more, or 80% or more. When the retention rate of the average pore diameter (L) is within this range, it is easier to obtain the porous carbon sheet of the present disclosure.

The bulk density of the porous resin sheet is preferably 0.01 g/cm$^3$ or more and 0.80 g/cm$^3$ or less. The bulk density of the porous resin sheet is preferably 0.05 g/cm$^3$ or more, 0.06 g/cm$^3$ or more, 0.07 g/cm$^3$ or more, 0.08 g/cm$^3$ or more, 0.09 g/cm$^3$ or more, or 0.10 g/cm$^3$ or more, and is preferably 0.80 g/cm$^3$ or less, 0.70 g/cm$^3$ or less, 0.60 g/cm$^3$ or less, 0.50 g/cm$^3$ or less, or 0.40 g/cm$^3$ or less. When the porous resin sheet is carbonized at 1,100°C for 1 hour, the increase rate of the bulk density calculated by the following formula:

Increase rate of bulk density = (bulk density after carbonization - bulk density before carbonization)/bulk density before carbonization × 100 (%)

is preferably 50% or less, 45% or less, or 40% or less. When the increase rate of the bulk density due to carbonization is at this level, it is easier to obtain the porous carbon sheet of the present disclosure.

The BET specific surface area of the porous resin sheet is preferably 10 m$^2$ /g or more and 2,000 m$^2$ /g or less. The BET specific surface area of the porous resin sheet is preferably 10 m$^2$ /g or more, 50 m$^2$ /g or more, 100 m$^2$ /g or more, or 200 m$^2$ /g or more, and is preferably 2,000 m$^2$/g or less, 1,500 m$^2$/g or less, 1,000 m$^2$/g or less, or 800 m$^2$/g or less. When the porous resin sheet is carbonized at 1,100°C for 1 hour, the retention rate of the BET specific surface area calculated by the following formula:

Retention rate of BET specific surface area = BET specific surface area after carbonization/BET specific surface area before carbonization × 100 (%)

is preferably 50% or more, 60% or more, or 65% or more. When the BET specific surface area retention rate is within this range, it is easier to obtain the porous carbon sheet of the present disclosure.

The porous resin sheet is preferably at least one selected from the group consisting of a porous polyimide sheet and a porous polyvinylidene fluoride (PVDF) sheet. By using these porous resin sheets, it is easier to obtain the porous carbon sheet of the present disclosure.

(Porous Polyimide Sheet)

The polyimide constituting the porous polyimide sheet preferably has a molecular chain represented by the following general formula (1):

[Chemical Formula 15]

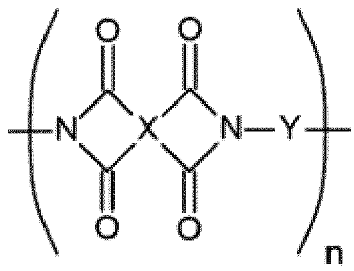

(1)

wherein, in the general formula (1), X is a tetravalent organic group, Y is a divalent organic group, and n is a positive integer. X is derived from tetracarboxylic dianhydride and Y is derived from diamine.

X may have a structure imparting linearity or a structure imparting bendability to a molecular chain of the resulting polyimide. X preferably has a structure imparting linearity to a molecular chain of the resulting polyimide. When X has a structure imparting linearity to a molecular chain of the resulting polyimide, it is possible to control the heat resistance of a porous polyimide sheet at a high level. Preferable examples of X having a structure imparting linearity to the molecular chain of the polyimide and X having a structure imparting flexibility to the molecular chain of the polyimide are the same as those described above as for the fifth aspect.

Y may have a structure imparting linearity or a structure imparting bendability to a molecular chain of the resulting polyimide. Y preferably has a structure imparting linearity to a molecular chain of the resulting polyimide. When Y has a structure imparting linearity to a molecular chain of the resulting polyimide, it is possible to control the heat

resistance of a porous polyimide sheet at a high level. Preferable examples of Y having a structure imparting linearity to the molecular chain of the polyimide and Y having a structure imparting flexibility to the molecular chain of the polyimide are the same as those described above as for the fifth aspect.

Regarding the average pore diameter (L) of the porous resin sheet, the average pore diameter (L) determined by the following formula:

$$L = 4V/A$$

based on the pore volume (V) and BET specific surface area (A) determined by a gas adsorption method is preferably 3 nm or more and 500 nm or less. The average pore diameter (L) of the porous resin sheet is preferably 3 nm or more, 4 nm or more, 5 nm or more, 6 nm or more, or 7 nm or more, and is preferably 500 nm or less, 300 nm or less, 200 nm or less, 100 nm or less, 50 nm or less, 30 nm or less, or 20 nm or less When the porous resin sheet is carbonized at 1,100°C for 1 hour, the retention rate of the average pore diameter (L) calculated by the following formula:

Retention rate of average pore diameter (L) = L after carbonization/L before carbonization × 100 (%)

is preferably 60% or more, 70% or more, 75% or more, or 80% or more. When the retention rate of the average pore diameter (L) is within this range, it is easier to obtain the porous carbon sheet of the present disclosure.

The bulk density of the porous polyimide sheet is preferably 0.01 g/cm$^3$ or more and 0.80 g/cm$^3$ or less. The bulk density of the porous polyimide sheet is preferably 0.01 g/cm$^3$ or more, 0.05 g/cm$^3$ or more, 0.06 g/cm$^3$ or more, 0.07 g/cm$^3$ or more, 0.08 g/cm$^3$ or more, 0.09 g/cm$^3$ or more, 0.10 g/cm$^3$ or more, and is preferably 0.80 g/cm$^3$ or less, 0.70 g/cm$^3$ or less, 0.60 g/cm$^3$ or less, 0.50 g/cm$^3$ or less, or 0.40 g/cm$^3$ or less. When the porous resin sheet is carbonized at 1,100°C for 1 hour, the increase rate of the bulk density calculated by the following formula:

Increase rate of bulk density = (bulk density after carbonization - bulk density before carbonization)/bulk density before carbonization × 100 (%)

is preferably 50% or less, 45% or less, or 40% or less. When the increase rate of the bulk density due to carbonization is at this level, it is easier to obtain the porous carbon sheet of the present disclosure.

The BET specific surface area of the porous polyimide sheet is preferably 10 m$^2$ /g or more and 2,000 m$^2$ /g or less. The BET specific surface area of the porous resin sheet is preferably 10 m$^2$ /g or more, 50 m$^2$ /g or more, 100 m$^2$ /g or more, 200 m$^2$ /g or more, 300 m$^2$ /g or more, or 400 m$^2$ /g or more, and is preferably 2,000 m$^2$ /g or less, 1,500 m$^2$ /g or less, 1,000 m$^2$ /g or less, or 800 m$^2$/g or less. When the porous resin sheet is carbonized at 1,100°C for 1 hour, the retention rate of the BET specific surface area calculated by the following formula:

Retention rate of BET specific surface area = BET specific surface area after carbonization/BET specific surface area before carbonization × 100 (%)

is preferably 50% or more, 60% or more, or 65% or more. When the BET specific surface area retention rate is within this range, it is easier to obtain the porous carbon sheet of the present disclosure.

The method for producing a porous polyimide sheet is not limited, and examples thereof include (1) a method in which a polyamide acid solution is gelled and spread into a sheet, followed by imidization and further removal of the solvent; and (2) a method in which a polyamide acid solution is imidized and spread into a sheet, followed by removal of the solvent. The method for producing a porous polyimide sheet is preferably the method (1), which more preferably includes, for example, the steps of gelling a polyamide acid solution and spreading into a sheet to obtain a polyamide acid wet gel sheet; performing imidization by immersing the resulting polyamide acid wet gel sheet in a solution containing a dehydrating imidization agent to obtain a polyamide wet gel sheet; and removing the solvent from the resulting polyimide wet gel sheet to obtain a porous polyimide sheet. It is particularly preferable that the concentration of the dehydrating imidization agent in the solution in which the polyamide acid wet gel is immersed is 1% by weight or more and 50% by weight or less based on the total weight of the solution. According to the method (1), a porous polyimide can be formed into a sheet while using a monomer having a structure imparting linearity to the molecular chain of the polyimide as X and/or Y, and thus it is easier to produce a porous polyimide sheet with high heat resistance. The method for removing the solvent is not particularly limited as long as it can be dried while maintaining the pore structure of the porous polyimide, but supercritical drying is preferable.

(Porous PVDF Sheet)

The method for producing a porous PVDF sheet is not limited, but examples thereof include a method in which a solution of polyvinylidene fluoride (PVDF) is spread into a sheet and gelled, followed by removal of the solvent. More specifically, examples thereof include a method including dissolving PVDF in an arbitrary solvent and spreading the solution into a sheet to obtain a PVDF gel sheet; subjecting the resulting PVDF gel sheet to dehydrofluorination (dehydrofluorination) under strong alkali conditions to obtain a dehydrofluorinated PVDF gel sheet; and removing the solvent from the resulting dehydrofluorinated PVDF gel sheet to obtain a porous PVDF sheet. The method for removing the solvent is not particularly limited as long as it can be dried while maintaining the pore structure of the porous polyimide, but supercritical drying is preferable.

Regarding the average pore diameter (L) of the porous PDVF sheet, the average pore diameter (L) determined by the following formula:

$$L = 4V/A$$

based on the pore volume (V) and BET specific surface area (A) determined by a gas adsorption method is preferably 3 nm or more and 500 nm or less. The average pore diameter (L) of the porous resin sheet is preferably 3 nm or more, 4 nm or more, 5 nm or more, 6 nm or more, or 7 nm or more, and is preferably 500 nm or less, 300 nm or less, 200 nm or less, or 150 nm or less. When the porous PDVF sheet is carbonized at 1,100°C for 1 hour, the retention rate of the average pore diameter (L) calculated by the following formula:

Retention rate of average pore diameter (L) = L after carbonization/L before carbonization $\times$ 100 (%)

is preferably 60% or more, 70% or more, 75% or more, or 80% or more. When the retention rate of the average pore diameter (L) is within this range, it is easier to obtain the porous carbon sheet of the present disclosure.

The bulk density of the porous PDVF sheet is preferably 0.01 g/cm$^3$ or more and 0.80 g/cm$^3$ or less. The bulk density of the porous PDVF sheet is preferably 0.05 g/cm$^3$ or more, 0.06 g/cm$^3$ or more, 0.07 g/cm$^3$ or more, 0.08 g/cm$^3$ or more, 0.09 g/cm$^3$ or more, or 0.10 g/cm$^3$ or more, and is preferably 0.80 g/cm$^3$ or less, 0.70 g/cm$^3$ or less, 0.60 g/cm$^3$ or less, 0.50 g/cm$^3$ or less, or 0.40 g/cm$^3$ or less. When the porous PDVF sheet is carbonized at 1,100°C for 1 hour, the increase rate of the bulk density calculated by the following formula:

Increase rate of bulk density = (bulk density after carbonization - bulk density before carbonization)/bulk density before carbonization $\times$ 100 (%)

is preferably 50% or less, 45% or less, or 40% or less. When the increase rate of the bulk density due to carbonization is at this level, it is easier to obtain the porous carbon sheet of the present disclosure.

The BET specific surface area of the porous PDVF sheet is preferably 10 m$^2$ /g or more and 2,000 m$^2$ /g or less. The BET specific surface area of the porous PDVF sheet is preferably 10 m$^2$ /g or more, 50 m$^2$ /g or more, 100 m$^2$ /g or more, or 200 m$^2$ /g or more, and is preferably 2,000 m$^2$/g or less, 1,500 m$^2$/g or less, 1,000 m$^2$/g or less, or 800 m$^2$/g or less. When the porous PDVF sheet is carbonized at 1,100°C for 1 hour, the retention rate of the BET specific surface area calculated by the following formula:

Retention rate of BET specific surface area = BET specific surface area after carbonization/BET specific surface area before carbonization $\times$ 100(%)

is preferably 50% or more, 60% or more, or 65% or more. When the BET specific surface area retention rate is within this range, it is easier to obtain the porous carbon sheet of the present disclosure.

< < <Examples of Embodiments of Present Disclosures > >

Examples of embodiments of the present disclosure are listed below.

< <First Aspect> >

[1] A porous polyimide, wherein an average pore size (D) determined by small-angle X-ray scattering is 1.0 nm or

more and 7.0 nm or less.

[2] The porous polyimide according to item 1, wherein, in a range where the size of a scattering vector q of small-angle X-ray scattering is 0.025 $nm^{-1}$ or more and 0.075 $nm^{-1}$ or less, when a logarithmic value log[I(q)] of a scattering intensity I(q) is differentiated by a logarithmic value log[q] of the scattering vector q, the minimum value of a differential coefficient is -1.0 or more and 0.0 or less.

[3] The porous polyimide according to item 1 or 2, wherein an average pore diameter (L) determined by the following formula:

$$L = 4V/A$$

based on a pore volume (V) and a BET specific surface area (A) determined by a gas adsorption method is 5 nm or more and 500 nm or less.

[4] The porous polyimide according to any one of items 1 to 3, wherein a bending elastic modulus in a three-point bending test is 100 MPa or more.

[5] The porous polyimide according to any one of items 1 to 4, wherein a bending elastic modulus in a three-point bending test is 200 MPa or more.

[6] The porous polyimide according to any one of items 1 to 5, wherein a bending strength in a three-point bending test is 5 MPa or more.

[7] The porous polyimide according to any one of items 1 to 6, wherein a bending strength in a three-point bending test is 10 MPa or more.

[8] The porous polyimide according to any one of items 1 to 7, wherein a bulk density is 0.05 $g/cm^3$ or more and 0.50 $g/cm^3$ or less.

[9] The porous polyimide according to any one of items 1 to 8, wherein a BET specific surface area is 100 $m^2$ /g or more and 2,000 $m^2$ /g or less.

[10] The porous polyimide according to any one of items 1 to 9, which has a sheet shape.

[11] The porous polyimide according to item 10, wherein an average thickness is 10 mm or less.

[12] The porous polyimide according to any one of items 1 to 11, wherein a polyimide constituting the porous polyimide has a polyimide main skeleton and a crosslinked structure that crosslinks the polyimide main skeleton.

[13] The porous polyimide according to item 12, wherein the crosslinked structure is a structure by a tri- or higher-valent group derived from an optionally substituted monocyclic or polycyclic aromatic ring, or a tri- or higher-valent group derived from a linked aromatic ring in which a plurality of optionally substituted aromatic rings are linked to each other by direct binding or by binding via a hetero atom.

[14] The porous polyimide according to item 12 or 13, wherein the polyimide main skeleton has a structure represented by the following general formula (1):

[Chemical Formula 16]

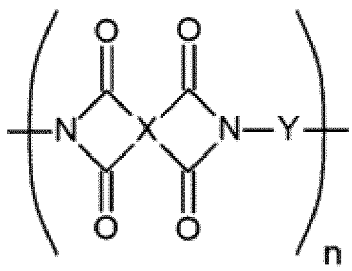

(1)

wherein

X is a tetravalent organic group,

Y is a divalent organic group, in which,

X is a tetravalent group derived from an optionally substituted monocyclic or polycyclic aromatic ring, or a tetravalent group derived from a linked aromatic ring in which a plurality of optionally substituted aromatic rings are linked to each other by direct binding or by binding via a hetero atom, and/or,

Y is a divalent group derived from an optionally substituted monocyclic or polycyclic aromatic ring, or a divalent group derived from a linked aromatic ring in which a plurality of optionally substituted aromatic rings are linked to each other by direct binding or by binding via a hetero atom, and

n is a positive integer, and a degree of polymerization of the polyimide main skeleton is n in the general formula (1).

[15] The porous polyimide according to any one of items 1 to 14, wherein a polyimide constituting the porous polyimide contains a polymerization product of a polymerization component containing a tetracarboxylic dianhydride, a diamine, and a tri- or higher-functional amine, and a ratio of the tri- or higher-functional amine based on 100% by mass in total of the tetracarboxylic dianhydride, the diamine and the tri- or higher-functional amine is 1% by mass or more and 40% by mass or less.

< <Second Aspect>>

[1] A porous polyimide, wherein an average pore diameter (L) determined by the following formula:

$$L = 4V/A$$

based on a pore volume (V) and a BET specific surface area (A) determined by a gas adsorption method is 5 nm or more and 500 nm or less, and
a bending elastic modulus in a three-point bending test is 150 MPa or more.
[2] The porous polyimide according to item 1, wherein the bending elastic modulus in a three-point bending test is 200 MPa or more.
[3] A porous polyimide, wherein an average pore diameter (L) determined by the following formula:

$$L = 4V/A$$

based on a pore volume (V) and a BET specific surface area (A) determined by a gas adsorption method is 5 nm or more and 500 nm or less, and
a bending strength in a three-point bending test is 10 MPa or more.
[4] The porous polyimide according to any one of items 1 to 3, wherein a polyimide constituting the porous polyimide has a polyimide main skeleton and a crosslinked structure that crosslinks the polyimide main skeleton.
[5] A porous polyimide comprising a polyimide main skeleton having an aromatic group in a molecular backbone and a crosslinked structure having an aromatic group in a molecular backbone, wherein

an average pore diameter (L) determined by the following formula:

$$L = 4V/A$$

based on a pore volume (V) and a BET specific surface area (A) determined by a gas adsorption method is 5 nm or more and 500 nm or less, and
a bending elastic modulus in a three-point bending test is 50 MPa or more.

[6] The porous polyimide according to item 4 or 5, wherein the polyimide main skeleton has a structure represented by the following general formula (1):

[Chemical Formula 17]

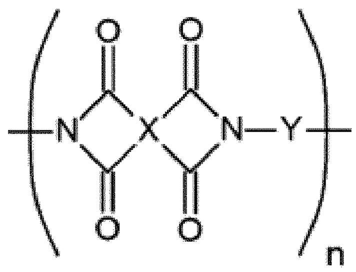

(1)

wherein

X is a tetravalent organic group,
Y is a divalent organic group, in which,
X is a tetravalent group derived from an optionally substituted monocyclic or polycyclic aromatic ring, or a tetravalent group derived from a linked aromatic ring in which a plurality of optionally substituted aromatic rings are linked to each other by direct binding or by binding via a hetero atom, and/or,
Y is a divalent group derived from an optionally substituted monocyclic or polycyclic aromatic ring, or a divalent group derived from a linked aromatic ring in which a plurality of optionally substituted aromatic rings are linked to each other by direct binding or by binding via a hetero atom, and
n is a positive integer.

[7] The porous polyimide according to any one of items 1 to 6, wherein a bulk density is 0.05 g/cm$^3$ or more and 0.80 g/cm$^3$ or less.
[8] The porous polyimide according to any one of items 1 to 7, wherein a BET specific surface area is 10 m$^2$/g or more and 2,000 m$^2$ /g or less.
[9] The porous polyimide according to any one of items 1 to 8, wherein an average thickness is 10 mm or less.
[10] The porous polyimide according to any one of items 1 to 9, wherein, in a polyimide constituting the porous polyimide, a ratio of the number of carbonyl carbon atoms to the total number of carbon atoms is 13.5% or more.

< <Third Aspect> >

[1] A sheet-shaped porous polyimide, wherein an average pore diameter (L) determined by the following formula:

$$L = 4V/A$$

based on a pore volume (V) and a BET specific surface area (A) determined by a gas adsorption method is 5 nm or more and 500 nm or less, and
a BET specific surface area after heat treatment at 300°C for 1 hour is 10 m$^2$ /g or more and 2,000 m$^2$ /g or less.
[2] The porous polyimide according to item 1, wherein a bulk density is 0.05 g/cm$^3$ or more and 0.80 g/cm$^3$ or less.
[3] The porous polyimide according to item 1 or 2, wherein, in a polyimide constituting the porous polyimide, a ratio of the number of carbonyl carbon atoms to the total number of carbon atoms is 13.5% or more.
[4] The porous polyimide according to any one of items 1 to 3, wherein an average thickness is 10 mm or less.
[5] The porous polyimide according to any one of items 1 to 4, wherein a polyimide constituting the porous polyimide has a polyimide main skeleton and a crosslinked structure that crosslinks the polyimide main skeleton.
[6] The porous polyimide according to item 5, wherein the polyimide main skeleton has a structure represented by the following general formula (1):

[Chemical Formula 18]

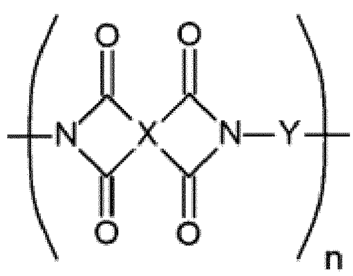

(1)

wherein

X is a tetravalent organic group,
Y is a divalent organic group, in which,

X is a tetravalent group derived from an optionally substituted monocyclic or polycyclic aromatic ring, or a tetravalent group derived from a linked aromatic ring in which a plurality of optionally substituted aromatic rings are linked to each other by direct binding or by binding via a hetero atom, and/or,
Y is a divalent group derived from an optionally substituted monocyclic or polycyclic aromatic ring, or a divalent group derived from a linked aromatic ring in which a plurality of optionally substituted aromatic rings are linked to each other by direct binding or by binding via a hetero atom, and n is a positive integer.

[7] The porous polyimide according to item 5 or 6, wherein the crosslinked structure is a tri- or higher-valent group derived from an optionally substituted monocyclic or polycyclic aromatic ring, or a tri- or higher-valent group derived from a linked aromatic ring in which a plurality of optionally substituted aromatic rings are linked to each other by direct binding or by binding via a hetero atom.
[8] The porous polyimide according to any one of items 1 to 7, wherein a polyimide constituting the porous polyimide is a polymerization product of a polymerization component containing a tetracarboxylic dianhydride, a diamine, and a tri- or higher-functional amine, and
a ratio of the tri- or higher-functional amine based on 100% by mass in total of the tetracarboxylic dianhydride, the diamine and the tri- or higher-functional amine is 1% by mass or more and 40% by mass or less.

< <Fourth Aspect> >

[1] A polyimide wet gel, wherein, when qI(q) obtained by multiplying the scattering intensity I(q) by q is plotted against the scattering vector q of small-angle X-ray scattering, qI(q) has a maximum value in a range of $0.04\ nm^{-1} < q < 2.0\ nm^{-1}$, and an average pore size $D_w$ calculated from the peak position of qI(q) is 0.8 nm or more and 8.0 nm or less.
[2] The porous polyimide according to item 1, wherein, in a range where the size of a scattering vector q of small-angle X-ray scattering is $0.080\ nm^{-1}$ or more and $0.12\ nm^{-1}$ or less, when a logarithmic value log[I(q)] of a scattering intensity I(q) is differentiated by a logarithmic value log[q] of the scattering vector q, the minimum value of a differential coefficient is -1.0 or more and 0.0 or less.
[3] The polyimide wet gel according to item 1 or 2, wherein a strain at break in a three-point bending test is 10% or more.
[4] The polyimide wet gel according to any one of items 1 to 3, wherein a polyimide constituting the polyimide wet gel has a molecular chain represented by the following general formula (1):

[Chemical Formula 19]

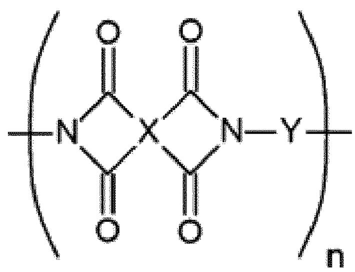

(1)

wherein X is a tetravalent organic group, Y is a divalent organic group and n is a positive integer, X and/or Y in the general formula (1) has/have a structure imparting linearity to the molecular chain, and n is a degree of polymerization of the polyimide.
[5] The polyimide wet gel according to any one of items 1 to 4, wherein a polyimide constituting the polyimide wet gel has a molecular chain represented by the following general formula (1):

[Chemical Formula 20]

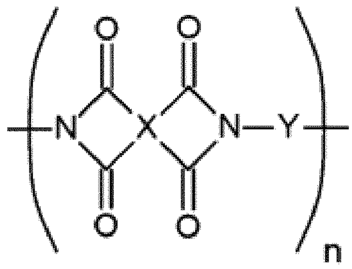 (1)

wherein X is a tetravalent organic group, Y is a divalent organic group and n is a positive integer, a ratio of a structure derived from pyromellitic anhydride to X present in the molecular chain is 50 mol% or more, and the end of the molecular chain is derived from pyromellitic anhydride.

[6] The polyimide wet gel according to any one of items 1 to 5, which has a sheet shape.

[7] The polyimide wet gel according to any one of items 1 to 6, wherein a porous polyimide obtained by subjecting to supercritical carbon dioxide drying after replacing the solvent in the polyimide wet gel with acetone has:

BET specific surface area: 100 $m^2$ /g or more and 2,000 $m^2$ /g or less,
bulk density: 0.05 g/$cm^3$ or more and 0.50 g/$cm^3$ or less,
bending strength: 5 MPa or more,
bending elastic modulus: 100 MPa or more, and
average pore size (D) determined by small-angle X-ray scattering; 1.0 nm or more and 7.0 nm or less.

< <Fifth Aspect> >

[1] A method for producing a polyimide wet gel, which comprises the steps of:

adding a crosslinking agent having three or more functional groups to a polyamide acid solution to obtain a polyamide acid wet gel, and
immersing the polyamide acid wet gel in a solution containing a dehydrating imidization agent to obtain a polyimide wet gel, wherein
the concentration of the dehydrating imidization agent in the solution is 1% by weight or more and 50% by weight or less.

[2] The method according to item 1, wherein the temperature in the step of obtaining a polyamide acid wet gel and the step of obtaining a polyimide wet gel is kept at 10°C or higher.

[3] The method according to item 1 or 2, wherein the temperature of the step of obtaining a polyamide acid wet gel and the step of obtaining a polyimide wet gel is kept at 120°C or lower.

[4] The method according to any one of items 1 to 3, wherein the step of obtaining a polyamide acid wet gel is carried out by spreading a mixture obtained by adding the crosslinking agent having three or more functional groups to the polyamide acid solution into a sheet.

[5] The method according to any one of items 2 to 4, wherein a porous polyimide constituting the polyimide wet gel has a BET specific surface area after heat treatment at 300°C for 1 hour of 10 $m^2$ /g or more and 2,000 $m^2$ /g or less.

[6] The method according to any one of items 1 to 5, wherein a polyimide constituting the polyimide wet gel has a molecular chain represented by the following general formula (1):

[Chemical Formula 21]

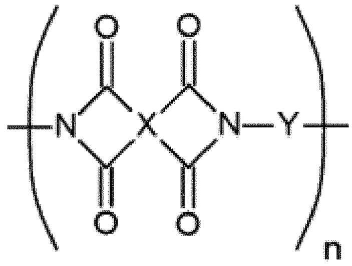

(1)

wherein X is a tetravalent organic group, Y is a divalent organic group and n is a positive integer, X and/or Y in the general formula (1) has/have a structure imparting linearity in the molecular chain, and n is a degree of polymerization of the polyimide.

[7] A method for producing a polyimide wet gel, which comprises the steps of:

obtaining the polyimide wet gel by the method according to any one of items 1 to 6, and
removing the solution from the polyimide wet gel to obtain a porous polyimide.

<<Sixth Aspect>>

[1] A porous carbon sheet, wherein an average pore diameter (L) determined by the following formula:

$$L = 4V/A$$

based on a pore volume (V) and a BET specific surface area (A) determined by a gas adsorption method is 5 nm or more and 500 nm or less.

[2] The porous carbon sheet according to item 1, wherein a bulk density is 0.01 $g/cm^3$ or more and 0.80 $g/cm^3$ or less.

[3] The porous carbon sheet according to item 1 or 2, wherein an average thickness is 10 mm or less.

[4] The porous carbon sheet according to any one of items 1 to 3, wherein a BET specific surface area is 10 $m^2$ or more and 2,000 $m^2$ or less.

[5] A method for producing a porous carbon sheet, which comprises the step of carbonizing a porous resin sheet by heating to 400°C or higher to obtain a porous carbon sheet, wherein
an average pore diameter (L) determined by the following formula:

$$L = 4V/A$$

based on a pore volume (V) and a BET specific surface area (A) determined by a gas adsorption method of the porous carbon sheet is 5 nm or more and 500 nm or less.

[6] The method according to item 5, wherein the porous resin sheet is at least one selected from the group consisting of a porous polyimide sheet and a porous PVDF sheet.

[EXAMPLES]

Hereinafter, exemplary aspects of the present invention will be further described by way of Examples, but the present invention is not limited to these Examples at all.

< < <Example I: First Aspect> > >

<<Measurement and Evaluation Method>>

<Degree of Polymerization (n)>

The degree of polymerization (n) was adjusted based on the molar ratio between the diamine and the acid dianhydride in the polymerization step. In the present disclosure, the diamine: acid dianhydride (molar ratio) in the polymerization step was n: n+ 1 in Examples 1 to 7 and Comparative Examples 2, 5, 6 and 7. In Comparative Examples 1, 3 and 4, the diamine: acid dianhydride (molar ratio) in the polymerization step was n+1: n.

<Measurement of Weight-Average Molecular Weight>

The weight-average molecular weight (Mw) was measured with gel permeation chromatography (GPC) under the following conditions. The solvent here used was N,N-dimethylformamide (for high-performance liquid chromatography, manufactured by Wako Pure Chemical Industries, Ltd.), and this solvent, to which 24.8 mmol/L of lithium bromide monohydrate (purity 99.5%, manufactured by Wako Pure Chemical Industries, Ltd.) and 63.2 mmol/L of phosphoric acid (for high-performance liquid chromatography, manufactured by Wako Pure Chemical Industries, Ltd.) were added before measurement, was used. The calibration curve for calculation of the weight-average molecular weight was created with standard polystyrene (manufactured by Tosoh Corporation).

Column: Shodex KD-806M (manufactured by Showa Denko K.K.)
Flow rate: 1.0 mL/min
Column temperature: 40°C
Pump: PU-2080 Plus (manufactured by JASCO Corporation)
Detector: RI-2031 Plus (RI: differential refractometer, manufactured by JASCO Corporation)
UV-2075 Plus (UV-VIS: ultraviolet-visible spectrometer, manufactured by JASCO Corporation)

<Measurement of Average Pore Size and BET Specific Surface Area of Porous Polyimide>

About 0.2 g of a sample was placed in a glass sample tube, and vacuum deaeration with heating was carried out in a sample pre-treatment apparatus under conditions of 50°C and 0.001 mmHg or less for 18 hours. After vacuum deaeration with heating, the weight of the sample was measured, and used as the weight of the sample in calculation of the specific surface area. The specific surface area was calculated with the intercept and the slope of a line (BET plot) in a range of relative pressure (P/P0) of 0.05 or more and 0.30 or less, according to the BET equation, from a nitrogen gas adsorption isotherm under a liquid nitrogen temperature (77 K), by use of a multi-specimen high-performance specific surface area/pore distribution measuring apparatus (3Flex, manufactured by Micromeritics Corp). The pore volume was derived from the amount of adsorption at 760 mmHg, and the average pore size (L) was calculated by the relational expression of L = 4V/A with the pore volume (V) and the specific surface area (A). The pore distribution was calculated according to the BJH method.

(Three-Point Bending Elastic Modulus and Three-Point Bending Strength of Porous Polyimide)

A sample of 30 mm width × 14 mm depth × about 2 mm thickness cut out from a disc-shaped porous polyimide dried was subjected to a three-point bending test. Measurement conditions were as follows.

Tester: Material tester, Model 5982, manufactured by Instron
Temperature: room temperature (23°C)
Testing speed: 1 mm/min
Supporting span: 20 mm

<Measurement of Strain at Break of Porous Polyimide>

A three-point bending test was carried out under the same conditions as described above, and the porous polyimide was stretched until the porous polyimide was broken. The strain at which a test piece was broken (stress was sharply reduced) was defined as the strain at break. The strain was measured up to 15%, and the strain at break in the case of no breaking was assumed to be "> 15% (more than 15%)".

<Measurement of Bulk Density of Porous Polyimide>

The weight, the radius, and the average thickness of a disc-shaped porous polyimide sample dried were respectively defined as m (g), r (mm), and h (mm), and the bulk density d (g/cm$^3$) was calculated according to the following formula.

$$d = m/\pi hr^2$$

In the formula, the radius r was calculated as one-half the average value obtained by measurement of the diameter 2r with a caliper at 10 positions so that measurement intervals were almost even. The average thickness h was calculated as the average value obtained by measurement in a round surface at 20 positions so that measurement intervals were almost even.

<Small-Angle X-Ray Scattering Measurement>

Referring to FIG. 1, a sample 1, which is a disc-shaped porous polyimide, was cut into sections 1A having a thickness of about 0.5 mm to 1.0 mm using a double-edged razor, and then subjected for measurement. As shown in FIG. 1, the incident direction of X-rays L was set in the cross-sectional direction of the sample 1, and scattering was detected by a detector 2. The measurement was carried out at the synchrotron radiation facility SPring-8 under the following conditions. The measurement environment was room temperature (25°C).

Apparatus: SPring-8, BL03XU beam line second hatch
X-ray wavelength $\lambda$: 0.200 nm
Detector: PILATUS 1M
Camera length 1: 4,255 mm
Exposure time: 1 s
Attenuation plate: 100 $\mu$m thick aluminum plate

In this measurement, the attenuation plate and exposure time are not particularly specified. The incident X-rays were attenuated using an appropriate attenuation plate, and the measurement was carried out under conditions where the sample was not damaged, that is, the SAXS pattern did not change when the sample was repeatedly irradiated with X-rays. For the scattering pattern I(2$\theta$,$\varphi$) measured by a two-dimensional detector, a one-dimensional scattering profile $I_{obs}(2\theta)$ was obtained by circular averaging as shown in the following formula (1):
[Mathematical Formula 11]

$$I_{\mathrm{obs}}(2\theta) = \frac{1}{2\pi P}\int_0^{2\pi} \frac{I(2\theta, \phi)}{\cos^3 2\theta}\mathrm{d}\phi \qquad (1)$$

where

P: Polarization factor
2$\theta$: Scattering angle
$\varphi$: Azimuth angle

The one-dimensional profile calculated by the above formula (1) includes, in addition to scattering derived from the sample, scattering from sources other than the sample, such as window material and air scattering. Therefore, empty cell scattering correction is carried out using the following formula (2):
[Mathematical Formula 12]

$$I(2\theta) = \left[\frac{I_{\mathrm{obs,sample}}(2\theta)}{t_{\mathrm{sample}}T} - \frac{I_{\mathrm{obs,empty}}(2\theta)}{t_{\mathrm{empty}}}\right] \qquad (2)$$

where

$I(2\theta)$: Scattering intensity after empty cell scattering correction
$I_{obs}(2\theta)$: Scattering intensity before correction (circular average profile obtained by formula (1))
t: Measurement time
T: X-ray transmittance of sample

<Method for Calculating Average Pore Size (D)>

Vacancies in the porous body are present at random, and the influence of interference between vacancies is considered to be small. At this time, the scattering intensity I(q) is considered to follow the Guinier law represented by the following formula (3):
[Mathematical Formula 13]

$$I(q) = A\exp\left[-\frac{R_g^2 q^2}{3}\right] \qquad (3)$$

where the scattering vector $q = 4\pi\sin\theta\theta/\lambda$ ($\lambda$: incident X-ray wavelength) (see R. J. Roe, "Method of "X-ray and Neutron Scattering in Polymer Science", Oxford, Oxford University Press (2000)).
Here, A is a constant and $R_g$ is a radius of inertia of a scatterer. When the above formula (3) is established, from the following formula (4):
[Mathematical Formula 14]

$$\frac{d}{dq}\left[q^2 I(q)\right] = 2Aq\left(1 - \frac{R_g^2 q^2}{3}\right)\exp\left[-\frac{R_g^2 q^2}{3}\right] \qquad (4)$$

the point $q_{peak}$ where $q^2$ I(q), which is obtained by multiplying the circular average profile I(q) of the porous polyimide by $q^2$, takes a maximum value, is $q_{peak} = 3^{1/2} / R_g$, and $R_g$ can be estimated from $q_{peak}$.
Average pore size (D) = $3^{1/2}/q_{peak}$ is calculated from the value of the point $q_{peak}$ where $q^2I(q)$ takes a maximum value when $q^2$ I(q) is plotted against q.

<Method for Quantification of Structural Non-Uniformity>

Using the circular average profile of the porous polyimide, dlog[I(q)]/dlog[q] is calculated. Specifically, numerical differentiation is carried out using Igor Pro 8.0 (WaveMetrics Inc.) according to the definition of the following formula (5):
[Mathematical Formula 15]

$$\frac{dlog[I(q_i)]}{dlog[q_i]} = \frac{log[I(q_{i+1})] - log[I(q_{i-1})]}{log[q_{i+1}] - log[q_{i-1}]} \qquad (5)$$

For dlog[I(q)]/dlog[q] thus obtained, the minimum value at $0.025\ nm^{-1} \leq q \leq 0.075\ nm^{-1}$ (minimum differential coefficient value) was calculated and defined as an index of the structural non-uniformity of the porous polyimide.

<<Production Example of Bulk (Thick Sheet)-Shaped and Thin Sheet-Shaped Porous Polyimide>>

[Example 1]

In a 100 mL glass vial, N-methyl-2-pyrrolidone (NMP: 45.5 g) was added to p-phenylenediamine (PPDA: 1.08 g; 10.0 mmol) and dissolved while stirring with a magnetic stirrer, and then powder of pyromellitic anhydride (PMDA: 2.49 g; 11.4 mmol) was added while stirring. This solution was stirred at room temperature (25°C) until the molecular weight was saturated to obtain a polyamide acid (PAA) solution. It was confirmed by gel permeation chromatography measurement that the molecular weight was saturated.

To the polyamide acid (PAA) solution, a solution of 1,3,5-tris(4-aminophenyl)benzene (TAB: 0.335 g; 0.952 mmol) dissolved in 6.4 g of NMP in a separate 10 mL glass vial was added, followed by stirring for 1 minute.

Regarding a bulk-shaped polyamide acid wet gel (PAA-WG), a part of the resulting solution was transferred to a template made of PFA (φ50 mm, depth of 30 mm) so as to have a thickness of about 3 mm, and then left to stand at room temperature (25°C) for about 30 minutes to obtain a polyamide acid wet gel (PAA-WG) having no fluidity.

Regarding a thin sheet-shaped polyamide acid wet gel sheet (PAA-WGs), a part of the resulting solution was coated on a Kapton (registered trademark) film (manufactured by DU PONT-TORAY CO., LTD., 250 mm × 600 mm) using a bar coater (manufactured by Matsuo Sangyo Co., Ltd., bar No. 200, WET film thickness of about 300 μm) (coating area: about 200 mm wide × about 500 mm long). By standing at room temperature (25°C) for 10 minutes, a polyamide acid wet gel sheet (PAA-WGs) was obtained.

The PAA-WG was left to stand at room temperature (25°C) for 24 hours in a closed container made of SUS in an NMP saturated atmosphere, taken out from the template, and then immersed in a mixed solution of acetic anhydride (28.0 g; 274 mmol), triethylamine (3.5 g; 34.3 mmol) and 283 g of NMP at room temperature (25°C) for 24 hours to obtain a polyimide wet gel (PI-WG).

The PAA-WGs was left to stand at room temperature (25°C) for 24 hours in a closed SUS container in an NMP saturated atmosphere, and then immersed in a mixed solution of acetic anhydride (28.0 g; 274 mmol), triethylamine (3.5 g; 34.3 mmol) and 283 g of NMP at room temperature (25°C) for 24 hours to obtain a polyimide wet gel (PI-WGs).

The PI-WG was taken out from the solution, immersed in a solution in acetone:NMP = 1:1 (weight ratio) for 24 hours, repeatedly subjected to washing with acetone and further immersion in acetone for 24 hours three times, and then dried with a supercritical drying apparatus ("SCRD6" manufactured by Rexxam Co., Ltd.) to obtain a porous polyimide (pPI).

After peeling the PAA-WGs from the Kapton film, the solvent replacement and supercritical drying were carried out in the same manner as in PAA-WG to obtain a porous polyimide sheet (pPIs).

[Examples 2 to 7]

The same operation as in Example 1 was carried out by changing the diamine, tetracarboxylic anhydride, crosslinking agent, the amount of imidization reagent, and solvent to those shown in Table 1 in the same manner as in Example 1 to obtain a bulk-shaped porous polyimides (pPI) and thin sheet-shaped porous polyimides (pPIs). Physical properties of the resulting pPI are shown in Table 1.

[Comparative Example 1]

With reference to NPL 1 (ACS Appl. Mater. Interfaces, (2015), 7(2), pp.1240-1249), a bulk-shaped porous polyimide (pPI) was fabricated by the following procedure. In a 100 mL glass vial, N-methyl-2-pyrrolidone (NMP: 45.7 g) was added to 2,2'-dimethylbenzidine (DMBZ: 2.23 g; 10.5 mmol) and dissolved while stirring with a magnetic stirrer, and then powder of 3,3',4,4'-biphenyltetracarboxylic dianhydride (BPDA: 2.94 g; 10.0 mmol) was added, followed by stirring at room temperature (25°C) until the molecular weight was saturated to obtain a polyamide acid (PAA) solution.

Thereafter, acetic anhydride (8.16 g; 80 mmol) was added while stirring the polyamide acid (PAA) solution, followed by stirring until uniformity was achieved. Furthermore, tiethylamine (1.0 g: 10 mmol) was added, followed by stirring until uniformity was achieved and further stirring at room temperature (25°C) for 15 minutes to obtain a polyimide (PI) solution.

To the polyimide (PI) solution, 1,3,5-benzenetricarbonyl chloride (BTC: 89 mg; 0.333 mmol) dissolved in 1.7 g of NMP in a separate 10 mL glass vial was added, followed by stirring until uniformity was achieved. After stirring, a part of the resulting solution was transferred to a template made of PFA (φ50 mm, 30 mm depth) so as to have a thickness of about 3 mm, and then left to stand at room temperature for 120 minutes to obtain a bulk-shaped polyimide wet gel (PI-WG) having no fluidity.

The resulting PI-WG was left to stand at room temperature (25°C) for 24 hours in a closed container made of SUS in an NMP saturated atmosphere and immersed in a solution in acetone:NMP (mass ratio) = 25:75 for 24 hours, a solution in acetone:NMP (mass ratio) = 50:50 for 24 hours, and a solution in acetone:NMP (mass ratio) = 75:25 for 24 hours, respectively, and then repeatedly subjected to washing with acetone and immersion in acetone for 24 hours three times, thus replacing the solvent. This bulk-shaped polyimide wet gel immersed in acetone was dried with the supercritical drying apparatus to obtain a bulk-shaped porous polyimide (pPI).

[Comparative Example 2]

With reference to NPL 5 (ACS Appl. Mater. Interfaces, (2012), 4, pp.536-544), a bulk-shaped porous polyimide pPI was fabricated by the following procedure.

In a 100 mL glass vial, N-methyl-2-pyrrolidone (NMP: 41.6 g) was added to 2,2'-dimethylbenzidine (DMBZ: 2.13 g; 10.0 mmol) and dissolved while stirring with a magnetic stirrer, and then powder of 3,3',4,4'-biphenyltetracarboxylic dianhydride (BPDA: 3.09 g; 10.5 mmol) was added while stirring the solution, followed by stirring at room temperature until the molecular weight was saturated.

Thereafter, while stirring the solution, a solution of 1,3,5-tris(4-aminophenoxy)benzene (TAPB: 0.133 g; 0.333 mmol) dissolved in 10 g of NMP in a separate 20 mL glass vial was added, followed by stirring at room temperature for 10 minutes.

Furthermore, acetic anhydride (8.58 g; 84 mmol) and pyridine (6.64 g; 84 mmol) were added, and after stirring until uniformity was achieved, the solution was transferred to a template made of PFA (φ50 mm, 30 mm depth) so as to have a thickness of about 3 mm, and then left to stand at room temperature for about 30 minutes to obtain a bulk-shaped polyimide wet gel (PI-WG) having no fluidity.

Thereafter, the solvent replacement and supercritical drying were carried out in the same manner as in Comparative Example 1 to obtain a bulk-shaped porous polyimide (pPI). Physical properties of the resulting bulk-shaped porous polyimide (pPI) are shown in Table 2.

[Comparative Example 3]

The same operation as in Comparative Example 1 was carried out by changing the diamine, tetracarboxylic anhydride, crosslinking agent, and the amounts thereof to those shown in Table 2 with reference to NPL 7 (Polymer, (2019), 176, pp.213-226) in the same manner as in Comparative Example 1 to obtain a bulk-shaped porous polyimide. Physical properties of the resulting bulk-shaped porous polyimide (pPI) are shown in Table 2.

[Comparative Example 4]

With reference to NPL 6 (ACS Appl. Mater. Interfaces, (2017), 9, pp.8287-8296), a bulk-shaped porous polyimide (pPI) was fabricated by the following procedure. In a 100 mL glass vial, N-methyl-2-pyrrolidone (NMP: 48 g) was added to 4,4'-oxydianiline (ODA: 1.05 g; 5.25 mmol) and dissolved by stirring with a magnetic stirrer, and then powder of 3,3',4,4'-biphenyltetracarboxylic dianhydride (BPDA: 2.94 g; 10.0 mmol) was added while stirring the solution, followed by stirring at room temperature until the molecular weight was saturated. To the uniform solution, 9,9'-bis(4-aminophenyl)fluorene (BAFL: 1.83 g; 5.25 mmol) was added, followed by stirring at room temperature for 30 minutes.

Thereafter, acetic anhydride (8.15 g; 80 mmol) was added while stirring the solution, followed by stirring until uniformity was achieved. Furthermore, triethylamine (1.0 g; 10 mmol) was added, and after stirring until uniformity was achieved and further stirring at room temperature for 15 minutes, a solution of 1,3,5-benzenetricarbonyltri chloride (BTC: 88 mg; 0.333 mmol) dissolved in 5 g of NMP in a separate 10 mL glass vial was added, followed by stirring at room temperature until uniformity was achieved.

After stirring, the solution was transferred to a template made of PFA (φ50 mm, 30 mm depth) so as to have a thickness of about 3 mm, and left to stand at room temperature for 30 minutes to obtain a bulk-shaped polyimide wet gel (PI-WG) having no fluidity.

Thereafter, the gelation, solvent replacement and supercritical drying were carried out in the same manner as in Comparative Example 1 to obtain a bulk-shaped porous polyimide. Physical properties of the resulting bulk-shaped porous polyimide are shown in Table 2.

[Comparative Example 5]

With reference to NPL 3 (ACS Appl. Mater. Interfaces, (2019), 11, pp.9425-9437), a bulk-shaped porous polyimide was fabricated by the following procedure. In a 100 mL glass vial, N-methyl-2-pyrrolidone (NMP: 45 g) was added to 1,4-bis(4-aminophenoxy)butane (BAP4: 2.04 g; 7.5 mmol) and dissolved by stirring with a magnetic stirrer, and then powder of 3,3',4,4'-biphenyltetracarboxylic dianhydride (BPDA: 3.04 g; 10.33 mmol) was added while stirring the solution, followed by stirring at room temperature for 2 hours. To the uniform solution, 2,2'-dimethylbenzidine (DMBZ: 0.53 g; 2.5 mmol) was added, followed by stirring at room temperature for 30 minutes to obtain a polyamide acid (PAA) solution.

Thereafter, while stirring the polyamide acid (PAA) solution, a solution of 1,3,5-tris(4-aminophenoxy)benzene (TAPB: 0.089 g; 0.222 mmol) dissolved in 6.3 g of NMP in a separate 20 mL glass vial was added, followed by stirring at room temperature for 10 minutes. Furthermore, acetic anhydride (8.44 g; 82.7 mmol) was added, and after stirring until uniformity was achieved, triethylamine (3.13 g; 31 mmol) was added, followed by stirring until uniformity was achieved.

Thereafter, the gelation, solvent replacement and supercritical drying were carried out in the same manner as in Comparative Example 1 to obtain a bulk-shaped porous polyimide. Physical properties of the resulting bulk-shaped porous polyimide are shown in Table 2.

[Comparative Example 6]

With reference to NPL 2 (ACS Appl. Polym. Mater., (2020), 2, pp.2179-2189), a bulk-shaped porous polyimide was fabricated by the following procedure. In a 100 mL glass vial, N-methyl-2-pyrrolidone (NMP: 45 g) was added to 2,2'-dimethylbenzidine (DMBZ: 0.53 g; 2.5 mmol) and dissolved by stirring with a magnetic stirrer, and then powder of 3,3',4,4'-biphenyltetracarboxylic dianhydride (BPDA: 2.99 g; 10.17 mmol) was added while stirring the solution, followed by stirring at 40°C until uniformity was achieved. To the uniform solution, 1,3-bis(4-aminophenoxy)-2,2-dimethylpropane (BAPN: 2.15 g; 7.5 mmol) was added, followed by stirring at 40°C until uniformity was achieved to obtain a polyamide acid (PAA) solution.

Thereafter, while stirring the polyamide acid (PAA) solution, a solution of 1,3,5-tris(4-aminophenoxy)benzene (TAPB: 0.044 g; 0.111 mmol) dissolved in 6.4 g of NMP in a separate 20 mL glass vial was added, followed by stirring at room temperature for 10 minutes. Furthermore, acetic anhydride (8.3 g; 81.3 mmol) was added, and after stirring until uniformity was achieved, triethylamine (2.05 g; 20.3 mmol) was added, followed by stirring until uniformity was achieved.

Thereafter, the gelation, solvent replacement and supercritical drying were carried out in the same manner as in Comparative Example 1 to obtain a bulk-shaped porous polyimide. Physical properties of the resulting bulk-shaped porous polyimide are shown in Table 2.

[Comparative Example 7]

With reference to with reference to PTL 3 (China Patent No. 108203516), a bulk-shaped porous polyimide was fabricated by the following procedure In a 100 mL glass vial, N-methyl-2-pyrrolidone (NMP: 96.8 g) was added to 2,2'-dimethylbenzidine (DMBZ: 2.03 g; 9.55 mmol) and dissolved by stirring with a magnetic stirrer, and then powder of 3,3',4,4'-biphenyltetracarboxylic dianhydride (BPDA: 2.94 g; 10.0 mmol) was added while stirring the solution, followed by stirring at 25°C for 24 hours to obtain a polyamide acid (PAA) solution.

Thereafter, while stirring the polyamide acid (PAA) solution, a solution of 1,3,5-tris(4-aminophenoxy)benzene (TAPB: 0.12 g; 0.3 mmol) dissolved in 3.0 g of NMP in a separate 20 mL glass vial was added, followed by stirring at 25°C for 5 minutes stirring. A parts of the resulting solution was transferred to a template made of PFA (φ50 mm, 30 mm depth) so as to have a thickness of about 3 mm, followed by standing at 25°C for about 60 minutes to obtain a bulk-shaped polyamide acid wet gel (PAA-WG) having no fluidity.

This PAA-WG was left to stand at 60°C for 24 hours in a closed SUS container in an NMP saturated atmosphere, taken out from the template and then immersed in a mixed solution of acetic anhydride (90.0 g; 0.88 mol), pyridine (90 g; 1.14 mol) and 120 g of NMP at -5°C for 8 hours. Thereafter, the temperature of the solution was adjusted to 25°C, followed by standing for 6 hours, temperature rise to 80°C and further standing for 10 hours to obtain a bulk-shaped polyimide wet gel (PI-WG).

This PI-WG was taken out from the solution and repeatedly subjected to washing with ethanol and further immersion in ethanol for 24 hours three times, and then dried with a supercritical drying apparatus ("SCRD6" manufactured by Rexxam Co., Ltd.) to obtain a bulk-shaped porous polyimide (pPI). The conditions for supercritical drying were as follows: temperature of 40°C, pressure of 15 MPa and drying time of 8 hours, with reference to PTL 3. Physical properties of the resulting bulk-shaped porous polyimide are shown in Table 2.

[Table 1]

Table 1: Example I-1

| | | Example 1 | Example 2 | Example 3 | Example 4 | Example 5 | Example 6 | Example 7 |
|---|---|---|---|---|---|---|---|---|
| Diamine | type | PPDA | PPDA | DMBZ | 1,5-DAN | PPDA | 1,5-DAN | TFMB |
| | mmol | 10 | 10 | 10 | 10 | 10 | 10 | 10 |
| | g | 1.08 | 1.08 | 2.12 | 1.58 | 1.08 | 1.58 | 3.2 |
| Acid dianhydride | type | PMDA | PMDA | PMDA | PMDA | PMDA | PMDA | PMDA |
| | mmol | 11.4 | 10.5 | 10.5 | 10.5 | 11 | 10.5 | 11 |
| | g | 2.49 | 2.29 | 2.29 | 2.29 | 2.4 | 2.29 | 2.4 |
| Polymerization solvent | type | NMP | NMP | NMP | NMP | NMP | NMP | NMP |
| | g | 45.5 | 44.1 | 57.9 | 50.7 | 35.3 | 33.7 | 48 |
| Crosslinking agent | type | TAB | TAB | TAB | TAB | TAB | TAB | TAB |
| | mmol | 0.952 | 0.333 | 0.333 | 0.333 | 0.667 | 0.333 | 0.667 |
| | g | 0.335 | 0.117 | 0.117 | 0.117 | 0.234 | 0.117 | 0.234 |
| Crosslinking agent solvent | type | NMP | NMP | NMP | NMP | NMP | NMP | NMP |
| | g | 6.4 | 2.2 | 2.2 | 2.2 | 4.5 | 2.2 | 4.5 |
| Dehydrating agent | type | Acetic anhydride | Acetic anhydride | Acetic anhydride | Acetic anhydride | Acetic anhydride | Acetic anhydride | Acetic anhydride |
| | mmol | 274 | 252 | 252 | 252 | 264 | 252 | 264 |
| | g | 28 | 25.7 | 25.7 | 25.7 | 27 | 25.7 | 27 |
| Amine | type | Triethylamine | Triethylamine | Triethylamine | Triethylamine | Triethylamine | Triethylamine | Triethylamine |
| | mmol | 34.3 | 31.5 | 31.5 | 31.5 | 33 | 31.5 | 33 |
| | g | 3.5 | 3.2 | 3.2 | 3.2 | 3.3 | 3.2 | 3.3 |
| Immersion solvent | type | NMP | NMP | NMP | NMP | NMP | NMP | NMP |
| | g | 283 | 260 | 260 | 260 | 270 | 260 | 270 |
| Concentration of dehydrating imidization agent | % by mass | 10.02 | 10.00 | 10.00 | 10.00 | 10.09 | 10.00 | 10.09 |
| Degree of polymerization n | - | 7 | 20 | 20 | 20 | 10 | 20 | 10 |

(continued)

| Table 1: Example I-1 | | | | | | | | |
|---|---|---|---|---|---|---|---|---|
| | | Example 1 | Example 2 | Example 3 | Example 4 | Example 5 | Example 6 | Example 7 |
| Solid content | % by mass | 7 | 7 | 7 | 7 | 9 | 10 | 10 |
| Average pore diameter | nm | 8.2 | 7.6 | 9.9 | 9.6 | 8.7 | 9.8 | 12.2 |
| Bending elastic modulus | MPa | 759 | 671 | 305 | 245 | 748 | 643 | 408 |
| Bending strength | MPa | 21.4 | 20.1 | 13.1 | 10.1 | 20.4 | 15.7 | 15.1 |
| Strain at break | % | >15 | >15 | >15 | >15 | >15 | >15 | >15 |
| Bulk density | $g/cm^3$ | 0.24 | 0.26 | 0.15 | 0.18 | 0.24 | 0.18 | 0.19 |
| BET specific surface area | $m^2/g$ | 502 | 460 | 702 | 521 | 525 | 535 | 660 |
| Average pore size (D) | nm | 2.7 | 3.6 | 3.2 | 2.7 | 3.6 | 2.8 | 4.8 |
| Minimum value of differential coefficient | - | -0.5 | -0.5 | -0.6 | -0.4 | -0.5 | -0.4 | -0.7 |
| Average thickness | mm | 2.0 | 1.7 | 2.2 | 2.3 | 2.1 | 2.5 | 2.6 |
| BET specific surface area after treatment at 300°C for 1 hour | $m^2/g$ | 486 | 418 | 595 | 460 | 477 | 519 | 648 |

[Table 2]

Table 2: Example I-2

| | | Comparative Example 1 | Comparative Example 2 | Comparative Example 3 | Comparative Example 4 | Comparative Example 5 | Comparative Example 6 | Comparative Example 7 |
|---|---|---|---|---|---|---|---|---|
| Diamine | type | DMBZ | DMBZ | PPDA | ODA/BAFL | BAP4/DMBZ | BAPN/DMBZ | DMBZ |
| | mmol | 10.5 | 10 | 20 | 5.25/5.25 | 7.5/2.5 | 7.5/2.5 | 9.55 |
| | g | 2.23 | 2.123 | 2.16 | 1.05/1.83 | 2.04/0.53 | 2.15/0.53 | 2.03 |
| Acid dianhydride | type | BPDA | BPDA | PMDA | BPDA | BPDA | BPDA | BPDA |
| | mmol | 10 | 10.5 | 10 | 10 | 10.33 | 10.17 | 10 |
| | g | 2.94 | 3.09 | 2.18 | 2.94 | 3.04 | 2.99 | 2.94 |
| Polymerization solvent | type | NMP | NMP | NMP | NMP | NMP | NMP | NMP |
| | g | 45.7 | 41.6 | 31.6 | 51.5 | 45 | 45 | 96.8 |
| Crosslinking agent | type | BTC | TAPB | BTC | BTC | TAPB | TAPB | TAPB |
| | mmol | 0.333 | 0.333 | 0.2 | 0.333 | 0.222 | 0.111 | 0.3 |
| | g | 0.089 | 0.133 | 0.053 | 0.088 | 0.089 | 0.044 | 0.12 |
| Crosslinking agent solvent | type | NMP | NMP | NMP | NMP | NMP | NMP | NMP |
| | g | 1.7 | 6.5 | 8 | 1.7 | 6.3 | 6.4 | 3 |
| Dehydrating agent | type | Acetic anhydride | Acetic anhydride | Acetic anhydride | Acetic anhydride | Acetic anhydride | Acetic anhydride | Acetic anhydride |
| | mmol | 80 | 84 | 80 | 80 | 82.7 | 81.3 | 882 |
| | g | 8.16 | 8.58 | 8.16 | 8.16 | 8.44 | 8.3 | 90 |
| Amine | type | Triethylamine | Pyridine | Pyridine | Triethylamine | Triethylamine | Triethylamine | Pyridine |
| | mmol | 10 | 84 | 80 | 10 | 31 | 20.3 | 1138 |
| | g | 1 | 6.6 | 6.3 | 1 | 3.13 | 2.05 | 90 |
| Immersion solvent | type | - | - | - | - | - | - | NMP |
| | g | - | - | - | - | - | - | 120 |
| Concentration of dehydrating imidization agent | % by mass | - | - | - | - | - | - | 60 |

(continued)

Table 2: Example I-2

| | | Comparative Example 1 | Comparative Example 2 | Comparative Example 3 | Comparative Example 4 | Comparative Example 5 | Comparative Example 6 | Comparative Example 7 |
|---|---|---|---|---|---|---|---|---|
| Degree of polymerization n | - | 20 | 20 | 1 | 20 | 30 | 60 | 20 |
| Solid content | % by mass | 10 | 10 | 10 | 10 | 10 | 10 | 5 |
| Average pore diameter | nm | 12.5 | 13.1 | 14.2 | 7.8 | 18.2 | 19.5 | 9.9 |
| Bending elastic modulus | MPa | 40 | 55 | 58 | 32 | 92 | 128 | 39 |
| Bending strength | MPa | 0.8 | 1.5 | 0.7 | 0.7 | 8 | 9.5 | 1.5 |
| Strain at break | % | 2 | 2.6 | 1.2 | 2.2 | 11 | > 15 | 9.6 |
| Bulk density | $g/cm^3$ | 0.13 | 0.18 | 0.09 | 0.13 | 0.31 | 0.32 | 0.07 |
| BET specific surface area | $m^2/g$ | 550 | 340 | 190 | 430 | 226 | 259 | 390 |
| Average pore size (D) | nm | 13.0 | 25.3 | 20.3 | 8.6 | 18.3 | 16.3 | 32.5 |
| Minimum value of differential coefficient | - | -1.5 | -1.5 | -1.6 | -1.2 | -1.8 | -1.7 | -2 |
| Average thickness | mm | 2.7 | 2.2 | 3 | 2.7 | 1.8 | 1.8 | 2.5 |
| BET specific surface area after treatment at 300°C for 1 hour | $m^2/g$ | <10 | <10 | <10 | <10 | <10 | <10 | <10 |

<<<Example II: Second Aspect>>>

<Evaluation Method>

(Average Pore Diameter of Porous Polyimide)

Measurement was made by the same procedure as in Example I.

(Three-Point Bending Elastic Modulus and Three-Point Bending Strength of Porous Polyimide)

Measurement was made by the same procedure as in Example I.

(Bulk Density of Porous Polyimide)

Measurement was made by the same procedure as in Example I.

(Carbonyl Carbon Mass Ratio)

The ratio of carbonyl carbon to the total carbon in the porous polyimide was calculated from the ratio of the integral value of each solid $^{13}$C-NMR signal.

Solid state NMR measurement conditions:

Apparatus: Bruker Avance NEO 500
Observation nucleus: 13C
Observation frequency: 125.8MHz
Pulse program: hpdec (DDMAS)
Rotation speed : 9kHz or 11kHz
Repeating pulse waiting time: 300 sec
Cumulative number: 500 times
Measurement temperature: Room temperature
Sample tube: 4 mmφ
Shift standard: Glycine = 176.03 ppm
Broadening factor: 50Hz

<Production Porous of Polyimide>

[Example 1]

(Fabrication of Bulk (Thick Sheet)-Shaped Polyamide Acid Wet Gel)

In a 100 mL glass vial, N-methyl-2-pyrrolidone (NMP: 29.0 g) was added to 1,4-phenylenediamine (PPDA: 1.08 g; 10.0 mmol) and dissolved with a magnetic stirrer while stirring, and then powder of pyromellitic anhydride (PMDA: 2.34 g; 11.0 mmol) was added while stirring. After stirring this solution at 25°C for 1 hour, a solution of 1,3,5-tris(4-aminophenyl)benzene (TAB: 0.234 g; 0.667 mmol) dissolved in 4.5 g of NMP in a separate 10 mL glass vial was added, followed by stirring for 1 minute. The resulting solution was transferred to a template made of PFA (φ100 mm, 30 mm depth) so as to have a thickness of about 3 mm, and then left to stand at room temperature for 10 minutes to obtain a bulk-shaped polyamide acid wet gel PAA-WG1 having no fluidity.

(Fabrication of Bulk-Shaped Polyimide Wet Gel)

This PAA-WG1 was left to stand at room temperature for 24 hours in a closed container made of SUS in an NMP saturated atmosphere, taken out from the template, and then immersed in a mixed solution of an acetic anhydride (27.0 g; 264 mmol), triethylamine (3.3 g; 33 mmol) and 270 g of NMP at 25°C for 6 hours to obtain a bulk-shaped polyimide wet gel PI-WG1.

(Fabrication of Bulk-Shaped Porous Polyimide)

Furthermore, PI-WG1 was immersed in a solution in acetone:NMP (mass ratio) = 1:1 for 24 hours, repeatedly subjected to washing with acetone and immersion in acetone for 24 hours three times, and then dried with the supercritical drying apparatus to obtain a bulk-shaped porous polyimide pPI1. Physical properties of the resulting pPI1 are shown in Table 3.

[Examples 2 to 10]

The same operation as in Example 1 was carried out by changing the diamine, tetracarboxylic anhydride, crosslinking agent, imidization agent, solvent, and the addition amounts thereof to those shown in Table 3 in the same manner as in Example 1 to obtain bulk-shaped porous polyimides pPI2 to 10.

[Comparative Example 1]

With reference to NPL 1 (ACS Appl. Mater. Interfaces, (2015), 7, pp.1240-1249), a bulk-shaped porous polyimide pPIr1 was fabricated by the following procedure.

(Preparation of Polyamide Acid)

In a 100 mL glass vial, N-methyl-2-pyrrolidone (NMP: 41 g) was added to 4,4'-oxydianiline (ODA: 2.10 g; 10.5 mmol) while stirring with a magnetic stirrer, and then powder of 3,3',4,4'-biphenyltetracarboxylic dianhydride (BPDA: 2.94 g; 10.0 mmol) was added, followed by stirring at room temperature for 2 hours.

(Imidization and Gelation)

Thereafter, acetic anhydride (8.15 g; 80 mmol) was added while stirring the solution, followed by stirring until uniformity was achieved. Furthermore, triethylamine (1.0 g; 10 mmol) was added, and after stirring until uniformity was achieved and further stirring at room temperature for 15 minutes stirring, and a solution of 1,3,5-benzenetricarbonyltri chloride (BTC: 88 mg; 0.333 mmol) dissolved in 5 g of NMP in a separate 10 mL glass vial was added, followed by stirring at room temperature until uniformity was achieved. After stirring, the solution was transferred to a template made of PFA (φ100 mm, 30 mm depth) so as to have a thickness of about 3 mm, and then left to stand at room temperature for 30 minutes to obtain a bulk-shaped polyimide wet gel PI-WGr1 having no fluidity.

The resulting PI-WGr1 was left to stand at room temperature for 24 hours in a closed container made of SUS in an NMP saturated atmosphere and immersed in a solution in acetone:NMP (mass ratio) = 25:75 for 24 hours, a solution in acetone:NMP (mass ratio) = 50:50 for 24 hours, and a solution in acetone:NMP (mass ratio) = 75:25 for 24 hours, respectively, and then repeatedly subjected to washing with acetone and immersion in acetone for 24 hours three times, thus replacing the solvent. This bulk-shaped polyimide wet gel immersed in acetone was dried with the supercritical drying apparatus to obtain a bulk-shaped porous polyimide pPIr1. Physical properties of the resulting pPIr1 are shown in Table 4.

[Comparative Example 2]

The same operation as in Comparative Example 1 was carried out by changing the diamine, tetracarboxylic anhydride, crosslinking agent, imidization agent, solvent, and the addition amounts thereof to those shown in Table 4 in the same manner as in Comparative Example 1 to obtain a bulk-shaped porous polyimide pPIr2.

[Comparative Example 3]

With reference to NPL 6 (ACS Appl. Mater. Interfaces, (2017), 9, pp.8287-8296), a bulk-shaped porous polyimide pPIr3 was fabricated by the following procedure.

(Preparation of Polyamide Acid)

In a 100 mL glass vial, N-methyl-2-pyrrolidone (NMP: 48 g) was added to 4,4'-oxydianiline (ODA: 1.05 g; 5.25 mmol) and dissolved by stirring with a magnetic stirrer, and then powder of 3,3',4,4'-biphenyltetracarboxylic dianhydride (BPDA: 2.94 g; 10.0 mmol) was added while stirring the solution, followed by stirring at room temperature for 2 hours.

(Imidization and Gelation)

To the uniform solution, 9,9'-bis(4-aminophenyl)fluorene (BAFL: 1.83 g; 5.25 mmol) was added, followed by stirring at room temperature for 30 minutes.
Thereafter, acetic anhydride (8.15 g; 80 mmol) was added while stirring the solution, followed by stirring until uniformity was achieved.
Furthermore, triethylamine (1.0 g; 10 mmol) was added, and after stirring until uniformity was achieved and further stirring at room temperature for 15 minutes, a solution of 1,3,5-benzenetricarbonyltri chloride (BTC: 88 mg; 0.333 mmol) dissolved in 5 g of NMP in a separate 10 mL glass vial was added, followed by stirring at room temperature until uniformity was achieved.
After stirring, the solution was transferred to a template made of PFA (φ100 mm, 30 mm depth) so as to have a thickness of about 3 mm, and then left to stand at room temperature for 30 minutes to obtain a bulk-shaped polyimide wet gel PI-WGr3 having no fluidity.
The solvent replacement and supercritical drying were carried out in the same manner as in Comparative Example 1 to obtain a bulk-shaped porous polyimide pPIr3. Physical properties of the resulting pPIr3 are shown in Table 4.

[Comparative Example 4]

With reference to NPL 5 (ACS Appl. Mater. Interfaces, (2012), 4, pp.536-544), a bulk-shaped porous polyimide pPIr4 was fabricated by the following procedure.

(Preparation of Polyamide Acid)

In a 100 mL glass vial, N-methyl-2-pyrrolidone (NMP: 40.5 g) was added to 4,4'-oxydianiline (ODA: 2.00 g; 10.0 mmol) and dissolved by stirring with a magnetic stirrer, and then powder of 3,3',4,4'-biphenyltetracarboxylic dianhydride (BPDA: 3.09 g; 10.5 mmol) was added while stirring the solution, followed by stirring at room temperature for 2 hours.

(Gelation and Imidization)

Thereafter, a solution of 1,3,5-tris(4-aminophenoxy)benzene (TAPB: 0.133 g; 0.333 mmol) dissolved in 10 g of NMP in a separate 20 mL glass vial was added while stirring the solution, followed by stirring at room temperature for 10 minutes.
Furthermore, acetic anhydride (8.58 g; 84 mmol) and pyridine (6.64 g; 84 mmol) were added, and after stirring until uniformity was achieved, the solution was transferred to a template made of PFA (φ100 mm, 30 mm depth) so as to have a thickness of about 3 mm, and then left to stand at room temperature for 30 minutes to obtain a bulk-shaped polyimide wet gel PI-WGr4 having no fluidity.
The solvent replacement and supercritical drying were carried out in the same manner as in Comparative Example 1 to obtain a bulk-shaped porous polyimide pPIr4. Physical properties of the resulting pPIr4 are shown in Table 4.

[Comparative Example 5]

The same operation as in Comparative Example 1 was carried out by changing the diamine, tetracarboxylic anhydride, crosslinking agent, and the addition amounts thereof to those shown in Table 4 in the same manner as in Comparative Example 4 to obtain a bulk-shaped porous polyimide pPIr5. Physical properties of the resulting pPIr5 are shown in Table 4.

[Comparative Example 6]

The same operation as in Comparative Example 1 was carried out by changing the diamine, tetracarboxylic anhydride, crosslinking agent, and the addition amounts thereof to those shown in Table 4 in the same manner as in Comparative Example 1, with reference to NPL 7 (Polymer, (2019), 176, pp.213-226), to obtain a bulk-shaped porous polyimide pPIr6. Physical properties of the resulting pPIr6 are shown in Table 4.

[Comparative Example 7]

The same operation as in Comparative Example 1 was carried out by changing the diamine, tetracarboxylic anhydride, crosslinking agent, and the addition amounts thereof to those shown in Table 4 in the same manner as in

Comparative Example 1, with reference to NPL 7 (Polymer, (2019), 176, pp.213-226), to obtain a bulk-shaped porous polyimide pPIr7. Physical properties of the resulting pPIr7 are shown in Table 4.

[Comparative Example 8]

With reference to NPL 3 (ACS Appl. Mater. Interfaces, (2019), 11, pp.9425-9437), a bulk-shaped porous polyimide (pPIs) was fabricated by the following procedure. In a 100 mL glass vial, N-methyl-2-pyrrolidone (NMP: 45 g) was added to 1,4-bis(4-aminophenoxy)butane (BAP4: 2.04 g;7.5 mmol) by stirring with a magnetic stirrer and dissolved, and then powder of 3,3',4,4'-biphenyltetracarboxylic dianhydride (BPDA: 3.04 g; 10.33 mmol) was added while stirring the solution, followed by stirring at room temperature for 2 hours. To the uniform solution, 2,2'-dimethylbenzidine (DMBZ: 0.53 g; 2.5 mmol) was added, followed by stirring at room temperature for 30 minutes to obtain a polyamide acid (PAA) solution.

Thereafter, while stirring the polyamide acid (PAA) solution, a solution of 1,3,5-tris(4-aminophenoxy)benzene (TAPB: 0.089 g; 0.222 mmol) dissolved in 6.3 g of NMP in a separate 20 mL glass vial was added, followed by stirring at room temperature for 10 minutes. Furthermore, acetic anhydride (8.44 g; 82.7 mmol) was added, and after stirring until uniformity was achieved, triethylamine (3.13 g; 31 mmol) was added, followed by stirring until uniformity was achieved.

Thereafter, the gelation, solvent replacement and supercritical drying were carried out in the same manner as in Comparative Example 1 to obtain a bulk-shaped porous polyimide (pPIs). Physical properties of the resulting pPIr8 are shown in Table 4.

[Comparative Example 9]

With reference to NPL 2 (ACS Appl. Polym. Mater., (2020), 2, pp.2179-2189), a porous polyimide sheet (pPIs) was fabricated by the following procedure. In a 100 mL glass vial, N-methyl-2-pyrrolidone (NMP: 45 g) was added to 2,2'-dimethylbenzidine (DMBZ: 0.53 g; 2.5 mmol) and dissolved by stirring with a magnetic stirrer, and then powder of 3,3',4,4'-biphenyltetracarboxylic dianhydride (BPDA: 2.99 g; 10.17 mmol) was added while stirring the solution, followed by stirring at 40°C until uniformity was achieved. To the uniform solution, 1,3-bis(4-aminophenoxy)-2,2-dimethylpropane (BAPN: 2.15 g; 7.5 mmol) was added, followed by stirring at 40°C until uniformity was achieved to obtain a polyamide acid (PAA) solution.

Thereafter, while stirring the polyamide acid (PAA) solution, a solution of 1,3,5-tris(4-aminophenoxy)benzene (TAPB: 0.044 g; 0.111 mmol) dissolved in 6.4 g of NMP in a separate 20 mL glass vial was added, followed by stirring at room temperature for 10 minutes. Furthermore, acetic anhydride (8.3 g; 81.3 mmol) was added, and after stirring until uniformity was achieved, triethylamine (2.05 g; 20.3 mmol) was added, followed by stirring until uniformity was achieved.

Thereafter, the gelation, solvent replacement and supercritical drying were carried out in the same manner as in Comparative Example 1 to obtain a bulk-shaped porous polyimide (pPIs). Physical properties of the resulting pPIr9 are shown in Table 4.

[Comparative Example 10]

A bulk-shaped porous polyimide (pPIs) was obtained by the same operation as in Comparative Example 7 of Example I. Physical properties of the resulting pPIrlO are shown in Table 4.

[Table 3]

| Table 3: Example II-1 | | | | | | | | | | | |
|---|---|---|---|---|---|---|---|---|---|---|---|
| | | Example 1 | Example 2 | Example 3 | Example 4 | Example 5 | Example 6 | Example 7 | Example 8 | Example 9 | Example 10 |
| Diamine | | PPDA | | | TMPDA | DMPDA | DMBZ | TFMB | ODA | 1,5-DAN | |
| Diamine classification | | Wholly aromatic | | | | | | | Hetero skeleton-containing | Wholly aromatic | |
| Acid dianhydride | | PMDA | | | | | | | BPDA | PMDA | |
| Acid dianhydride classification | | Simple aromatic | | | | | | | Bent skeleton-containing | Simple aromatic | |
| Crosslinking agent | | TAB | | | | | | | | | |
| Crosslinking agent classification | | Wholly aromatic | | | | | | | | | |
| Polymerization solvent and crosslinking agent solvent | | NMP | | | | | | | | | |
| Dehydrating agent (carboxylic anhydride) | | Acetic anhydride | | | | | | | | | |
| Imidization promotor (amine) | | Triethylamine | | | | | | | | | |
| Immersion solvent | | NMP | | | | | | | | | |
| Degree of polymerization n | (-) | 10 | 20 | 7 | 10 | 10 | 10 | 10 | 10 | 10 | 20 |
| Solid content | (% by weight) | 10 | 10 | 7 | 10 | 10 | 10 | 10 | 10 | 10 | 10 |
| Diamine | (g/mol) | 108.14 | 108.14 | 108.14 | 164.25 | 136.2 | 212.13 | 320.24 | 200.24 | 158.2 | 158.2 |
| | (mmol) | 10 | 10 | 10 | 10 | 10 | 10 | 10 | 10 | 10 | 10 |
| | (g) | 1.08 | 1.08 | 1.08 | 1.64 | 1.36 | 2.12 | 3.2 | 2 | 1.58 | 1.58 |
| Acid dianhydride | (g/mol) | 218.12 | 218.12 | 218.12 | 218.12 | 218.12 | 218.12 | 218.12 | 294.22 | 218.12 | 218.12 |
| | (mmol) | 11 | 10.5 | 11.43 | 11 | 11 | 11 | 11 | 11 | 11 | 10.5 |
| | (g) | 2.4 | 2.29 | 2.49 | 2.4 | 2.4 | 2.4 | 2.4 | 3.24 | 2.4 | 2.29 |

(continued)

Table 3: Example II-1

| | | Example 1 | Example 2 | Example 3 | Example 4 | Example 5 | Example 6 | Example 7 | Example 8 | Example 9 | Example 10 |
|---|---|---|---|---|---|---|---|---|---|---|---|
| Crosslinking agent | (g/mol) | 351.45 | 351.45 | 351.45 | 351.45 | 351.45 | 351.45 | 351.45 | 351.45 | 351.45 | 351.45 |
| | (mmol) | 0.667 | 0.333 | 0.952 | 0.667 | 0.667 | 0.667 | 0.667 | 0.667 | 0.667 | 0.333 |
| | (g) | 0.234 | 0.114 | 0.335 | 0.234 | 0.234 | 0.234 | 0.234 | 0.234 | 0.234 | 0.114 |
| Crosslinking agent solvent | (g) | 4.5 | 2.2 | 6.4 | 4.5 | 4.5 | 4.5 | 4.5 | 4.5 | 4.5 | 2.2 |
| Polymerization solvent | (g) | 29 | 29.2 | 45.6 | 34 | 31.5 | 38.3 | 48 | 44.8 | 33.5 | 33.7 |
| Carboxylic anhydride | (g/mol) | 102.09 | 102.09 | 102.09 | 102.09 | 102.09 | 102.09 | 102.09 | 102.09 | 102.09 | 102.09 |
| | (mmol) | 264 | 252 | 274 | 264 | 264 | 264 | 264 | 264 | 264 | 252 |
| | (g) | 27 | 25.7 | 28 | 27 | 27 | 27 | 27 | 27 | 27 | 25.7 |
| Amine | (g/mol) | 101.09 | 101.09 | 101.09 | 101.09 | 101.09 | 101.09 | 101.09 | 101.09 | 101.09 | 101.09 |
| | (mmol) | 33 | 32 | 34.2 | 33 | 33 | 33 | 33 | 33 | 33 | 32 |
| | (g) | 3.3 | 3.2 | 3.5 | 3.3 | 3.3 | 3.3 | 3.3 | 3.34 | 3.3 | 3.2 |
| Immersion solvent | (g) | 270 | 260 | 280 | 270 | 270 | 270 | 270 | 270 | 270 | 260 |
| Concentration of dehydrating imidization agent | (% by mass) | 10.09 | 10.00 | 10.11 | 10.09 | 10.09 | 10.09 | 10.09 | 10.10 | 10.09 | 10.00 |
| Average pore diameter | (nm) | 8.6 | 9.1 | 8.2 | 7.3 | 7.4 | 16.7 | 12.2 | 13.7 | 9.5 | 9.8 |
| Bending elastic modulus | (MPa) | 785 | 702 | 759 | 629 | 588 | 532 | 408 | 344 | 557 | 643 |
| Bending strength | (MPa) | 22.3 | 20.3 | 21.4 | 19.7 | 17.8 | 15.5 | 15.1 | 14.2 | 15.9 | 15.7 |
| Strain at break | (%) | >15 | >15 | >15 | >15 | >15 | >15 | >15 | >15 | >15 | >15 |
| Bulk density | ($g/cm^3$) | 0.25 | 0.23 | 0.24 | 0.26 | 0.26 | 0.15 | 0.19 | 0.22 | 0.19 | 0.18 |
| BET specific surface area | ($m^2/g$) | 512 | 532 | 502 | 722 | 711 | 782 | 660 | 560 | 510 | 535 |
| Average thickness | (mm) | 2 | 2.1 | 1.9 | 2.2 | 2.2 | 2.8 | 2.6 | 2.5 | 2.6 | 2.5 |
| Average pore size (D) | (nm) | 3.6 | 3.6 | 2.7 | 3.5 | 3.5 | 3.1 | 4.8 | 5.3 | 2.6 | 2.8 |

(continued)

Table 3: Example II-1

| | | Example 1 | Example 2 | Example 3 | Example 4 | Example 5 | Example 6 | Example 7 | Example 8 | Example 9 | Example 10 |
|---|---|---|---|---|---|---|---|---|---|---|---|
| BET specific surface area after treatment at 300°C for 1 hour | ($m^2/g$) | 498 | 519 | 486 | 698 | 692 | 757 | 648 | <10 | 500 | 519 |

[Table 4]

Table 4: Example II-2

| | | Comparative Example 1 | Comparative Example 2 | Comparative Example 3 | Comparative Example 4 | Comparative Example 5 | Comparative Example 6 | Comparative Example 7 | Comparative Example 8 | Comparative Example 9 | Comparative Example 10 |
|---|---|---|---|---|---|---|---|---|---|---|---|
| Diamine | | ODA | DMBZ | ODA/BAFL | ODA | DMBZ | PPDA | | BAP4/DMBZ | BAPN/DMBZ | DMBZ |
| Diamine classification | | Hetero skeleton-containing | Wholly aromatic | Hetero skeleton-containing/aliphatic skeleton-containing | Hetero skeleton-containing | Wholly aromatic | Wholly aromatic | | Aliphatic skeleton-containing | | Wholly aromatic |
| Acid dianhydride | | BPDA | | | | | PMDA | BPDA | | | |
| Acid dianhydride classification | | Bent skeleton-containing | | | | | Simple aromatic | Bent skeleton-containing | | | |
| Crosslinking agent | | BTC | | | TAPB | | BTC | | TAPB | | |
| Crosslinking agent classification | | Wholly aromatic carbonyl chloride | | | Wholly aromatic triamine | | Wholly aromatic carbonyl chloride | | Hetero skeleton-containing | | |
| Polymerization solvent and crosslinking agent solvent | | NMP | | | | | | | | | |
| Dehydrating agent (carboxylic anhydride) | | Acetic anhydride | | | | | | | | | |
| Imidization promotor (amine) | | Triethylamine | | | Pyridine | | | | Triethylamine | | Pyridine |
| Immersion solvent | | - | - | - | - | - | - | - | - | - | NMP |
| Degree of polymerization n | (-) | 20 | 20 | 20 | 20 | 20 | 1 | 20 | 30 | 60 | 20 |
| Solid content | (% by weight) | 10 | 10 | 10 | 10 | 10 | 10 | 10 | 10 | 10 | 5 |
| Diamine | (g/mol) | 200.24 | 212.3 | 200.24/348.45 | 200.24 | 212.3 | 108.14 | 108.14 | 272.35/212.3 | 286.38/212.3 | 212.3 |
| | (mmol) | 10.5 | 10.5 | 5.25/5.25 | 10 | 10 | 20 | 10.5 | 7.5/2.5 | 7.5/2.5 | 9.55 |
| | (g) | 2.1 | 2.23 | 1.05/1.83 | 2 | 2.123 | 2.16 | 1.135 | 2.04/0.53 | 2.15/0.53 | 2.03 |

(continued)

Table 4: Example II-2

| | | Comparative Example 1 | Comparative Example 2 | Comparative Example 3 | Comparative Example 4 | Comparative Example 5 | Comparative Example 6 | Comparative Example 7 | Comparative Example 8 | Comparative Example 9 | Comparative Example 10 |
|---|---|---|---|---|---|---|---|---|---|---|---|
| Acid dianhydride | (g/mol) | 294.22 | 294.22 | 294.22 | 294.22 | 294.22 | 218.12 | 294.22 | 294.22 | 294.22 | 294.22 |
| | (mmol) | 10 | 10 | 10 | 10.5 | 10.5 | 10 | 10 | 10.33 | 10.17 | 10 |
| | (g) | 2.942 | 2.942 | 2.942 | 3.09 | 3.09 | 2.18 | 2.942 | 3.04 | 2.99 | 2.94 |
| Crosslinking agent | (g/mol) | 265.47 | 265.47 | 265.47 | 399.45 | 399.45 | 265.47 | 265.47 | 399.45 | 399.45 | 399.45 |
| | (mmol) | 0.333 | 0.333 | 0.333 | 0.333 | 0.333 | 0.2 | 0.333 | 0.222 | 0.111 | 0.3 |
| | (g) | 0.0885 | 0.0885 | 0.0885 | 0.1332 | 0.1332 | 0.053 | 0.0885 | 0.089 | 0.044 | 0.12 |
| Crosslinking agent solvent | (g) | 1.7 | 1.7 | 1.7 | 6.5 | 6.5 | 8 | 7 | 6.3 | 6.4 | 3 |
| Polymerization solvent | (g) | 44.5 | 45.7 | 51.5 | 40.5 | 41.6 | 31.6 | 31.1 | 45 | 45 | 96.8 |
| Carboxylic anhydride | (g/mol) | 102.09 | 102.09 | 102.09 | 102.09 | 102.09 | 102.09 | 102.09 | 102.09 | 102.09 | 102.09 |
| | (mmol) | 80 | 80 | 80 | 84 | 84 | 80 | 80 | 82.7 | 81.3 | 882 |
| | (g) | 8.16 | 8.16 | 8.16 | 8.58 | 8.58 | 8.16 | 8.16 | 8.44 | 8.3 | 90 |
| Amine | (g/mol) | 101.09 | 101.09 | 101.09 | 79.1 | 79.1 | 79.1 | 79.1 | 101.09 | 101.09 | 79.1 |
| | (mmol) | 10 | 10 | 10 | 84 | 84 | 80 | 80 | 31 | 20.3 | 1138 |
| | (g) | 1.01 | 1.01 | 1.01 | 6.64 | 6.64 | 6.33 | 6.33 | 3.13 | 2.05 | 90 |
| Immersion solvent | (g) | - | - | - | - | - | - | - | - | - | 120 |
| Concentration of dehydrating imidization agent | (% by mass) | - | - | - | - | - | - | - | - | - | 60.00 |
| Average pore diameter | (nm) | 13.2 | 12.5 | 7.8 | 11.2 | 13.1 | 14.2 | 13.6 | 18.2 | 19.5 | 9.9 |
| Bending elastic modulus | (MPa) | 45 | 40 | 32 | 51 | 55 | 58 | 51 | 92 | 128 | 39 |

(continued)

Table 4: Example II-2

| | | Comparative Example 1 | Comparative Example 2 | Comparative Example 3 | Comparative Example 4 | Comparative Example 5 | Comparative Example 6 | Comparative Example 7 | Comparative Example 8 | Comparative Example 9 | Comparative Example 10 |
|---|---|---|---|---|---|---|---|---|---|---|---|
| Bending strength | (MPa) | 0.9 | 0.8 | 0.7 | 1.2 | 1.5 | 0.7 | 1.3 | 8 | 9.5 | 1.5 |
| Strain at break | (%) | 1.9 | 2 | 2.2 | 2.8 | 2.6 | 1.2 | 2.1 | 11 | >15 | 9.6 |
| Bulk density | ($g/cm^3$) | 0.15 | 0.13 | 0.13 | 0.19 | 0.18 | 0.09 | 0.24 | 0.31 | 0.32 | 0.07 |
| BET specific surface area | ($m^2/g$) | 390 | 550 | 430 | 400 | 340 | 190 | 334 | 226 | 259 | 390 |
| Average thickness | (mm) | 2.4 | 2.7 | 2.7 | 2.1 | 2.2 | 3 | 1.9 | 1.8 | 1.8 | 2.5 |
| Average pore size (D) | (nm) | 18.7 | 13 | 8.6 | 21.9 | 25.3 | 20.3 | 17.7 | 18.3 | 16.3 | 32.5 |
| BET specific surface area after treatment at 300°C for 1 hour | ($m^2/g$) | <10 | <10 | <10 | <10 | <10 | <10 | <10 | <10 | <10 | <10 |

According to the respective Examples, a porous polyimide with less deformation from the template during gel formation and excellent toughness was produced. Meanwhile, Comparative Examples 1 to 10 are examples in which gelation is carried out after imidization, and in all of them, the toughness of the porous polyimide was insufficient.

<<<Example III: Third Aspect> > >

<Evaluation Method>

(Average Pore Diameter of Porous Polyimide)

Measurement was made by the same procedure as in Example I.

(Bulk Density of Porous Polyimide)

Measurement was made by the same procedure as in Example I.

(Fabrication of Sample Heat-Treated at 300°C)

The temperature of a porous polyimide (0.2 g) was raised to 300°C at 5°C/min in a vertical curing furnace (manufactured by Koyo Lindberg Co., Ltd., model name VF-2000B) in a nitrogen atmosphere. The temperature was kept for 1 hour, and then the temperature was dropped to 50°C at a rate of 5°C/min to obtain a heat-treated sample.

(Carbonyl Carbon Mass Ratio)

Measurement was made by the same procedure as in Example II.

<Production of Porous Polyimide>

[Example 1]

In the same manner as in Example 1 of Example II, a porous polyimide pPI1 was obtained. Physical properties of the resulting pPI1 are shown in Table 5.

[Examples 2 to 9]

The same operation as in Example 1 was carried out by changing the diamine, tetracarboxylic anhydride, crosslinking agent, imidization agent, solvent, and the addition amounts thereof to those shown in Table 5 in the same manner as in Example 1 to obtain porous polyimides pPI2 to 9.

[Comparative Example 1]

In the same manner as in Comparative Example 1 of Example II, a porous polyimide pPIr1 was fabricated. Physical properties of the resulting pPIr1 are shown in Table 6.

[Comparative Example 2]

The same operation as in Comparative Example 1 was carried out by changing the diamine, tetracarboxylic anhydride, crosslinking agent, imidization agent, solvent, and the addition amounts thereof to those shown in Table 6 in the same manner as in Comparative Example 1 to obtain a porous polyimide pPI2.

[Comparative Example 3]

In the same manner as in Comparative Example 3 of Example II, a porous polyimide pPIr3 was fabricated. Physical properties of the resulting pPIr3 are shown in Table 6.

[Comparative Example 4]

In the same manner as in Comparative Example 4 of Example II, a porous polyimide pPIr4 was fabricated.

Physical properties of the resulting pPIr4 are shown in Table 6.

[Comparative Example 5]

The same operation as in Comparative Example 4 was carried out by changing the diamine, tetracarboxylic anhydride, crosslinking agent, and the addition amounts thereof to those shown in Table 6 in the same manner as in Comparative Example 4 to obtain a porous polyimide pPIr5. Physical properties of the resulting pPIr5 are shown in Table 6.

[Comparative Example 6]

The same operation as in Comparative Example 1 was carried out by changing the diamine, tetracarboxylic anhydride, crosslinking agent, and the addition amounts thereof to those shown in Table 6 in the same manner as in Comparative Example 1, with reference to NPL 7 (Polymer, (2019), 176, pp.213-226), to obtain a porous polyimide pPIr6. Physical properties of the resulting pPIr6 are shown in Table 6.

[Comparative Example 7]

The same operation as in Comparative Example 1 was carried out by changing the diamine, tetracarboxylic anhydride, crosslinking agent, and the addition amounts thereof to those shown in Table 6 in the same manner as in Comparative Example 1, with reference to NPL 7 (Polymer, (2019), 176, pp.213-226), to obtain a porous polyimide pPIr7. Physical properties of the resulting pPIr7 are shown in Table 7.

[Comparative Example 8]

The same operation as in Comparative Example 1 was carried out by changing the diamine, tetracarboxylic anhydride, crosslinking agent, and the addition amounts thereof to those shown in Table 7 in the same manner as in Comparative Example 4, thus making an attempt to obtain a porous polyimide pPIr8.

In a 100 mL glass vial, N-methyl-2-pyrrolidone (NMP: 29.0 g) was added to 1,4-phenylenediamine (PPDA: 1.08 g; 10.0 mmol) and dissolved by stirring with a magnetic stirrer, and then powder of pyromellitic anhydride (PMDA: 2.40 g; 11.0 mmol) was added while stirring the solution.

Thereafter, while stirring the solution, acetic anhydride (8.16 g; 80 mmol) was added while stirring until uniformity was achieved, and then triethylamine (1.0 g; 10 mmol) was added, and as a result, the solution rapidly thickened and stirring became difficult.

[Comparative Example 9]

The same operation as in Comparative Example 1 was carried out by changing the diamine, tetracarboxylic anhydride, crosslinking agent, and the addition amounts thereof to those shown in Table 7 in the same manner as in Comparative Example 4, thus making an attempt to obtain a porous polyimide pPIr9.

In a 100 mL glass vial, N-methyl-2-pyrrolidone (NMP: 38.3 g) was added to 3,3'-dimethylbenzidine (DMBZ:2.12 g; 10.0 mmol) and dissolved by stirring with a magnetic stirrer, and then power of pyromellitic anhydride (PMDA: 2.40 g; 11.0 mmol) was added while stirring the solution.

Thereafter, while stirring the solution, acetic anhydride (8.16 g; 80 mmol) was added while stirring until uniformity was achieved, and then triethylamine (1.0 g; 10 mmol) was added, and as a result, the solution rapidly thickened and stirring became difficult.

[Comparative Example 10]

In the same manner as in Comparative Example 8 of Example II, a porous polyimide sheet (pPIs) was fabricated. However, in heat treatment of pPIs at 300°C, the shape of the sample changed significantly as in Comparative Example 1. Properties of the resulting pPIs and the highly deformed porous polyimide sheet are shown in Table 7.

[Comparative Example 11]

With reference to NPL 2 (ACS Appl. Polym. Mater., (2020), 2, pp.2179-2189), a porous polyimide sheet (pPIs) was fabricated by the following procedure. In a 100 mL glass vial, N-methyl-2-pyrrolidone (NMP: 45 g) was added to 2,2'-dimethylbenzidine (DMBZ: 0.53 g; 2.5 mmol) and dissolved by stirring with a magnetic stirrer, and then powder of 3,3',4,4'-biphenyltetracarboxylic dianhydride (BPDA: 2.99 g; 10.17 mmol) was added while stirring the solution, followed

by stirring at 40°C until uniformity was achieved. To the uniform solution, 1,3-bis(4-aminophenoxy)-2,2-dimethylpropane (BAPN: 2.15 g; 5.5 mmol) was added, followed by stirring at 40°C until uniformity was achieved to obtain a polyamide acid (PAA) solution.

Thereafter, while stirring the polyamide acid (PAA) solution, a solution of 1,3,5-tris(4-aminophenoxy)benzene (TAPB: 0.044 g; 0.111 mmol) dissolved in 6.4 g of NMP in a separate 20 mL glass vial was added, followed by stirring at room temperature for 10 minutes. Furthermore, acetic anhydride (8.3 g; 81.3 mmol) was added, and after stirring until uniformity was achieved, triethylamine (2.05 g; 20.3 mmol) was added, followed by stirring until uniformity was achieved.

Thereafter, the sheet molding, gelation, solvent replacement and supercritical drying were carried out in the same manner as in Comparative Example 1 to obtain a porous polyimide sheet (pPIs). However, in heat treatment of pPIs at 300°C, the shape of the sample changed significantly as in Comparative Example 1. Properties of the resulting pPIs and the highly deformed porous polyimide sheet are shown in Table 7.

[Comparative Example 12]

A porous polyimide sheet (pPIs) was obtained by the same operation as in Comparative Example 7 of Example I. Properties of the resulting porous polyimide sheet are shown in Table 7.

[Table 5]

| Table 5: Example III-1 | | | | | | | | | | |
|---|---|---|---|---|---|---|---|---|---|---|
| | Unit | Example 1 | Example 2 | Example 3 | Example 4 | Example 5 | Example 6 | Example 7 | Example 8 | Example 9 |
| Diamine | | PPDA | | | TMPDA | DMPDA | DMBZ | TFMB | 1,5-DAN | |
| Diamine classification | | Wholly aromatic | | | | | | | | |
| Acid dianhydride | | PMDA | | | | | | | | |
| Acid dianhydride classification | | Simple aromatic | | | | | | | | |
| Crosslinking agent | | TAB | | | | | | | | |
| Crosslinking agent classification | | Wholly aromatic | | | | | | | | |
| Polymerization solvent and crosslinking agent solvent | | NMP | | | | | | | | |
| Dehydrating agent (carboxylic anhydride) | | Acetic anhydride | | | | | | | | |
| Imidization promotor (amine) | | Triethylamine | | | | | | | | |
| Immersion solvent | | NMP | | | | | | | | |
| Degree of polymerization n | - | 10 | 20 | 7 | 10 | 10 | 10 | 10 | 10 | 20 |
| Solid content | % by weight | 10 | 10 | 7 | 10 | 10 | 10 | 10 | 10 | 10 |

(continued)

| Table 5: Example III-1 | | | | | | | | | | |
|---|---|---|---|---|---|---|---|---|---|---|
| | Unit | Example 1 | Example 2 | Example 3 | Example 4 | Example 5 | Example 6 | Example 7 | Example 8 | Example 9 |
| Diamine | mmol | 10 | 10 | 10 | 10 | 10 | 10 | 10 | 10 | 10 |
| | g | 1.08 | 1.08 | 1.08 | 1.64 | 1.36 | 2.12 | 3.2 | 1.58 | 1.58 |
| Acid dianhydride | mmol | 11 | 10.5 | 11.43 | 11 | 11 | 11 | 11 | 11 | 10.5 |
| | g | 2.4 | 2.29 | 2.49 | 2.4 | 2.4 | 2.4 | 2.4 | 2.4 | 2.29 |
| Crosslinking agent | mmol | 0.667 | 0.333 | 0.952 | 0.667 | 0.667 | 0.667 | 0.667 | 0.667 | 0.333 |
| | g | 0.234 | 0.114 | 0.335 | 0.234 | 0.234 | 0.234 | 0.234 | 0.234 | 0.114 |
| Crosslinking agent solvent | g | 4.5 | 2.2 | 6.4 | 4.5 | 4.5 | 4.5 | 4.5 | 4.5 | 2.2 |
| Polymerization solvent | g | 29 | 29.2 | 45.6 | 34 | 31.5 | 38.3 | 48 | 33.5 | 33.7 |
| Carboxylic anhydride | mmol | 264 | 256 | 274 | 264 | 264 | 264 | 264 | 264 | 252 |
| | g | 27 | 26 | 28 | 27 | 27 | 27 | 27 | 27 | 25.7 |
| Amine | mmol | 33 | 32 | 34.2 | 33 | 33 | 33 | 33 | 33 | 32 |
| | g | 3.3 | 3.2 | 3.5 | 3.3 | 3.3 | 3.3 | 3.3 | 3.3 | 3.3 |
| Immersion solvent | g | 270 | 265 | 280 | 270 | 270 | 270 | 270 | 270 | 260 |
| Concentration of dehydrating imidization agent | % by mass | 10.09 | 9.93 | 10.11 | 10.09 | 10.09 | 10.09 | 10.09 | 10.09 | 10.03 |
| Average pore diameter | nm | 8.6 | 9.1 | 8.2 | 7.3 | 7.4 | 16.7 | 12.2 | 9.5 | 9.8 |
| BET specific surface area | $m^2/g$ | 512 | 532 | 502 | 722 | 711 | 782 | 660 | 510 | 535 |
| Bulk density | $g/cm^3$ | 0.25 | 0.23 | 0.24 | 0.26 | 0.26 | 0.15 | 0.19 | 0.19 | 0.18 |
| Average pore diameter after heating at 300°C | nm | 8.4 | 8.7 | 8 | 7.1 | 7.2 | 16.5 | 11.9 | 9.4 | 9.7 |
| BET specific surface area after heating at 300°C | $m^2/g$ | 498 | 519 | 486 | 698 | 692 | 757 | 648 | 500 | 519 |
| Bulk density after heating at 300°C | $g/cm^3$ | 0.25 | 0.23 | 0.24 | 0.26 | 0.26 | 0.15 | 0.19 | 0.19 | 0.18 |
| Average thickness | mm | 2 | 2.1 | 1.9 | 2.2 | 2.2 | 2.8 | 2.6 | 2.6 | 2.5 |
| Average pore size (D) | nm | 3.6 | 3.6 | 2.7 | 3.5 | 3.5 | 3.1 | 4.8 | 2.6 | 2.8 |
| Bending elastic modulus | MPa | 785 | 702 | 759 | 629 | 588 | 532 | 408 | 557 | 643 |

(continued)

| Table 5: Example III-1 | | | | | | | | | | |
|---|---|---|---|---|---|---|---|---|---|---|
| | Unit | Example 1 | Example 2 | Example 3 | Example 4 | Example 5 | Example 6 | Example 7 | Example 8 | Example 9 |
| Bending strength | MPa | 22.3 | 20.3 | 21.4 | 19.7 | 17.8 | 15.5 | 15.1 | 15.9 | 15.7 |

[Table 6]

| Table 6: Example III-2 | | | | | | | |
|---|---|---|---|---|---|---|---|
| | Unit | Comparative Example 1 | Comparative Example 2 | Comparative Example 3 | Comparative Example 4 | Comparative Example 5 | Comparative Example 6 |
| Diamine | | ODA | DMBZ | ODA/BAFL | ODA | DMBZ | PPDA |
| Diamine classification | | Hetero skeleton-containing | Wholly aromatic | Hetero skeleton-containing/aliphatic skeleton-containing | Hetero skeleton-containing | Wholly aromatic | Wholly aromatic |
| Acid dianhydride | | BPDA | | | | | PMDA |
| Acid dianhydride classification | | Bent skeleton-containing | | | | | Simple aromatic |
| Crosslinking agent | | BTC | | | TAPB | | BTC |
| Crosslinking agent classification | | Wholly aromatic carbonyl chloride | | | Wholly aromatic triamine | | Wholly aromatic carbonyl chloride |
| Polymerization solvent and crosslinking agent solvent | | NMP | | | | | |
| Dehydrating agent (carboxylic anhydride) | | Acetic anhydride | | | | | |
| Imidization promotor (amine) | | Triethylamine | | | Pyridine | | |
| Immersion solvent | | - | | | | | |
| Degree of polymerization n | - | 20 | 20 | 20 | 20 | 20 | 1 |
| Solid content | % by weight | 10 | 10 | 10 | 10 | 10 | 10 |

(continued)

| Table 6: Example III-2 | | | | | | | |
|---|---|---|---|---|---|---|---|
| | Unit | Comparative Example 1 | Comparative Example 2 | Comparative Example 3 | Comparative Example 4 | Comparative Example 5 | Comparative Example 6 |
| Diamine | mmol | 10.5 | 10.5 | 5.25/5.25 | 10 | 10 | 20 |
| | g | 2.1 | 2.23 | 1.05/1.83 | 2 | 2.123 | 2.16 |
| Acid dianhydride | mmol | 10 | 10 | 10 | 10.5 | 10.5 | 10 |
| | g | 2.94 | 2.94 | 2.94 | 3.09 | 3.09 | 2.18 |
| Crosslinking agent | mmol | 0.333 | 0.333 | 0.333 | 0.333 | 0.333 | 0.2 |
| | g | 0.0885 | 0.0885 | 0.0885 | 0.1332 | 0.1332 | 0.053 |
| Crosslinking agent solvent | g | 1.68 | 1.68 | 1.68 | 6.52 | 6.52 | 8 |
| Polymerization solvent | g | 44.5 | 45.7 | 51.5 | 40.5 | 41.6 | 31.6 |
| Carboxylic anhydride | mmol | 80 | 80 | 80 | 84 | 84 | 80 |
| | g | 8.16 | 8.16 | 8.16 | 8.58 | 8.58 | 8.16 |
| Amine | mmol | 10 | 10 | 10 | 84 | 84 | 80 |
| | g | 1.01 | 1.01 | 1.01 | 6.64 | 6.64 | 6.33 |
| Immersion solvent | g | - | - | - | - | - | - |
| Concentration of dehydrating imidization agent | % by mass | - | - | - | - | - | - |
| Average pore diameter | nm | 13.2 | 12.5 | 7.8 | 11.2 | 13.1 | 14.2 |
| BET specific surface area | $m^2/g$ | 390 | 550 | 430 | 400 | 340 | 190 |
| Bulk density | $g/cm^3$ | 0.15 | 0.13 | 0.13 | 0.19 | 0.18 | 0.09 |
| Average pore diameter after heating at 300°C | nm | - | - | - | - | - | - |
| BET specific surface area after heating at 300°C | $m^2/g$ | <10 | <10 | <10 | <10 | <10 | <10 |
| bulk density after heating at 300°C | $g/cm^3$ | Impossible to measure | Impossible to measure | Impossible to measure | Impossible to measure | Impossible to measure | Impossible to measure |
| Average thickness | mm | 2.4 | 2.7 | 2.7 | 2.1 | 2.2 | 3 |
| Average pore size (D) | nm | 18.7 | 13 | 8.6 | 21.9 | 25.3 | 20.3 |
| Bending elastic modulus | MPa | 45 | 40 | 32 | 51 | 55 | 58 |

(continued)

Table 6: Example III-2

| | Unit | Comparative Example 1 | Comparative Example 2 | Comparative Example 3 | Comparative Example 4 | Comparative Example 5 | Comparative Example 6 |
|---|---|---|---|---|---|---|---|
| Bending strength | MPa | 0.9 | 0.8 | 0.7 | 1.2 | 1.5 | 0.7 |

[Table 7]

Table 7: Example III-3

| | Unit | Comparative Example 7 | Comparative Example 8 | Comparative Example 9 | Comparative Example 10 | Comparative Example 11 | Comparative Example 12 |
|---|---|---|---|---|---|---|---|
| Diamine | | PPDA | | DMBZ | BAP4/DMBZ | BAPN/DMBZ | DMBZ |
| Diamine classification | | Wholly aromatic | | | Aliphatic skeleton-containing | Aliphatic skeleton-containing | Wholly aromatic |
| Acid dianhydride | | BPDA | PMDA | | BPDA | | |
| Acid dianhydride classification | | Bent skeleton-containing | Simple aromatic | | Bent skeleton-containing | | |
| Crosslinking agent | | BTC | - | | TAPB | | |
| Crosslinking agent classification | | Wholly aromatic | - | | Hetero skeleton-containing | | |
| Polymerization solvent and crosslinking agent solvent | | NMP | | | | | |
| Dehydrating agent (carboxylic anhydride) | | Acetic anhydride | | | | | |
| Imidization promotor (amine) | | Pyridine | Triethylamine | | | | Pyridine |
| Immersion solvent | | - | | | | | NMP |
| Degree of polymerization n | - | 20 | 10 | 10 | 30 | 60 | 20 |
| Solid content | % by weight | 10 | 10 | 10 | 10 | 10 | 5 |
| Diamine | mmol | 10.5 | 10 | 10 | 7.5/2.5 | 7.5/2.5 | 9.55 |
| | g | 1.135 | 1.08 | 2.12 | 2.04/0.53 | 2.15/0.53 | 2.03 |

(continued)

| Table 7: Example III-3 | | | | | | | |
|---|---|---|---|---|---|---|---|
| | Unit | Comparative Example 7 | Comparative Example 8 | Comparative Example 9 | Comparative Example 10 | Comparative Example 11 | Comparative Example 12 |
| Acid dianhydride | mmol | 10 | 11 | 11 | 10.33 | 10.17 | 10 |
| | g | 2.94 | 2.4 | 2.4 | 3.04 | 2.99 | 2.94 |
| Crosslinking agent | mmol | 0.333 | 0.667 | 0.667 | 0.222 | 0.111 | 0.3 |
| | g | 0.1332 | 0.234 | 0.234 | 0.089 | 0.044 | 0.12 |
| Crosslinking agent solvent | g | 7 | - | - | 6.3 | 6.4 | 3 |
| Polymerization solvent | g | 31.1 | 29 | 38.3 | 45 | 45 | 96.8 |
| Carboxylic anhydride | mmol | 80 | 80 | 80 | 82.7 | 81.3 | 882 |
| | g | 8.16 | 8.16 | 8.16 | 8.44 | 8.3 | 90 |
| Amine | mmol | 80 | 10 | 10 | 31 | 20.3 | 1138 |
| | g | 6.33 | 1.01 | 1.01 | 3.13 | 2.05 | 90 |
| Immersion solvent | g | - | - | - | - | - | 120 |
| Concentration of dehydrating imidization agent | % by mass | - | - | - | - | - | 60 |
| Average pore diameter | nm | 13.6 | - | - | 18.2 | 19.5 | 9.9 |
| BET specific surface area | $m^2/g$ | 334 | - | - | 226 | 259 | 390 |
| Bulk density | $g/cm^3$ | 0.24 | - | - | 0.31 | 0.32 | 0.07 |
| Average pore diameter after heating at 300°C | nm | - | - | - | - | - | - |
| BET specific surface area after heating at 300°C | $m^2/g$ | <10 | - | - | <10 | <10 | <10 |
| Bulk density after heating at 300°C | $g/cm^3$ | Impossible to measure | | | Impossible to measure | Impossible to measure | Impossible to measure |
| Average thickness | mm | 1.9 | - | - | 1.8 | 1.8 | 2.5 |
| Average pore size (D) | nm | 17.7 | - | - | 18.3 | 16.3 | 32.5 |
| Bending elastic modulus | MPa | 51 | - | - | 92 | 128 | 39 |
| Bending strength | MPa | 1.3 | - | - | 8 | 9.5 | 1.5 |

According to the respective Examples, a porous polyimide with less deformation from the template during gel formation and pore structure maintained satisfactorily even after heating at 300°C, that is, excellent heat resistance is produced. Meanwhile, Comparative Examples 1 to 11 are examples in which gelation is carried out after imidization, and Comparative Example 12 is an example in which gelation is carried out before imidization, and in all of them, the heat resistance of the porous polyimide was insufficient.

< < <Example IV: Fourth Aspect> > >

<Degree of Polymerization (n)>

Measurement was made by the same procedure as in Example I.

<Small-Angle X-Ray Scattering Measurement>

Referring to FIG. 1, a sample 1, which is a disc-shaped porous polyimide wet gel, was cut into sections 1A having a thickness of about 0.5 mm to 1.0 mm using a double-edged razor, sealed into a close cell and then subjected for measurement. To prevent evaporation of a solvent, when cutting into sections, the sample immersed in a Petri dish filled with the solvent was cut to a thickness of about 1 mm using a razor, and a 30 μm thick cover glass was used as a window material. As shown in FIG. 1, the incident direction of X-rays L was set in the cross-sectional direction of the sample 1, and scattering was detected by a detector 2. The measurement was carried out under the following conditions. The measurement environment was room temperature 25°C.

Apparatus: NANOPIX manufactured by Rigaku Corporation
X-ray wavelength λ: 0.154 nm
Optical system: Point collimation "2PHR" mode (lst: 0.55 mm, 2nd: Open, Guard: 0.35 mm)
Detector: Hypix-6000 (two-dimensional semiconductor detector)
Camera length l: 1,307 mm
Exposure time: 30 min/sample

For the scattering pattern I(2θ,φ) in small-angle X-ray scattering (SAXS) measurement, a one-dimensional scattering profile Iobs(2θ) was obtained by circular averaging as shown in the following formula (a):
[Mathematical Formula 16]

$$I_{\mathrm{obs}}(2\theta) = \frac{1}{2\pi P}\int_0^{2\pi} \frac{I(2\theta, \phi)}{\cos^3 2\theta}\mathrm{d}\phi \qquad \text{(a)}$$

where

P: Polarization factor
2θ: Scattering angle
φ: Azimuth angle

The one-dimensional profile calculated by the above formula (a) includes, in addition to scattering derived from the sample, scattering from sources other than the sample, such as window material and air scattering. Therefore, empty cell scattering correction is carried out using the following formula (b):
[Mathematical Formula 17]

$$I(2\theta) = \left[\frac{I_{obs,\,sample}(2\theta)}{t_{sample}T} - \frac{I_{obs,\,empty}(2\theta)}{t_{empty}}\right] \qquad \text{(b)}$$

where

I(2θ): Scattering intensity after empty cell scattering correction

$I_{obs}$ (2θ): Scattering intensity before correction (circular average profile obtained by formula (a))
t: Measurement time
T: X-ray transmittance of sample

The scattering intensity of the wet gel includes the scattering of the solvent as a background. Solvent scattering is subtracted by the following formula (c):

$$I(q) = I_{gel}(q) - (1-\varphi)I_{solv}(q) \qquad (c)$$

where

$I_{gel}$ (q), $I_{solv}$ (q): Wet gel and solvent after correction of formula (b), Scattering intensity of solvent
φ: Solid volume fraction

<Method for Calculating Average Pore Size ($D_w$ )>

Vacancies in the porous body are present at random, and the influence of interference between vacancies is considered to be small. At this time, the scattering intensity I(q) is considered to follow the Guinier law represented by the following formula (d):
[Mathematical Formula 18]

$$I(q) = A\exp\left[-\frac{R_g^2 q^2}{3}\right] \qquad (d)$$

where the scattering vector q = 4πisinθ/λ (λ: incident X-ray wavelength) (see R. J. Roe, "Method of "X-ray and Neutron Scattering in Polymer Science", Oxford, Oxford University Press (2000)).
Here, A is a constant and $R_g$ is a radius of inertia of a scatterer. When the above formula (d) is established, from the following formula (e):
[Mathematical Formula 19]

$$\frac{d}{dq}[qI(q)] = A\left(1 - \frac{2R_g^2 q^2}{3}\right)\exp\left[-\frac{R_g^2 q^2}{3}\right] \qquad (e)$$

the point $q_{peak}$ where qI(q), which is obtained by multiplying the circular average profile I(q) of the porous polyimide wet gel by q, takes a maximum value, is $q_{peak} = (3/2)^{1/2} / R_g$, and $R_g$ can be estimated from $q_{peak}$ .
Average pore size ($D_w$ ) = $(3/2)^{1/2} / q_{peak}$ is calculated from the value of the point $q_{peak}$ where qI(q) takes a maximum value when qI(q) is plotted against q.

<Method for Quantification of Structural Non-Uniformity>

Using the circular average profile of the porous polyimide wet gel, dlog[I(q)]/dlog[q] is calculated. First, at each measurement point of log[I(q)], smoothing is carried out by moving averaging of ±1 point before and after ("Boxcar" smoothing). That is, when the value after smoothing is $\log[I(qi)]_s$,

$$\log[I(q_i)]_s = (\log[I(q_{i-1})] + \log[I(q_i)] + \log[I(q_{i+1})])/3$$

Using the resulting $\log[I(q_i)]_s$, numerical differentiation is carried out by the following formula (f).
[Mathematical Formula 20]

$$\frac{dlog[I(q_i)]}{dlog[q_i]} = \frac{log[I(q_{i+1})]_s - log[I(q_{i-1})]_s}{log[q_{i+1}] - log[q_{i-1}]} \quad (f)$$

Igor Pro 8.0 (WaveMetrics Inc.) was used for smoothing and numerical differentiation. For the thus obtained dlog[I(q)]/dlog[q], the minimum value at 00.080 $nm^{-1} \leq q \leq 0.12\ nm^{-1}$ was calculated, and the minimum differential coefficient value of the porous polyimide wet gel of the present disclosure was obtained as an index of the structural non-uniformity of the porous polyimide.

<Measurement of Thickness of Polyimide Wet Gel>

In a round surface of the disc-shaped polyimide wet gel, the thickness was measured with a film thickness meter at 20 positions so that measurement intervals were almost even, and the average value was defined as the thickness of the gel.

<Measurement of Strain at Break of Polyimide Wet Gel>

A sample of 30 mm width × 14 mm depth × about 2 mm thickness cut out from a porous polyimide wet gel immersed in a solvent was subjected to a three-point bending test. Measurement conditions were as follows.

Tester: material tester, Model 5982, manufactured by Instron
Temperature: room temperature (23°C)
Testing speed: 1 mm/min
Supporting span: 20 mm
Time from taken out from solvent to test: within 3 minutes

Under the above conditions, the polyimide wet gel was stretched until the polyimide wet gel was broken. The strain at which a test piece was broken (stress was sharply reduced) was defined as the strain at break. The strain was measured up to 15%, and the strain at break in the case of no breaking was assumed to be "> 15% (more than 15%)".

<Wrapping Test of Polyimide Wet Gel Sheet>

A strip-shaped wet gel sheet of 30 mm width × 100 mm depth × about 300 μm thickness cut out from the polyimide NMP wet gel sheet impregnated with NMP was taken out from NMP, and after wrapping around the outer periphery of a rod made of SUS of 30 mm diameter × 200 mm length and maintaining for 5 seconds or more, the wet gel sheet was turned over and wrapped around the rod made of SUS in the same manner. After front and back wrapping as described above, the wet gel sheet was again impregnated with NMP. This front and back wrapping was carried out at 25°C within 3 minutes from the time the wet gel sheet was taken out from NMP until it was impregnated into NMP again after the test. After repeating this operation 10 times, the wet gel sheet was evaluated according to the following evaluation criteria.

(Evaluation Criteria)

A: Neither breakage nor warpage of the sheet was observed.
B: Either partial breakage or warpage of the sheet was observed.,
C: The sheet was broken.

<Evaluation of Transparency of Porous Polyimide Wet Gel>

The transparency of the polyimide wet gel was evaluated according to the following procedure. In other words, a plurality of sheet-shaped samples were placed on a paper surface where any one mark (character or symbol) of 10 mm square was written so as to cover such one character and to make the thickness of the sample 1.0 mm or more. The mark was tried to be viewed from a location of about 30 cm away therefrom with the sample being interposed, and was evaluated according to the following evaluation criteria. The evaluation was carried out under usual indoor light.

(Evaluation criteria)

A: It was possible to confirm the presence of the mark and to discriminate the state of the mark.

B: It was possible to confirm the presence of the mark, but it was impossible to discriminate the state of the mark.

C: It was impossible to confirm the presence of the mark.

<Measurement of BET Specific Surface Area, Bulk Density, Bending Strength, Bending Elastic Modulus, Average Pore Size (D) of Porous Polyimide>

The following bulk-shaped polyimide NMP wet gel (PI-WG-NMP) was immersed in a solution in acetone:NMP = 1:1 (weight ratio) for 24 hours, and then repeatedly subjected to washing with acetone and immersion in acetone for 24 hours three times. The resulting gel was dried with a supercritical drying apparatus ("SCRD6", manufactured by Rexxam Co., Ltd) to obtain a bulk-shaped porous polyimide. This bulk porous polyimide was measured by the same procedure as in Example I.

<<Production of Bulk (Thick Sheet)-Shaped and Thin Sheet-Shaped Polyimide Wet Gel>>

[Example 1]

In a 100 mL glass vial, N-methyl-2-pyrrolidone (NMP: 44.1 g) was added to p-phenylenediamine (PPDA: 1.08 g; 10.0 mmol) and dissolved while stirring with a magnetic stirrer, and then powder of pyromellitic anhydride (PMDA: 2.29 g; 10.5 mmol) was added while stirring the solution. This solution was stirred at room temperature (25°C) for 1 hour to obtain a polyamide acid (PAA) solution.

To the polyamide acid (PAA) solution, a solution of 1,3,5-tris(4-aminophenyl)benzene (TAB: 0.117 g; 0.333 mmol) dissolved in 2.2 g of NMP in a separate 10 mL glass vial was added, followed by stirring for 1 minute to ensure uniformity.

Regarding a bulk-shaped polyamide acid wet gel (PAA-WG), the resulting solution was transferred to a template made of PFA (φ100 mm, 30 mm depth) so as to have a thickness of about 3 mm, and then left to stand at room temperature for 10 minutes to obtain a polyamide acid wet gel PAA-WG1 having no fluidity. Regarding a thin sheet-shaped polyamide acid wet gel sheet (PAA-WGs), the resulting solution was coated on a Kapton (registered trademark) film (manufactured by DU PONT-TORAY CO., LTD., 250 mm × 600 mm) as a base film using a bar coater (manufactured by Matsuo Sangyo Co., Ltd., bar No. 200, WET film thickness of about 300 μm) (coating area: about 200 mm wide × about 500 mm long), followed by standing at room temperature (25°C) for 10 minutes to obtain a thin sheet-shaped polyamide acid wet gel sheet (PI-WGs).

This PAA-WG or PAA-WGs was left to stand at room temperature (25°C) for 24 hours in a closed container made of SUS in an NMP saturated atmosphere, and then immersed in mixed solution of acetic anhydride (25.7 g; 252 mmol), triethylamine (3.2 g; 32 mmol) and 260 g of NMP at 25°C for 72 hours to obtain a bulk-shaped polyimide wet gel (PI-WG) or a thin sheet-shaped polyimide wet gel (PI-WGs).

This PI-WGs was washed with NMP, immersed in NMP for 24 hours, and then repeatedly subjected to washing with NMP and immersion in fresh NMP three times, followed by peeling from the Kapton film to obtain a polyimide NMP wet gel sheet (PI-WGs-NMP). Similarly, PAA-WG was washed with NMP, immersed in NMP for 24 hours, and then repeatedly subjected to washing with NMP and immersion in fresh NMP three times to obtain a bulk-shaped polyimide NMP wet gel (PI-WG-NMP). Physical properties of the resulting PI-WG-NMP and PI-WGs-NMP are shown in Table 8.

[Examples 2 to 6]

The same operation as in Example 1 was carried out by changing the diamine, tetracarboxylic anhydride, crosslinking agent, imidization agent, solvent, and the addition amounts thereof to those shown in Table 8 in the same manner as in Example 1, thus making an attempt to obtain a bulk-shaped polyimide NMP wet gel (PI-WG-NMP) and a polyimide NMP wet gel sheet (PI-WGs-NMP). Physical properties of the resulting PI-WG-NMP and PI-WGs-NMP are shown in Table 8.

[Comparative Example 1]

With reference to NPL 1 (ACS Appl. Mater. Interfaces, (2015), 7(2), pp.1240-1249), a bulk-shaped polyimide NMP wet gel (PI-WG-NMP) and a bulk-shaped polyimide NMP wet gel (PI-WGs-NMP) were fabricated by the following procedure. In a 100 mL glass vial, N-methyl-2-pyrrolidone (NMP: 45.7 g) was added to 2,2'-diaminobenzidine (m-Tolidine; DMBZ: 2.23 g; 10.5 mmol) and dissolved while stirring with a magnetic stirrer, and then powder of 3,3',4,4'-biphenyltetracarboxylic dianhydride (BPDA: 2.942 g; 10.0 mmol) was added, followed by stirring at room temperature (25°C) for 2 hours to obtain a polyamide acid (PAA) solution.

Thereafter, acetic anhydride (8.16 g; 80 mmol) was added while stirring the polyamide acid (PAA) solution, followed by stirring until uniformity was achieved. Furthermore, triethylamine (1.01 g;10 mmol) was added, followed by stirring until uniformity was achieved and further stirring at room temperature (25°C) for 15 minutes stirring to obtain a polyimide (PI) solution.

To the polyimide (PI) solution, a solution of 1,3,5-benzenetricarbonyl trichloride (BTC: 89 mg; 0.333 mmol) dissolved in 1.68 g of NMP in a separate 10 mL glass vial was added, followed by stirring at room temperature for 5 minutes until uniformity was achieved.

Regarding a thin sheet-shaped polyimide wet gels (PI-WGs), the resulting solution was coated on a Kapton (registered trademark) film (manufactured by DU PONT-TORAY CO., LTD., 250 mm × 600 mm) as a base film using a bar coater (manufactured by Matsuo Sangyo Co., Ltd., bar No. 200, WET film thickness of about 300 μm) (coating area: about 200 mm wide × about 500 mm long). Thereafter, the entire coated surface was covered with a plastic container, followed by standing at room temperature (25°C) for 1 hour to obtain a polyimide wet gel sheet (PI-WGs). Regarding a bulk-shaped polyimide wet gel, the resulting solution was transferred to a template made of PFA (φ100 mm, 30 mm depth) so as to have a thickness of about 3 mm, and then left to stand at room temperature for 30 minutes to obtain a bulk-shaped polyimide wet gel (PI-WG).

Thereafter, the solvent replacement was carried out in the same manner as in Example 1 to obtain a thin sheet-shaped polyimide NMP wet gel sheet (PI-WGs-NMP) and a bulk-shaped polyimide NMP wet gel (PI-WG-NMP). Physical properties of the resulting PI-WG-NMP and PI-WGs-NMP are shown in Table 8.

[Comparative Example 2]

With reference to NPL 5 (ACS Appl. Mater. Interfaces, (2012), 4, pp.536-544), a bulk-shaped polyimide NMP wet gel (PI-WG-NMP) and a bulk-shaped polyimide NMP wet gel (PI-WGs-NMP) were fabricated by the following procedure. In a 100 mL glass vial, N-methyl-2-pyrrolidone (NMP: 41.6 g) was added to 2,2'-dimethylbenzidine (DMBZ: 2.13 g; 10.0 mmol) and dissolved by stirring with a magnetic stirrer, and then powder of 3,3',4,4'-biphenyltetracarboxylic dianhydride (BPDA: 3.09 g; 10.5 mmol) was added while stirring the solution, followed by stirring at room temperature until the molecular weight was saturated.

Thereafter, while stirring the solution, a solution of 1,3,5-tris(4-aminophenoxy)benzene (TAPB: 0.133 g; 0.333 mmol) dissolved in 10 g of NMP in a separate 20 mL glass vial was added, followed by stirring at room temperature for 10 minutes. Furthermore, acetic anhydride (8.58 g; 84 mmol) and pyridine (6.64 g; 84 mmol) were added, followed by stirring until uniformity was achieved.

Regarding bulk-shaped polyimide wet gel (PI-WG), the resulting solution was transferred to a template made of PFA (φ50 mm, 30 mm depth) so as to have a thickness of about 3 mm, and then left to stand at room temperature for 30 minutes to obtain a bulk-shaped polyimide wet gel (PI-WG) having no fluidity. Regarding a thin sheet-shaped polyimide wet gels (PI-WGs), the resulting solution was coated on a Kapton (registered trademark) film (manufactured by DU PONT-TORAY CO., LTD., 250 mm × 600 mm) as a base film using a bar coater (manufactured by Matsuo Sangyo Co., Ltd., bar No. 200, WET film thickness of about 300 μm) (coating area: about 200 mm wide × about 500 mm long). Thereafter, the entire coated surface was covered with a plastic container, followed by standing at room temperature (25°C) for 1 hour to obtain a thin sheet-shaped polyimide wet gels (PI-WGs).

Thereafter, the solvent replacement was carried out in the same manner as in Example 1 t obtain a thin sheet-shaped polyimide NMP wet gel sheet (PI-WGs-NMP) and a bulk-shaped polyimide NMP wet gel (PI-WG-NMP). Physical properties of the resulting PI-WG-NMP and PI-WGs-NMP are shown in Table 9.

[Comparative Example 3]

With reference to NPL 1 (ACS Appl. Mater. Interfaces, (2015), 7, pp.1240-1249), a bulk-shaped polyimide NMP wet gel (PI-WG-NMP) and a bulk-shaped polyimide NMP wet gel (PI-WGs-NMP) were fabricated by the following procedure. In a 100 mL glass vial, N-methyl-2-pyrrolidone (NMP: 41 g) was added to 4,4'-oxydianiline (ODA: 2.10 g; 10.5 mmol) and dissolved while stirring with a magnetic stirrer, and then powder of 3,3',4,4'-biphenyltetracarboxylic dianhydride (BPDA: 2.94 g; 10.0 mmol) was added, followed by stirring at room temperature for 2 hours.

Thereafter, acetic anhydride (8.15 g; 80 mmol) was added while stirring the solution, followed by stirring until uniformity was achieved. Furthermore, triethylamine (1.0 g; 10 mmol) was added, and after stirring until uniformity was achieved and stirring at room temperature for 15 minutes, a solution of 1,3,5-benzenetricarbonyltri chloride (BTC: 88 mg; 0.333 mmol) dissolved in 5 g of NMP in a separate 10 mL glass vial was added, followed by stirring at room temperature until uniformity was achieved.

Thereafter, the same operation as in Comparative Example 1 was carried out to obtain a bulk-shaped polyimide NMP wet gel (PI-WG-NMP) and a polyimide NMP wet gel sheet (PI-WGs-NMP). Physical properties of the resulting PI-WG-NMP and PI-WGs-NMP are shown in Table 9.

[Comparative Example 4]

With reference to NPL 6 (ACS Appl. Mater. Interfaces, (2017), 9, pp.8287-8296), a bulk-shaped polyimide NMP wet gel (PI-WG-NMP) and a bulk-shaped polyimide NMP wet gel (PI-WGs-NMP) were fabricated by the following procedure.

In a 100 mL glass vial, N-methyl-2-pyrrolidone (NMP: 48 g) was added to 4,4'-oxydianiline (ODA: 1.05 g; 5.25 mmol) and dissolved by stirring with a magnetic stirrer, and then powder of 3,3',4,4'-biphenyltetracarboxylic dianhydride (BPDA: 2.94 g; 10.0 mmol) was added while stirring the solution, followed by stirring at room temperature for 2 hours. To the uniform solution, 9,9'-bis(4-aminophenyl)fluorene (BAFL: 1.83 g; 5.25 mmol) was added, followed by stirring at room temperature for 30 minutes.

Thereafter, acetic anhydride (8.15 g; 80 mmol) was added while stirring the solution, followed by stirring until uniformity was achieved. Furthermore, triethylamine (1.0 g; 10 mmol) was added, and after stirring until uniformity was achieved and stirring at room temperature for 15 minutes, a solution of 1,3,5-benzenetricarbonyltri chloride (BTC: 88 mg; 0.333 mmol) dissolved in 5 g of NMP in a separate 10 mL glass vial was added, followed by stirring at room temperature until uniformity was achieved.

Thereafter, the same operation as in Comparative Example 1 was carried out to obtain a bulk-shaped polyimide NMP wet gel (PI-WG-NMP) and a polyimide NMP wet gel sheet (PI-WGs-NMP). Physical properties of the resulting PI-WG-NMP and PI-WGs-NMP are shown in Table 9.

[Comparative Example 5]

With reference to NPL 3 (ACS Appl. Mater. Interfaces, (2019), 11, pp.9425-9437), a bulk-shaped polyimide NMP wet gel (PI-WG-NMP) and a bulk-shaped polyimide NMP wet gel (PI-WGs-NMP) were fabricated by the following procedure. In a 100 mL glass vial, N-methyl-2-pyrrolidone (NMP: 45 g) was added to 1,4-bis(4-aminophenoxy)butane (BAP4: 2.04 g; 7.5 mmol) by stirring with a magnetic stirrer, and then powder of 3,3',4,4'-biphenyltetracarboxylic dianhydride (BPDA: 3.04 g; 10.33 mmol) was added while stirring the solution, followed by stirring at room temperature for 2 hours. To the uniform solution, 2,2'-dimethylbenzidine (DMBZ: 0.53 g; 2.5 mmol) was added, followed by stirring at room temperature for 30 minutes to obtain a polyamide acid (PAA) solution.

Thereafter, while stirring the polyamide acid (PAA) solution, a solution of 1,3,5-tris(4-aminophenoxy)benzene (TAPB: 0.089 g; 0.222 mmol) dissolved in 6.3 g of NMP in a separate 20 mL glass vial was added, followed by stirring at room temperature for 10 minutes. Furthermore, acetic anhydride (8.44 g; 82.7 mmol) was added, and after stirring until uniformity was achieved, triethylamine (3.13 g; 31 mmol) was added, followed by stirring until uniformity was achieved.

Thereafter, the sheeting, the molding, gelation, solvent replacement were carried out in the same manner as in Comparative Example 1 to obtain a thin sheet-shaped polyimide NMP wet gel (PI-WGs-NMP) and a bulk-shaped polyimide NMP wet gel (PI-WG-NMP). Physical properties of the resulting thin sheet-shaped polyimide NMP wet gel (PI-WGs-NMP) and bulk-shaped polyimide NMP wet gel (PI-WG-NMP) are shown in Table 9.

[Comparative Example 6]

With reference to NPL 2 (ACS Appl. Polym. Mater., (2020), 2, pp.2179-2189), a bulk-shaped polyimide NMP wet gel (PI-WG-NMP) and a bulk-shaped polyimide NMP wet gel (PI-WGs-NMP) were fabricated by the following procedure. In a 100 mL glass vial, N-methyl-2-pyrrolidone (NMP: 45 g) was added to 2,2'-dimethylbenzidine (DMBZ: 0.53 g; 2.5 mmol) and dissolved by stirring with a magnetic stirrer, and then powder of 3,3',4,4'-biphenyltetracarboxylic dianhydride (BPDA: 2.99 g; 10.17 mmol) was added while stirring the solution, followed by stirring at 40°C until uniformity was achieved. To the uniform solution, 1,3-bis(4-aminophenoxy)-2,2-dimethylpropane (BAPN: 2.15 g; 7.5 mmol) was added, followed by stirring at 40°C until uniformity was achieved to obtain a polyamide acid (PAA) solution.

Thereafter, while the polyamide acid (PAA) solution, a solution of 1,3,5-tris(4-aminophenoxy)benzene (TAPB: 0.044 g; 0.111 mmol) dissolved in 6.4 g of NMP in a separate 20 mL glass vial was added, followed by stirring at room

temperature for 10 minutes. Furthermore, acetic anhydride (8.3 g; 81.3 mmol) was added, and after stirring until uniformity was achieved, triethylamine (2.05 g; 20.3 mmol) was added, followed by stirring until uniformity was achieved.

Thereafter, the sheeting, molding, gelation and solvent replacement were carried out in the same manner as in Comparative Example 1 to obtain a thin sheet-shaped polyimide NMP wet gel (PI-WGs-NMP) and a bulk-shaped polyimide NMP wet gel (PI-WG-NMP). Physical properties of the resulting thin sheet-shaped polyimide NMP wet gel (PI-WGs-NMP) and a bulk-shaped polyimide NMP wet gel (PI-WG-NMP) are shown in Table 9.

[Comparative Example 7]

With reference to PTL 3 (China Patent No. 08203516), a porous polyimide was fabricated by the following procedure. In a 100 mL glass vial, N-methyl-2-pyrrolidone (NMP: 96.8 g) was added to 2,2'-dimethylbenzidine (DMBZ: 2.03 g; 9.55 mmol) was added and dissolved by stirring with a magnetic stirrer, and then powder of 3,3',4,4'-biphenyltetracarboxylic dianhydride (BPDA: 2.94 g; 10.0 mmol) was added while stirring the solution, followed by stirring at 25°C for 24 hours to obtain a polyamide acid (PAA) solution.

Thereafter, while stirring the polyamide acid (PAA) solution, a solution of 1,3,5-tris(4-aminophenoxy)benzene (TAPB: 0.12 g; 0.3 mmol) dissolved in 3.0 g of NMP in a separate 20 mL glass vial was added, followed by stirring at 25°C for 5 minutes.

Regarding a bulk-shaped polyamide acid wet gel (PAA-WG), the resulting solution was transferred to a template made of PFA (φ100 mm, 30 mm depth) so as to have a thickness of about 3 mm, and then left to stand at room temperature for 10 minutes to obtain a bulk-shaped polyamide acid wet gel (PAA-WG) having no fluidity. Regarding a thin sheet-shaped polyamide acid wet gel sheet (PAA-WGs), the resulting solution was coated on a Kapton (registered trademark) film (manufactured by DU PONT-TORAY CO., LTD., 250 mm × 600 mm) using a bar coater (manufactured by Matsuo Sangyo Co., Ltd., bar No. 200, WET film thickness of about 300 μm) (coating area: about 200 mm wide × about 500 mm long). Thereafter, the coated film was left to stand at room temperature (25°C) for 10 minutes to obtain a thin sheet-shaped polyamide acid wet gels (PI-WGs).

This PAA-WG was left stand at 60°C for 24 hours in a closed container made of SUS in an NMP saturated atmosphere, taken out from the template, and then immersed in a mixed solution of acetic anhydride (90.0 g; 0.88 mol), pyridine (90 g; 1.14 mol) and 120 g of NMP at -5°C for 8 hours. Thereafter, the temperature of the solution was adjusted to 25°C, followed by standing for 6 hours, temperature rise to 80°C and further standing for 10 hours to obtain a bulk-shaped polyimide wet gel (PI-WG) or a thin sheet-shaped polyimide wet gels (PI-WGs).

Thereafter, the solvent replacement was carried out in the same manner as in Comparative Example 1 to obtain a thin sheet-shaped polyimide NMP wet gel (PI-WGs-NMP) and a bulk-shaped polyimide NMP wet gel (PI-WG-NMP). Physical properties of the resulting thin sheet-shaped polyimide NMP wet gel (PI-WGs-NMP) and bulk-shaped polyimide NMP wet gel (PI-WG-NMP) are shown in Table 9.

[Table 8]

| Table 8: Example IV-1 | | | | | | | |
|---|---|---|---|---|---|---|---|
| | Unit | Example 1 | Example 2 | Example 3 | Example 4 | Example 5 | Example 6 |
| Diamine | | PPDA | PPDA | 1,5-DAN | PPDA | DMBZ | 1,5-DAN |
| Diamine classification | | Wholly aromatic | Wholly aromatic | Wholly aromatic | Wholly aromatic | Wholly aromatic | Wholly aromatic |
| Acid dianhydride | | PMDA | PMDA | PMDA | PMDA | PMDA | PMDA |
| Acid dianhydride classification | | Simple aromatic | Simple aromatic | Simple aromatic | Simple aromatic | Simple aromatic | Simple aromatic |
| Crosslinking agent | | TAB | TAB | TAB | TAB | TAB | TAB |
| Crosslinking agent classification | | Wholly aromatic | Wholly aromatic | Wholly aromatic | Wholly aromatic | Wholly aromatic | Wholly aromatic |
| Polymerization solvent and crosslinking agent solvent | | NMP | NMP | NMP | NMP | NMP | NMP |

(continued)

| Table 8: Example IV-1 | | | | | | | |
|---|---|---|---|---|---|---|---|
| | Unit | Example 1 | Example 2 | Example 3 | Example 4 | Example 5 | Example 6 |
| Dehydrating agent (carboxylic anhydride) | | Acetic anhydride | Acetic anhydride | Acetic anhydride | Acetic anhydride | Acetic anhydride | Acetic anhydride |
| Imidization promotor (amine) | | Triethyla mine | Triethyla mine | Triethyla mine | Triethyla mine | Triethyla mine | Triethyla mine |
| Immersion solvent | | NMP | NMP | NMP | NMP | NMP | NMP |
| Degree of polymerization n | - | 20 | 7 | 20 | 20 | 20 | 20 |
| Solid content | % by weight | 10 | 7 | 10 | 7 | 7 | 7 |
| Diamine | mmol | 10 | 10 | 10 | 10 | 10 | 10 |
| | g | 1.08 | 1.08 | 1.58 | 1.08 | 2.12 | 1.58 |
| Acid dianhydride | mmol | 10.5 | 11.43 | 10.5 | 10.5 | 10.5 | 10.5 |
| | g | 2.29 | 2.49 | 2.29 | 2.29 | 2.29 | 2.29 |
| Crosslinking agent | mmol | 0.333 | 0.952 | 0.333 | 0.333 | 0.333 | 0.333 |
| | g | 0.114 | 0.335 | 0.114 | 0.117 | 0.117 | 0.117 |
| Crosslinking agent solvent | g | 2.2 | 6.4 | 2.2 | 2.2 | 2.2 | 2.2 |
| Polymerization solvent | g | 29.2 | 45.6 | 33.7 | 44.1 | 57.9 | 50.7 |
| Carboxylic anhydride | mmol | 256 | 274 | 252 | 252 | 252 | 252 |
| | g | 26 | 28 | 25.7 | 25.7 | 25.7 | 25.7 |
| Amine | mmol | 32 | 34.2 | 32 | 31.5 | 31.5 | 31.5 |
| | g | 3.2 | 3.5 | 3.3 | 3.2 | 3.2 | 3.2 |
| Immersion solvent | g | 265 | 280 | 260 | 260 | 260 | 260 |
| Concentration of dehydrating imidization agent | % by mass | 9.93 | 10.11 | 10.03 | 10.00 | 10.00 | 10.00 |
| Average pore size Dw | nm | 4.3 | 2.9 | 3.1 | 3.8 | 3.9 | 3.8 |
| Minimum value of differential coefficient | - | -0.23 | -0.72 | -0.22 | -0.07 | -0.43 | -0.25 |
| Strain at break | % | >15 | >15 | >15 | >15 | >15 | >15 |
| Wrapping test | - | A | A | A | A | A | A |
| Transparency | - | A | A | A | A | A | A |

[Table 9]

Table 9: Example IV-2

| | Unit | Comparative Example 1 | Comparative Example 2 | Comparative Example 3 | Comparative Example 4 | Comparative Example 5 | Comparative Example 6 | Comparative Example 7 |
|---|---|---|---|---|---|---|---|---|
| Diamine | | DMBZ | DMBZ | ODA | ODA/BAFL | BAP4/DMBZ | BAPN/DMBZ | DMBZ |
| Diamine classification | | Wholly aromatic | Wholly aromatic | Hetero skeleton-containing | Hetero skeleton-containing/ Aliphatic skeleton-containing | Aliphatic skeleton-containing | Aliphatic skeleton-containing | Wholly aromatic |
| Acid dianhydride | | BPDA | BPDA | BPDA | BPDA | BPDA | BPDA | BPDA |
| Acid dianhydride classification | | Bent skeleton-containing | Bent skeleton-containing | Bent skeleton-containing | Bent skeleton-containing | Bent skeleton-containing | Bent skeleton-containing | Bent skeleton-containing |
| Crosslinking agent | | BTC | TAPB | BTC | BTC | TAPB | TAPB | TAPB |
| Crosslinking agent classification | | Wholly aromatic carbonyl chloride | Hetero skeleton-containing | Wholly aromatic carbonyl chloride | Wholly aromatic carbonyl chloride | Hetero skeleton-containing | Hetero skeleton-containing | Hetero skeleton-containing |
| Polymerization solvent and crosslinking agent solvent | | NMP | NMP | NMP | NMP | NMP | NMP | NMP |
| Dehydrating agent (carboxylic anhydride) | | Acetic anhydride | Acetic anhydride | Acetic anhydride | Acetic anhydride | Acetic anhydride | Acetic anhydride | Acetic anhydride |
| Imidization promotor (amine) | | Triethylamine | Pyridine | Triethylamine | Triethylamine | Triethylamine | Triethylamine | Pyridine |
| Immersion solvent | | - | - | - | - | - | - | NMP |
| Degree of polymerization n | - | 20 | 20 | 20 | 20 | 30 | 60 | 20 |
| Solid content | % by weight | 10 | 10 | 10 | 10 | 10 | 10 | 5 |
| Diamine | mmol | 10.5 | 10 | 10.5 | 5.25/5.25 | 7.5/2.5 | 7.5/2.5 | 9.55 |
| | g | 2.23 | 2.123 | 2.1 | 1.05/1.83 | 2.04/0.53 | 2.15/0.53 | 2.03 |

(continued)

| Table 9: Example IV-2 | | | | | | | | |
|---|---|---|---|---|---|---|---|---|
| | Unit | Comparative Example 1 | Comparative Example 2 | Comparative Example 3 | Comparative Example 4 | Comparative Example 5 | Comparative Example 6 | Comparative Example 7 |
| Acid dianhydride | mmol | 10 | 10.5 | 10 | 10 | 10.33 | 10.17 | 10 |
| | g | 2.94 | 3.09 | 2.94 | 2.94 | 3.04 | 2.99 | 2.94 |
| Crosslinking agent | mmol | 0.333 | 0.333 | 0.333 | 0.333 | 0.222 | 0.111 | 0.3 |
| | g | 0.0885 | 0.1332 | 0.0885 | 0.0885 | 0.089 | 0.044 | 0.12 |
| Crosslinking agent solvent | g | 1.68 | 6.52 | 1.68 | 1.68 | 6.3 | 6.4 | 3 |
| Polymerization solvent | g | 45.7 | 41.6 | 44.5 | 51.5 | 45 | 45 | 96.8 |
| Carboxylic anhydride | mmol | 80 | 84 | 80 | 80 | 82.7 | 81.3 | 882 |
| | g | 8.16 | 8.58 | 8.16 | 8.16 | 8.44 | 8.3 | 90 |
| Amine | mmol | 10 | 84 | 10 | 10 | 31 | 20.3 | 1138 |
| | g | 1.01 | 6.64 | 1.01 | 1.01 | 3.13 | 2.05 | 90 |
| Immersion solvent | g | - | - | - | - | - | - | 120 |
| Concentration of dehydrating imidization agent | % by mass | - | - | - | - | - | - | 60 |
| Average pore size Dw | nm | No peak | No peak | No peak | No peak | No peak | No peak | No peak |
| Minimum value of differential coefficient | - | -1.91 | -2.55 | -1.77 | -1.6 | -2.19 | -2.37 | -2.91 |
| Strain at break | % | 1.9 | 2.7 | 2.5 | 3.1 | >15 | >15 | 9.7 |
| Wrapping test | - | C | B | C | C | B | B | B |
| Transparency | - | C | C | C | C | B | B | C |

< < <Example V: Fifth Aspect> > >

<<Measurement and Evaluation Method>>

<Degree of Polymerization (n)>

The degree of polymerization (n) was adjusted based on the molar ratio between the diamine and the acid dianhydride in the polymerization step. In the present disclosure, the diamine: acid dianhydride (molar ratio) in the polymerization step was n: n+ 1 in Examples 1 to 16 and Comparative Examples 2 and 5 to 7. In Comparative Examples 1, 3 and 4, the diamine: acid dianhydride (molar ratio) in the polymerization step was n+1: n.

<Solid Content>

The solid content of the charged components was regarded as the solid content (%) of the polyamide acid wet gel (PAA-WG).

<Measurement of Average Pore Diameter and BET Specific Surface Area of Porous Polyimide>

Measurement was made by the same procedure as in Example I.

<Measurement of Bulk Density of Porous Polyimide>

Measurement was made by the same procedure as in Example I.

(Fabrication of Sample Heat-Treated at 300°C)

Fabrication was carried out by the same procedure as in Example III.

<<Production Example of Bulk (Thick Sheet)-Shaped Porous Polyimide>>

[Example 1]

In a 100 mL glass vial, N-methyl-2-pyrrolidone (NMP: 29.0 g) was added to p-phenylenediamine (PPDA: 1.08 g; 10.0 mmol) and dissolved while stirring with a magnetic stirrer, and then powder of pyromellitic anhydride (PMDA: 2.4 g;11.0 mmol) was added while stirring. This solution was stirred at room temperature (25°C) for 1 hour to obtain a polyamide acid (PAA) solution.

To the polyamide acid (PAA) solution, a solution of 1,3,5-tris(4-aminophenyl)benzene (TAB: 0.234 g; 0.667 mmol) dissolved in 4.5 g of NMP in a separate 10 mL glass vial, followed by stirring for 1 minute. The resulting solution was transferred to a template made of PTA (φ100 mm, 30 mm depth) so as to have a thickness of about 3 mm, and then left to stand at room temperature (25°C) for 10 minutes to obtain a polyamide acid wet gel (PAA-WG) having no fluidity.

This PAA-WG was left to stand at room temperature (25°C) for 24 hours in a closed container made of SUS in an NMP saturated atmosphere, taken out from the template, and then immersed in a mixed solution of acetic anhydride (27.0 g; 264 mmol), triethylamine (3.3 g; 33 mmol) and 270 g of NMP at room temperature (25°C) for 6 hours to obtain a polyimide wet gel (PI-WG).

This PI-WG was immersed in a solution in acetone:NMP = 1:1 (weight ratio) for 24 hours, repeatedly subjected to washing with acetone and further immersion in acetone for 24 hours three times, and then dried with a supercritical drying apparatus ("SCRD6" manufactured by Rexxam Co., Ltd.) to obtain a porous polyimide (pPI).

[Examples 2 to 8 and 10 to 12]

The same operation as in Example 1 was carried out by changing the diamine, tetracarboxylic anhydride, crosslinking agent, the amount of imidization agent, and solvent to those shown in Tables 10 and 11 in the same manner as in Example 1 to obtain a porous polyimide (pPI).

[Example 9]

The same operation as in Example 1 was carried out, except that the conditions during chemical imidization by solution immersion were 60°C for 1 hour, a porous polyimide (pPI) was obtained.

[Examples 13 to 16]

The same operation as in Example 12 was carried out, except that the conditions during chemical imidization by solution immersion were changed to those described in Table 11, porous polyimides (pPI) were obtained.

[Comparative Example 1]

With reference to NPL 1 (ACS Appl. Mater. Interfaces, (2015), 7(2), 1240-1249), a porous polyimide pPI was fabricated by the following procedure. In a 100 mL glass vial, N-methyl-2-pyrrolidone (NMP: 45.7 g) was added to 2,2'-diaminobenzidine (m-Tolidine; DMBZ: 2.23 g; 10.5 mmol) while stirring with a magnetic stirrer, and then powder of 3,3',4,4'-biphenyltetracarboxylic dianhydride (BPDA: 2.942 g; 10.0 mmol) was added, followed by stirring at room temperature (25°C) for 2 hours to obtain a polyamide acid (PAA) solution.

Thereafter, while stirring the polyamide acid (PAA) solution, acetic anhydride (8.16 g; 80 mmol) was added, followed by stirring until uniformity was achieved. Furthermore, triethylamine (1.01 g; 10 mmol) was added, followed by stirring until uniformity was achieved and further stirring at room temperature (25°C) for 15 minutes to obtain a polyimide (PI) solution.

To the polyimide (PI) solution, a solution of 1,3,5-benzenetricarbonyl trichloride (BTC: 89 mg; 0.333 mmol) dissolved in 1.68 g of NMP in a separate 10 mL glass vial was added, followed by stirring at room temperature until uniformity was achieved. After stirring, the solution was transferred to a template made of PTFE (φ100 mm, 30 mm depth) and then left to stand at room temperature for 30 minutes to obtain a polyimide wet gel (PI-WG) having no fluidity.

The resulting PI-WG was left to stand at room temperature (25°C) for 24 hours in a closed container made of SUS in an NMP saturated atmosphere and immersed in a solution in acetone:NMP (mass ratio) = 25:75 for 24 hours, a solution in acetone:NMP (mass ratio) = 50:50 for 24 hours, and a solution in acetone:NMP (mass ratio) = 75:25 for 24 hours, respectively, and then repeatedly subjected to washing with acetone and immersion in acetone for 24 hours three times, thus replacing the solvent. This polyimide wet gel immersed in acetone was dried with the supercritical drying apparatus to obtain a porous polyimide (pPI).

[Comparative Example 2]

With reference to NPL 5 (ACS Appl. Mater. Interfaces, (2012), 4(2), 536-544), a porous polyimide pPI was fabricated by the following procedure. In a 100 mL glass vial, N-methyl-2-pyrrolidone (NMP: 41.6 g) was added to 2,2'-diaminobenzidine (m-Tolidine; DMBZ: 2.123 g; 10.0 mmol) and dissolved by stirring with a magnetic stirrer, powder of 3,3',4,4'-biphenyltetracarboxylic dianhydride (BPDA: 3.09 g; 10.5 mmol) was added while stirring the solution, followed by stirring at room temperature for 2 hours to obtain a polyamide acid (PAA) solution.

Thereafter, while stirring the polyamide acid (PAA) solution, a solution of 1,3,5-tris(4-aminophenoxy)benzene (TAPB: 0.133 g; 0.333 mmol) dissolved in 6.5 g of NMP in a separate 20 mL glass vial was added, followed by stirring at room temperature. Furthermore, after 10 minutes, acetic anhydride (8.58 g; 84 mmol) and pyridine (6.64 g; 84 mmol) were added to this solution, and after stirring until uniformity was achieved, the solution was transferred to a template made of PFA (φ 100 mm, 30 mm depth) so as to have a thickness of about 3 mm, and then left to stand at room temperature for 30 minutes to obtain a polyimide wet gel (PI-WG) having no fluidity.

The solvent replacement and supercritical drying were carried out in the same manner as in Comparative Example 1 to obtain a porous polyimide (pPI).

[Comparative Example 3]

The same operation as in Comparative Example 1 was carried out by changing the diamine, tetracarboxylic anhydride, crosslinking agent, and the addition amounts thereof to those shown in Table 12, with reference to NPL 7 (Polymer, (2019), 176(2), 213-226) to obtain a porous polyimide pPI.

[Comparative Example 4]

The same operation as in Comparative Example 1 was carried out by changing the diamine, tetracarboxylic anhydride, crosslinking agent, and the addition amounts thereof to those shown in Table 12, with reference to NPL 7 (Polymer, (2019), 176(2), 213-226), to obtain a porous polyimide (pPI).

[Comparative Example 5]

The same operation as in Comparative Example 1 was carried out by changing the diamine, tetracarboxylic

anhydride, crosslinking agent, and the addition amounts thereof to those shown in Table 13, thus making an attempt to obtain a porous polyimide pPI. In a 100 mL glass vial, N-methyl-2-pyrrolidone (NMP: 29.0 g) was added to p-phenylenediamine (PPDA:1.08 g; 10.0 mmol) and dissolved by stirring with a magnetic stirrer, and then powder of pyromellitic anhydride (PMDA: 2.40 g; 11.0 mmol) was added while stirring the solution. Thereafter, while stirring the solution, acetic anhydride (8.16 g; 80 mmol) was added while stirring until uniformity was achieved, and then triethylamine (1.0 g; 10 mmol) was added, and as a result, the solution rapidly thickened and stirring became difficult.

[Comparative Example 6]

The same operation as in Comparative Example 1 was carried out by changing the diamine, tetracarboxylic anhydride, crosslinking agent, and the addition amounts thereof to those shown in Table 13, thus making an attempt to obtain a porous polyimide pPI. In a 100 mL glass vial, N-methyl-2-pyrrolidone (NMP: 38.4 g) was added to 2,2'-dimethylbenzidine (DMBZ: 2.12 g; 10.0 mmol) and dissolved by stirring with a magnetic stirrer, and then powder of pyromellitic anhydride (PMDA: 2.40 g; 11.0 mmol) was added while stirring the solution. Thereafter, while stirring the solution, acetic anhydride (8.16 g; 80 mmol) was added while stirring until uniformity was achieved, and then triethylamine (1.0 g; 10 mmol) was added, and as a result, the solution rapidly thickened and stirring became difficult.

[Comparative Example 7]

With reference to PTL 5 (ACS Appl. Mater. Interfaces, (2012), 4(2), 536-544), by changing the diamine, tetracarboxylic anhydride, crosslinking agent, and the addition amounts thereof to those shown in Table 13, thus making an attempt to obtain a porous polyimide pPI. In a 100 mL glass vial, N-methyl-2-pyrrolidone (NMP: 96.8 g) was added to 2,2'-dimethylbenzidine (DMBZ: 2.03 g; 9.55 mmol) and dissolved by stirring with a magnetic stirrer, and then powder of 3,3',4,4'-biphenyltetracarboxylic dianhydride (BPDA: 2.94 g; 10.0 mmol) was added while stirring the solution, followed by stirring at 25°C for 24 hours to obtain a polyamide acid (PAA) solution.

To the resulting polyamide acid (PAA) solution, a solution of 1,3,5-tris(4-aminophenoxy)benzene (TAPB: 0.120 g; 0.30 mmol) dissolved in 3.0 g of NMP in a separate 20 mL glass vial was added, followed by stirring at 25°C for 5 minutes. The resulting solution was transferred to closable template made of PFA (φ100 mm, 30 mm depth) so as to have a thickness of about 3 mm, and then left to stand at 60°C for 24 hours to obtain polyamide acid wet gel (PAA-WG) having no fluidity.

This PAA-WG was immersed in a mixed solution of acetic anhydride (90.0 g; 882 mmol), pyridine (90.0 g; 1,138 mmol) and 120 g of NMP at 25°C for 6 hours to obtain a polyimide wet gel (PI-WG). At this time, the shape of the wet gel changed significantly from the disk shape of the template to a shape close to a bowl shape.

Furthermore, the same solvent replacement and supercritical drying as in Example 1 were carried out to obtain a porous polyimide (pPI).

[Table 10]

| Table 10: Example V-1 | | | | | | | | | |
|---|---|---|---|---|---|---|---|---|---|
| | | Example 1 | Example 2 | Example 3 | Example 4 | Example 5 | Example 6 | Example 7 | Example 8 |
| Diamine | type | PPDA | PPDA | PPDA | TMPDA | DMPDA | DMBZ | TFMB | DMBZ |
| | mmol | 10 | 10 | 10 | 10 | 10 | 10 | 10 | 10 |
| | g | 1.08 | 1.08 | 1.08 | 1.64 | 1.36 | 2.12 | 3.2 | 2.12 |
| Acid dianhydride | type | PMDA | PMDA | PMDA | PMDA | PMDA | PMDA | PMDA | BPDA |
| | mmol | 11 | 10.5 | 11.43 | 11 | 11 | 11 | 11 | 10.5 |
| | g | 2.4 | 2.29 | 2.49 | 2.4 | 2.4 | 2.4 | 2.4 | 3.09 |
| Polymerization solvent | type | NMP | NMP | NMP | NMP | NMP | NMP | NMP | NMP |
| | g | 29 | 29.2 | 45.5 | 34 | 31.5 | 38.3 | 48 | 45.7 |
| Crosslinking agent | type | TAB | TAB | TAB | TAB | TAB | TAB | TAB | TAB |
| | mmol | 0.667 | 0.333 | 0.952 | 0.667 | 0.667 | 0.667 | 0.667 | 0.333 |
| | g | 0.234 | 0.117 | 0.335 | 0.234 | 0.234 | 0.234 | 0.234 | 0.117 |

(continued)

| Table 10: Example V-1 | | | | | | | | | |
|---|---|---|---|---|---|---|---|---|---|
| | | Example 1 | Example 2 | Example 3 | Example 4 | Example 5 | Example 6 | Example 7 | Example 8 |
| Crosslinking agent solvent | type | NMP | NMP | NMP | NMP | NMP | NMP | NMP | NMP |
| | g | 4.5 | 2.2 | 6.4 | 4.5 | 4.5 | 4.5 | 4.5 | 2.2 |
| Dehydrating agent | type | $Ac_2O$ | $Ac_2O$ | $Ac_2O$ | $Ac_2O$ | $Ac_2O$ | $Ac_2O$ | $Ac_2O$ | $Ac_2O$ |
| | mmol | 264 | 252 | 274 | 264 | 264 | 264 | 264 | 252 |
| | g | 27 | 25.7 | 28 | 27 | 27 | 27 | 27 | 25.7 |
| Amine | type | $NEt_3$ | $NEt_3$ | $NEt_3$ | $NEt_3$ | $NEt_3$ | $NEt_3$ | $NEt_3$ | $NEt_3$ |
| | mmol | 33 | 32 | 34.3 | 33 | 33 | 33 | 33 | 32 |
| | g | 3.3 | 3.2 | 3.5 | 3.3 | 3.3 | 3.3 | 3.3 | 3.2 |
| Immersion solvent | type | NMP | NMP | NMP | NMP | NMP | NMP | NMP | NMP |
| | g | 273 | 260 | 283 | 270 | 270 | 273 | 273 | 260 |
| Degree of polymerization n | - | 10 | 20 | 7 | 10 | 10 | 10 | 10 | 20 |
| Solid content | % by weight | 10 | 10 | 7 | 10 | 10 | 10 | 10 | 10 |
| Imidization temperature | °C | 25 | 25 | 25 | 25 | 25 | 25 | 25 | 25 |
| Imidization time | h | 6 | 6 | 6 | 6 | 6 | 6 | 6 | 6 |
| Concentration of dehydrating imidization agent | % by weight | 10 | 10 | 10 | 10 | 10 | 10 | 10 | 10 |
| Deformation during imidization | - | None | None | None | None | None | None | None | None |

[Table 11]

| Table 11: Example V-2 | | | | | | | | | |
|---|---|---|---|---|---|---|---|---|---|
| | | Example 9 | Example 10 | Example 11 | Example 12 | Example 13 | Example 14 | Example 15 | Example 16 |
| Diamine | type | PPDA | 1,5-DAN | 1,5-DAN | DMBZ | DMBZ | DMBZ | DMBZ | DMBZ |
| | mmol | 10 | 10 | 10 | 10 | 10 | 10 | 10 | 10 |
| | g | 1.08 | 1.58 | 1.58 | 2.12 | 2.12 | 2.12 | 2.12 | 2.12 |
| Acid dianhydride | type | PMDA | PMDA | PMDA | PMDA | PMDA | PMDA | PMDA | PMDA |
| | mmol | 11 | 11 | 10.5 | 10.5 | 10.5 | 10.5 | 10.5 | 10.5 |
| | g | 2.4 | 2.4 | 2.29 | 2.29 | 2.29 | 2.29 | 2.29 | 2.29 |
| Polymerization solvent | type | NMP | NMP | NMP | NMP | NMP | NMP | NMP | NMP |
| | g | 29 | 33.5 | 33.7 | 57.9 | 57.9 | 57.9 | 57.9 | 57.9 |

(continued)

| Table 11: Example V-2 | | | | | | | | | |
|---|---|---|---|---|---|---|---|---|---|
| | | Example 9 | Example 10 | Example 11 | Example 12 | Example 13 | Example 14 | Example 15 | Example 16 |
| Crosslinking agent | type | TAB | TAB | TAB | TAB | TAB | TAB | TAB | TAB |
| | mmol | 0.667 | 0.667 | 0.333 | 0.333 | 0.333 | 0.333 | 0.333 | 0.333 |
| | g | 0.234 | 0.234 | 0.117 | 0.117 | 0.117 | 0.117 | 0.117 | 0.117 |
| Crosslinking agent solvent | type | NMP | NMP | NMP | NMP | NMP | NMP | NMP | NMP |
| | g | 4.5 | 4.5 | 2.2 | 2.2 | 2.2 | 2.2 | 2.2 | 2.2 |
| Dehydrating agent | type | $Ac_2O$ | $Ac_2O$ | $Ac_2O$ | $Ac_2O$ | $Ac_2O$ | $Ac_2O$ | $Ac_2O$ | $Ac_2O$ |
| | mmol | 264 | 264 | 252 | 252 | 504 | 504 | 252 | 252 |
| | g | 27 | 27 | 25.7 | 25.7 | 51.4 | 51.4 | 25.7 | 25.7 |
| Amine | type | $NEt_3$ | $NEt_3$ | $NEt_3$ | $NEt_3$ | $NEt_3$ | $NEt_3$ | $NEt_3$ | $NEt_3$ |
| | mmol | 33 | 33 | 32 | 32 | 63 | 63 | 32 | 32 |
| | g | 3.3 | 3.3 | 3.2 | 3.2 | 6.4 | 6.4 | 3.2 | 3.2 |
| Immersion solvent | type | NMP | NMP | NMP | NMP | NMP | NMP | NMP | NMP |
| | g | 273 | 273 | 260 | 260 | 260 | 120 | 260 | 260 |
| Degree of polymerization n | - | 10 | 10 | 20 | 20 | 20 | 20 | 20 | 20 |
| Solid content | % by weight | 10 | 10 | 10 | 7 | 7 | 7 | 7 | 7 |
| Imidization temperature | °C | 60 | 25 | 25 | 25 | 25 | 25 | 25 | 25 |
| Imidization time | h | 1 | 6 | 6 | 6 | 6 | 6 | 24 | 72 |
| Concentration of dehydrating imidization agent | % by weight | 10 | 10 | 10 | 10 | 18.2 | 32.5 | 10 | 10 |
| Deformation during imidization | - | None | None | None | None | None | None | None | None |

[Table 12]

| Table 12: Example V-3 | | | | | |
|---|---|---|---|---|---|
| | | Comparative Example 1 | Comparative Example 2 | Comparative Example 3 | Comparative Example 4 |
| Diamine | type | DMBZ | DMBZ | PPDA | PPDA |
| | mmol | 10.5 | 10 | 20 | 10.5 |
| | g | 2.23 | 2.123 | 2.16 | 1.135 |
| Acid dianhydride | type | BPDA | BPDA | PMDA | BPDA |
| | mmol | 10 | 10.5 | 10 | 10 |
| | g | 2.94 | 3.09 | 2.18 | 2.94 |

(continued)

| Table 12: Example V-3 | | | | | | |
|---|---|---|---|---|---|---|
| | | | Comparative Example 1 | Comparative Example 2 | Comparative Example 3 | Comparative Example 4 |
| Polymerization solvent | type | | NMP | NMP | NMP | NMP |
| | g | | 45.7 | 41.6 | 31.6 | 31.1 |
| Crosslinking agent | type | | BTC | TAPB | BTC | BTC |
| | mmol | | 0.333 | 0.333 | 0.2 | 0.333 |
| | g | | 0.089 | 0.133 | 0.053 | 0.1332 |
| Crosslinking agent solvent | type | | NMP | NMP | NMP | NMP |
| | g | | 1.7 | 6.5 | 8 | 7 |
| Dehydrating agent | type | | $Ac_2O$ | $Ac_2O$ | $Ac_2O$ | $Ac_2O$ |
| | mmol | | 80 | 84 | 80 | 80 |
| | g | | 8.16 | 8.58 | 8.16 | 8.16 |
| Amine | type | | $NEt_3$ | Pyridine | Pyridine | Pyridine |
| | mmol | | 10 | 84 | 80 | 80 |
| | g | | 1 | 6.6 | 6.3 | 6.3 |
| Immersion solvent | type | | - | - | - | - |
| | g | | - | - | - | - |
| Degree of polymerization n | - | | 20 | 20 | 1 | 20 |
| Solid content | % by weight | | 10 | 10 | 10 | 10 |
| Imidization temperature | °C | | 25 | 25 | 25 | 25 |
| Imidization time | h | | 0.25 | 0.25 | 0.25 | 0.25 |
| Concentration of dehydrating imidization agent | % by weight | | - | - | - | - |
| Deformation during imidization | - | | - | - | - | - |

[Table 13]

| Table 13: Example V-4 | | | | |
|---|---|---|---|---|
| | | Comparative Example 5 | Comparative Example 6 | Comparative Example 7 |
| Diamine | type | PPDA | DMBZ | DMBZ |
| | mmol | 10 | 10 | 9.55 |
| | g | 1.08 | 2.12 | 2.03 |
| Acid dianhydride | type | PMDA | PMDA | BPDA |
| | mmol | 11 | 11 | 10 |
| | g | 2.4 | 2.4 | 2.94 |

(continued)

| Table 13: Example V-4 | | | | |
|---|---|---|---|---|
| | | Comparative Example 5 | Comparative Example 6 | Comparative Example 7 |
| Polymerization solvent | type | NMP | NMP | NMP |
| | g | 29 | 38.4 | 96.8 |
| Crosslinking agent | type | - | - | TAPB |
| | mmol | - | - | 0.3 |
| | g | - | - | 0.12 |
| Crosslinking agent solvent | type | - | - | NMP |
| | g | - | - | 3 |
| Dehydrating agent | type | $Ac_2O$ | $Ac_2O$ | $Ac_2O$ |
| | mmol | 80 | 80 | 882 |
| | g | 8.16 | 8.16 | 90 |
| Amine | type | $NEt_3$ | $NEt_3$ | pyridine |
| | mmol | 10 | 10 | 1138 |
| | g | 1 | 1 | 90 |
| Immersion solvent | type | - | - | NMP |
| | g | - | - | 120 |
| Degree of polymerization n | - | 10 | 10 | 20 |
| Solid content | % by weight | 10 | 10 | 5 |
| Imidization temperature | °C | 25 | 25 | 25 |
| Imidization time | h | - | - | 6 |
| Concentration of dehydrating imidization agent | % by weight | - | - | 60 |
| Deformation during imidization | - | - | - | Get deformed |

Samples heat-treated at 300°C of Examples and Comparative Examples were fabricated by the method described in the above "Fabrication of Sample Heat-Treated at 300°C". Changes in physical properties before and after heating are shown in Tables 14 to 16 below.

[Table 14]

| Table 14: Example V-5 | | | | | | | | | | |
|---|---|---|---|---|---|---|---|---|---|---|
| | | | Example 1 | Example 2 | Example 3 | Example 4 | Example 5 | Example 6 | Example 7 | Example 8 |
| Before heating | Average pore diameter | nm | 8.6 | 9.1 | 8.2 | 7.3 | 7.4 | 16.7 | 12.2 | 13.1 |
| | BET specific surface area | $m^2/g$ | 512 | 532 | 502 | 722 | 711 | 782 | 660 | 561 |
| | Bulk density | $g/cm^3$ | 0.25 | 0.23 | 0.24 | 0.26 | 0.26 | 0.15 | 0.19 | 0.26 |
| | Average thickness | mm | 2 | 2.1 | 1.9 | 2.2 | 2.2 | 2.8 | 2.6 | 2.2 |
| | Average pore size (D) | nm | 3.6 | 3.6 | 2.7 | 3.5 | 3.5 | 3.1 | 4.8 | 5.1 |
| | Bending elastic modulus | MPa | 785 | 702 | 759 | 629 | 588 | 532 | 408 | 344 |
| | Bending strength | MPa | 22.3 | 20.3 | 21.4 | 19.7 | 17.8 | 15.5 | 15.1 | 13.8 |
| After heating | Average pore diameter | nm | 8.4 | 8.7 | 8 | 7.1 | 7.2 | 16.5 | 11.9 | 12.3 |
| | BET specific surface area | $m^2/g$ | 498 | 519 | 486 | 698 | 692 | 757 | 648 | 498 |
| | Bulk density | $g/cm^3$ | 0.25 | 0.23 | 0.24 | 0.26 | 0.26 | 0.15 | 0.19 | 0.3 |

[Table 15]

| Table 15: Example V-6 | | | | | | | | | | |
|---|---|---|---|---|---|---|---|---|---|---|
| | | | Example 9 | Example 10 | Example 11 | Example 12 | Example 13 | Example 14 | Example 15 | Example 16 |
| Before heating | Average pore diameter | nm | 8.8 | 9.5 | 9.8 | 9.9 | 9.7 | 9.5 | 9.7 | 9.6 |
| | BET specific surface area | $m^2/g$ | 509 | 510 | 535 | 702 | 691 | 677 | 683 | 670 |
| | Bulk density | $g/cm^3$ | 0.26 | 0.19 | 0.18 | 0.15 | 0.16 | 0.17 | 0.16 | 0.16 |
| | Average thickness | mm | 2.2 | 2.6 | 2.5 | 2.2 | 2.1 | 2 | 2.1 | 2.1 |
| | Average pore size (D) | nm | 3.7 | 2.6 | 2.8 | 3.2 | 3.1 | 2.9 | 3.1 | 3 |
| | Bending elastic modulus | MPa | 771 | 557 | 643 | 305 | 319 | 366 | 325 | 320 |
| | Bending strength | MPa | 21.1 | 15.9 | 15.7 | 13.1 | 13.6 | 14.5 | 13.4 | 13.3 |
| After heating | Average pore diameter | nm | 8.7 | 9.4 | 9.7 | 9.7 | 9.6 | 9.3 | 9.5 | 9.5 |
| | BET specific surface area | $m^2/g$ | 498 | 500 | 519 | 595 | 608 | 621 | 610 | 603 |
| | Bulk density | $g/cm^3$ | 0.26 | 0.19 | 0.18 | 0.17 | 0.18 | 0.19 | 0.18 | 0.18 |

[Table 16]

Table 16: Example V-7

| | | | Comparati ve Example 1 | Comparative Example 2 | Comparative Example 3 | Comparative Example 4 | Comparative Example 5 | Comparative Example 6 | Comparative Example 7 |
|---|---|---|---|---|---|---|---|---|---|
| Before heating | Average pore diameter | nm | 12.5 | 13.1 | 14.2 | 13.6 | - | - | 8.2 |
| | BET specific surface area | $m^2/g$ | 550 | 340 | 190 | 334 | - | - | 49 |
| | Bulk density | $g/cm^3$ | 0.13 | 0.18 | 0.09 | 0.24 | - | - | 0.51 |
| | Average thickness | mm | 2.7 | 2.2 | 3 | 1.9 | - | - | - |
| | Average pore size (D) | nm | 13 | 25.3 | 20.3 | 17.7 | - | - | - |
| | Bending elastic modulus | MPa | 40 | 55 | 58 | 51 | - | - | - |
| | Bending strength | MPa | 0.8 | 1.5 | 0.7 | 1.3 | - | - | - |
| After heating | Average pore diameter | nm | - | - | - | - | - | - | - |
| | BET specific surface area | $m^2/g$ | <10 | <10 | <10 | <10 | - | - | <10 |
| | Bulk density | $g/cm^3$ | Impossible to measure | Impossible to measure | Impossible to measure | Impossible to measure | - | - | Impossible to measure |

<<Production Example of Thin Sheet-Shaped Porous Polyimide>>

[Example 17]

In a 100 mL glass vial, N-methyl-2-pyrrolidone (NMP: 29.0 g) was added to p-phenylenediamine (PPDA: 1.08 g; 10.0 mmol) and dissolved by stirring with a magnetic stirrer, and then powder of pyromellitic anhydride (PMDA: 2.34 g; 11.0 mmol) was added while stirring the solution. This solution was stirred at room temperature (25°C) for 1 hour to obtain a polyamide acid (PAA) solution.
To the polyamide acid (PAA) solution, a solution of 1,3,5-tris(4-aminophenyl)benzene (TAB: 0.234 g; 0.667 mmol) dissolved in 4.5 g of NMP in a separate 10 mL glass vial was added, followed by stirring for 1 minute to ensure uniformity. The resulting solution was coated on a Kapton (registered trademark) film (manufactured by DU PONT-TORAY CO., LTD., 250 mm × 600 mm) using a bar coater (manufactured by Matsuo Sangyo Co., Ltd., bar No. 200, WET film thickness of about 100 μm) (coating area: about 200 mm wide × about 500 mm long). Thereafter, the coated film was left to stand at room temperature (25°C) for 5 minutes to obtain a polyamide acid wet gel sheet (PAA-WGs).
This PAA-WGs was left to stand at room temperature (25°C) for 24 hours in a closed container made of SUS in an NMP saturated atmosphere, and then immersed in a mixed solution of acetic anhydride (27.0 g; 264 mmol), triethylamine (3.3 g; 33 mmol) and 540 g of NMP at 25°C for 6 hours to obtain a polyimide wet gel (PI-WG).
This PI-WGs was immersed in a solution in acetone:NMP = 1:1 (mass ratio) for 24 hours, and then repeatedly subjected to washing with acetone and immersion in acetone for 24 hours three times, followed by peeling from the Kapton film and further drying with a supercritical drying apparatus to obtain a porous polyimide sheet (pPIs).

[Comparative Example 8]

In a 100 mL glass vial, N-methyl-2-pyrrolidone (NMP: 45.7 g) was added to 2,2'-diaminobenzidine (m-Tolidine; DMBZ: 2.23 g; 10.5 mmol) and dissolved while stirring with a magnetic stirrer, and then powder of 3,3',4,4'-biphenyltetracarboxylic dianhydride (BPDA: 2.942 g; 10.0 mmol) was added, followed by stirring at room temperature (25°C) for 2 hours to obtain a polyamide acid (PAA) solution.
Thereafter, acetic anhydride (8.16 g; 80 mmol) was added while stirring the polyamide acid (PAA) solution, followed by stirring until uniformity was achieved. Furthermore, triethylamine (1.01 g; 10 mmol) was added, followed by stirring until uniformity was achieved and further stirring at room temperature (25°C) for 15 minutes stirring to obtain a polyimide (PI) solution.
To the polyimide (PI) solution, a solution of 1,3,5-benzenetricarbonyl trichloride (BTC: 89 mg; 0.333 mmol) dissolved in 1.68 g of NMP in a separate 10 mL glass vial was added, followed by stirring at room temperature until uniformity was achieved. After 5 minutes, the resulting solution was coated on a Kapton (registered trademark) film (manufactured by DU PONT-TORAY CO., LTD., 250 mm × 600 mm) as a base film using a bar coater (manufactured by Matsuo Sangyo Co., Ltd., bar No. 200, WET film thickness of about 100 μm) (coating area: about 200 mm wide × about 500 mm long). After standing at room temperature (25°C) for 25 minutes, an attempt was made to transfer the Kapton film, and as a result, the coating film became extremely brittle and cracked, thus failing to obtain a polyimide wet gel sheet.

[Table 17]

| Table 17: Example V-8 | | | |
|---|---|---|---|
| | | Example 17 | Comparative Example 8 |
| Diamine | type | PPDA | DMBZ |
| | mmol | 10 | 10.5 |
| | g | 1.08 | 2.23 |
| Acid dianhydride | type | PMDA | BPDA |
| | mmol | 11 | 10 |
| | g | 2.34 | 2.94 |
| Polymerization solvent | type | NMP | NMP |
| | g | 29 | 45.7 |

(continued)

| Table 17: Example V-8 | | | |
|---|---|---|---|
| | | Example 17 | Comparative Example 8 |
| Crosslinking agent | type | TAB | BTC |
| | mmol | 0.667 | 0.333 |
| | g | 0.234 | 0.089 |
| Crosslinking agent solvent | type | NMP | NMP |
| | g | 4.5 | 1.68 |
| Dehydrating agent | type | $Ac_2O$ | $Ac_2O$ |
| | mmol | 264 | 80 |
| | g | 27 | 8.16 |
| Amine | type | $NEt_3$ | $NEt_3$ |
| | mmol | 33 | 10 |
| | g | 3.3 | 1.01 |
| Immersion solvent | type | NMP | - |
| | g | 540 | - |
| Degree of polymerization n | - | 10 | 20 |
| Solid content | % by weight | 10 | 10 |
| Imidization temperature | °C | 25 | 25 |
| Imidization time | h | 6 | 0.25 |
| Concentration of dehydrating imidization agent | % by weight | 5.3 | - |
| Deformation during imidization | - | None | - |

[Table 18]

| Table 18: Example V-9 | | | | |
|---|---|---|---|---|
| | | | Example 17 | Comparative Example 8 |
| Before heating | Average thickness | μm | 70 | - |
| | Average pore diameter | nm | 8.8 | - |
| | Specific surface area | $m^2/g$ | 532 | - |
| | Bulk density | $g/cm^3$ | 0.26 | - |
| After heating | Average thickness | μm | 69 | - |
| | Average pore diameter | nm | 8.7 | - |
| | Specific surface area | $m^2/g$ | 519 | - |
| | Bulk density | $g/cm^3$ | 0.26 | - |

< < <Example VI: Sixth Aspect> > >

<<Measurement and Evaluation Method>>

<Degree of Polymerization (n)>

The degree of polymerization (n) was adjusted based on the molar ratio between the diamine and the acid dianhydride in the polymerization step. In the present disclosure, the diamine: acid dianhydride (molar ratio) in the polymerization step was n: n+ 1 in Examples 1 to 7 and Comparative Examples 2, 6 and 7. In Comparative Examples 1 and 3 to 5, the diamine: acid dianhydride (molar ratio) in the polymerization step was n+1: n.

<Solid Content>

The solid content of the charged components was regarded as the solid content (%) of the polyamide acid wet gel (PAA-WG).

<Measurement of Average Pore Diameter and BET Specific Surface Area of Porous Resin Sheet>

Measurement was made by the same procedure as in Example I.

<Measurement of Bulk Density of Porous Resin Sheet >

Measurement was made by the same procedure as the bulk density of the porous polyimide in Example I.

<Carbonization of Porous Resin Sheet>

The temperature of a porous resin sheet (50 mm × 50 mm) was raised to 1,100°C at 5°C/min in a horizontal annular furnace manufactured by Koyo Lindberg Co., Ltd., kept at 1,100°C for 1 hour and then dropped to 50°C at a temperature drop rate of 5°C/min to obtain a porous carbon sheet.

<Measurement of Average Pore Diameter, BET Specific Surface Area and Bulk Density of Porous Carbon Sheet>

In the same manner as the measurement of the average pore diameter, specific surface area and bulk density of the porous resin sheet, the average pore diameter, specific surface area and bulk density of the porous carbon sheet were measured.

<<Examples and Comparative Examples>>

[Example 1]

In a 100 mL glass vial, N-methyl-2-pyrrolidone (NMP: 29.0 g) was added to p-phenylenediamine (PPDA: 1.08 g; 10.0 mmol) and dissolved by stirring with a magnetic stirrer, and then powder of pyromellitic anhydride (PMDA: 2.40 g; 11.0 mmol) was added while stirring the solution. This solution was stirred at room temperature (25°C) for 1 hour to obtain a polyamide acid (PAA) solution.

To the polyamide acid (PAA) solution, a solution of 1,3,5-tris(4-aminophenyl)benzene (TAB: 0.234 g; 0.667 mmol) dissolved in 4.5 g of NMP in a separate 10 mL glass vial was added, followed by stirring for 1 minute until uniformity was achieved. The resulting solution was coated on a Kapton (registered trademark) film (manufactured by DU PONT-TORAY CO., LTD., 250 mm × 600 mm) as a base film using a bar coater (manufactured by Matsuo Sangyo Co., Ltd., bar No. 200, WET film thickness of about 100 μm) (coating area: about 200 mm wide × about 500 mm long). By standing at room temperature (25°C) for 5 minutes, a polyamide acid wet gel sheet (PAA-WGs) was obtained.

This PAA-WGs was left to stand at room temperature (25°C) for 24 hours in a closed container made of SUS in an NMP saturated atmosphere, and then immersed in a mixed solution of acetic anhydride (27.0 g; 264 mmol), triethylamine (3.3 g; 33 mmol) and 270 g of NMP at 25°C for 6 hours to obtain a polyimide wet gel (PI-WG).

This PI-WG was immersed in a solution in acetone:NMP = 1:1 (weight ratio) for 24 hours, and then repeatedly subjected to washing with acetone and immersion in acetone for 24 hours three times, followed by peeling from the Kapton film and further drying with a supercritical drying apparatus with a supercritical drying apparatus ("SCRD6", manufactured by Rexxam Co., Ltd) to obtain a porous polyimide sheet (pPIs). The BET specific surface area of the resulting pPIs was 512 $m^2$/g

The resulting pPIs was cut into a size of 50 mm × 50 mm, and then carbonized under the above carbonization conditions to obtain a porous carbon sheet pCs. The BET specific surface area of the resulting pCs was 448 $m^2$/g.

[Examples 2 to 8]

The same operation as in Example 1 was carried out by changing the diamine, tetracarboxylic anhydride, crosslinking agent, the amount of imidization agent and solvent to those shown in Table 19 in the same manner as in Example 1 to obtain porous polyimide sheets pPIs and porous carbon sheets pCs.

[Comparative Example 1]

With reference to NPL 6 (ACS Appl. Mater. Interfaces, (2017), 9(9), 8287-8296), a porous polyimide sheet (pPIs) was fabricated by the following procedure. In a 100 mL glass vial, N-methyl-2-pyrrolidone (NMP: 51.5 g) was added to 4,4'-oxydianiline (ODA: 1.05 g; 5.25 mmol) and dissolved while stirring with a magnetic stirrer, and then powder of 3,3',4,4'-biphenyltetracarboxylic dianhydride (BPDA: 2.94 g; 10.0 mmol) was added, followed by stirring at room temperature (25°C) for 2 hours. To the uniform solution, 9,9'-bis(4-aminophenyl)fluorene (BAFL: 1.83 g; 5.25 mmol) was added, followed by stirring at room temperature for 30 minutes to obtain a polyamide acid (PAA) solution.

Thereafter, while stirring the polyamide acid (PAA) solution, acetic anhydride (8.16 g; 80 mmol) was added, followed by stirring until uniformity was achieved. Furthermore, triethylamine (1.01 g; 10 mmol) was added, followed by stirring until uniformity was achieved and further stirring at room temperature (25°C) for 15 minutes to obtain a polyimide (PI) solution.

To the polyimide (PI) solution, a solution of 1,3,5-benzenetricarbonyl trichloride (BTC: 89 mg; 0.333 mmol) dissolved in 1.68 g of NMP in a separate 10 mL glass vial was added, followed by stirring at room temperature until uniformity was achieved. The resulting solution was coated on a Kapton (registered trademark) film (manufactured by DU PONT-TORAY CO., LTD., 250 mm × 600 mm) as a base film using a bar coater (manufactured by Matsuo Sangyo Co., Ltd., bar No. 200, WET film thickness of about 300 μm) (coating area: about 200 mm wide × about 500 mm long). By standing at room temperature (25°C) for 1 hour, a polyimide wet gel sheet (PI-WGs) was obtained.

The resulting PI-WGs was left to stand at room temperature (25°C) for 24 hours in a closed container made of SUS in an NMP saturated atmosphere and immersed in a solution in acetone:NMP (mass ratio) = 25:75 for 24 hours, a solution in acetone:NMP (mass ratio) = 50:50 for 24 hours, and a solution in acetone:NMP (mass ratio) = 75:25 for 24 hours, respectively, and then repeatedly subjected to washing with acetone and immersion in acetone for 24 hours three times, thus replacing the solvent. This polyimide wet gel sheet immersed in acetone was dried with the supercritical drying apparatus to obtain a porous polyimide sheet (pPIs). The BET specific surface area of the resulting pPIs was 472 $m^2$/g.

The resulting pPIs was cut into a size of 50 mm × 50 mm, and then an attempt was made to perform carbonization under the same carbonization conditions as in Example 1, but the shape deformed significantly from the sheet shape, thus failing to obtain a porous carbon sheet. The BET specific surface area of the highly deformed carbonized product was below the lower limit of the above measuring device (10 $m^2$/g or less).

[Comparative Example 2]

With reference to NPL 5(ACS Appl. Mater. Interfaces, (2012), 4(2), 536-544), a porous polyimide sheet (pPIs) was fabricated by the following procedure. In a 100 mL glass vial, N-methyl-2-pyrrolidone (NMP: 41.6 g) was added to 2,2'-dimethylbenzidine (m-Tolidine; DMBZ: 2.123 g; 10.0 mmol) and dissolved while stirring with a magnetic stirrer, and then powder of 3,3',4,4'-biphenyltetracarboxylic dianhydride (BPDA: 3.09 g; 10.5 mmol) was added, followed by stirring at room temperature (25°C) for 2 hours to obtain a polyamide acid (PAA) solution.

Thereafter, while stirring the polyamide acid (PAA) solution, a solution of 1,3,5-tris(4-aminophenoxy)benzene (TAPB: 0.133 g; 0.333 mmol) dissolved in 6.5 g of NMP in a separate 20 mL glass vial was added, and after stirring at room temperature for 10 minutes, acetic anhydride (8.58 g; 84 mmol) and pyridine (6.6 g; 84 mmol) were added, followed by stirring for 5 minutes until uniformity was achieved.

Thereafter, the sheet molding, gelation, solvent replacement and supercritical drying were carried out in the same manner as in Comparative Example 1 to obtain a porous polyimide sheet (pPIs). However, during carbonization of pPIs, the sample shape changed significantly as in Comparative Example 1, thus failing to obtain a porous carbon sheet. Physical properties of the resulting pPIs and the highly deformed carbonized product are shown in Table 20.

[Comparative Example 3]

The same operation as in Comparative Example 1 was carried out by changing the diamine, tetracarboxylic

anhydride, crosslinking agent, and the addition amounts thereof to those shown in Table 20 in the same manner as in Comparative Example 1, with reference to NPL 7 (Polymer, (2019), 176(2), 213-226), to obtain a porous polyimide sheet (pPIs). During carbonization, the sample shape changed significantly as in Comparative Example 1, thus failing to obtain a porous carbon sheet. Physical properties of the resulting pPIs and the highly deformed carbonized product are shown in Table 20.

[Comparative Example 4]

The same operation as in Comparative Example 1 was carried out by changing the diamine, tetracarboxylic anhydride, crosslinking agent, and the addition amounts thereof to those shown in Table 21 in the same manner as in Comparative Example 1, with reference to NPL 7 (Polymer, (2019), 176(2), 213-226), to obtain a porous polyimide sheet (pPIs). However, during carbonization of pPIs, the sample shape changed significantly as in Comparative Example 1, thus failing to obtain a porous carbon sheet. Physical properties of the resulting pPIs and the highly deformed carbonized product are shown in Table 21.

[Comparative Example 5]

The same operation as in Example 1 was carried out by changing the diamine, tetracarboxylic anhydride, crosslinking agent, and the addition amounts thereof to those shown in Table 21 in the same manner as in Example 1 to obtain a porous polyimide sheet (pPIs). However, during carbonization of pPIs, the sample shape changed significantly as in Comparative Example 1, thus failing to obtain a porous carbon sheet. Physical properties of the resulting pPIs and the highly deformed carbonized product are shown in Table 21.

[Comparative Example 6]

With reference to NPL 3 (ACS Appl. Mater. Interfaces, (2019), 11, 9425-9437), a porous polyimide sheet (pPIs) was fabricated by the following procedure. In a 100 mL glass vial, N-methyl-2-pyrrolidone (NMP: 45 g) was added to 1,4-bis(4-aminophenoxy)butane (BAP4: 2.04 g; 7.5 mmol) and dissolved by stirring with a magnetic stirrer, powder of 3,3',4,4'-biphenyltetracarboxylic dianhydride (BPDA: 3.04 g; 10.33 mmol) was added while stirring the solution, followed by stirring at room temperature for 2 hours. To the uniform solution, 2,2'-dimethylbenzidine (DMBZ: 0.53 g; 2.5 mmol) was added, followed by stirring at room temperature for 30 minutes to obtain a polyamide acid (PAA) solution.

Thereafter, while stirring the polyamide acid (PAA) solution, a solution of 1,3,5-tris(4-aminophenoxy)benzene (TAPB: 0.089 g; 0.222 mmol) dissolved in 6.3 g of NMP in a separate 20 mL glass vial was added, followed by stirring at room temperature for 10 minutes. Furthermore, acetic anhydride (8.44 g; 82.7 mmol) was added, and after stirring until uniformity was achieved, triethylamine (3.13 g; 31 mmol) was added, followed by stirring until uniformity was achieved.

Thereafter, the sheet molding, gelation, solvent replacement and supercritical drying were carried out in the same manner as in Comparative Example 1 to obtain a porous polyimide sheet (pPIs). However, during carbonization of pPIs, the sample shape changed significantly as in Comparative Example 1, thus failing to obtain a porous carbon sheet. Physical properties of the resulting pPIs and the highly deformed carbonized product are shown in Table 21.

[Comparative Example 7]

With reference to NPL 2 (ACS Appl. Polym. Mater., (2020), 2, 2179-2189), a porous polyimide sheet (pPIs) was fabricated by the following procedure. In a 100 mL glass vial, N-methyl-2-pyrrolidone (NMP: 45 g) was added to 2,2'-dimethylbenzidine (DMBZ: 0.53 g; 2.5 mmol) and dissolved by stirring with a magnetic stirrer, and then powder of 3,3',4,4'-biphenyltetracarboxylic dianhydride (BPDA: 2.99 g; 10.17 mmol) was added while stirring the solution, followed by stirring at 40°C until uniformity was achieved. To the uniform solution, 1,3-bis(4-aminophenoxy)-2,2-dimethylpropane (BAPN: 2.15 g; 7.5 mmol) was added, followed by stirring at 40°C until uniformity was achieved to obtain a polyamide acid (PAA) solution.

Thereafter, while stirring the polyamide acid (PAA) solution, a solution of 1,3,5-tris(4-aminophenoxy)benzene (TAPB: 0.044 g; 0.111 mmol) dissolved in 6.4 g of NMP in a separate 20 mL glass vial was added, followed by stirring at room temperature for 10 minutes. Furthermore, acetic anhydride (8.3 g; 81.3 mmol) was added, and after stirring until uniformity was achieved, triethylamine (2.05 g; 20.3 mmol) was added, followed by stirring until uniformity was achieved.

Thereafter, the sheet molding, gelation, solvent replacement and supercritical drying were carried out in the same manner as in Comparative Example 1 to obtain a porous polyimide sheet (pPIs). However, during carbonization of pPIs, the sample shape changed significantly as in Comparative Example 1, thus failing to obtain a porous carbon sheet. Physical properties of the resulting pPIs and the highly deformed carbonized product are shown in Table 21.

[Table 19]

| Table 19: Example VI-1 | | | | | | | |
|---|---|---|---|---|---|---|---|
| | | Example 1 | Example 2 | Example 3 | Example 4 | Example 5 | Example 6 |
| Diamine | type | PPDA | PPDA | PPDA | TMPDA | DMPDA | PPDA |
| | mmol | 10 | 10 | 10 | 10 | 10 | 10 |
| | g | 1.08 | 1.08 | 1.08 | 1.64 | 1.36 | 1.08 |
| Acid dianhydride | type | PMDA | PMDA | PMDA | PMDA | PMDA | PMDA |
| | mmol | 11 | 10.5 | 11.43 | 11 | 11 | 11 |
| | g | 2.4 | 2.29 | 2.49 | 2.4 | 2.4 | 2.29 |
| Polymerization solvent | type | NMP | NMP | NMP | NMP | NMP | NMP |
| | g | 29 | 29.2 | 45.5 | 34 | 31.5 | 35.3 |
| Crosslinking agent | type | TAB | TAB | TAB | TAB | TAB | TAB |
| | mmol | 0.667 | 0.333 | 0.952 | 0.667 | 0.667 | 0.667 |
| | g | 0.234 | 0.117 | 0.335 | 0.234 | 0.234 | 0.234 |
| Crosslinking agent solvent | type | NMP | NMP | NMP | NMP | NMP | NMP |
| | g | 4.5 | 2.2 | 6.4 | 4.5 | 4.5 | 4.5 |
| Dehydrating agent | type | $Ac_2O$ | $Ac_2O$ | $Ac_2O$ | $Ac_2O$ | $Ac_2O$ | $Ac_2O$ |
| | mmol | 264 | 252 | 274 | 264 | 264 | 264 |
| | g | 27 | 25.7 | 28 | 27 | 27 | 27 |
| Amine | type | $NEt_3$ | $NEt_3$ | $NEt_3$ | $NEt_3$ | $NEt_3$ | $NEt_3$ |
| | mmol | 33 | 32 | 34 | 33 | 33 | 33 |
| | g | 3.3 | 3.2 | 3.5 | 3.3 | 3.3 | 3.3 |
| Immersion solvent | type | NMP | NMP | NMP | NMP | NMP | NMP |
| | g | 270 | 260 | 280 | 270 | 270 | 270 |
| Concentration of dehydrating imidization agent | % by mass | 10.09 | 10.00 | 10.11 | 10.09 | 10.09 | 10.09 |
| Degree of polymerization n | - | 10 | 20 | 7 | 10 | 10 | 10 |
| Solid content | % by weight | 10 | 10 | 7 | 10 | 10 | 9 |
| pPIs: Film thickness | μm | 70 | 72 | 71 | 69 | 69 | 71 |
| Average pore diameter | nm | 8.6 | 8.8 | 9.3 | 8.4 | 7.4 | 8.7 |
| BET specific surface area | $m^2/g$ | 512 | 532 | 553 | 722 | 711 | 525 |
| Bulk density | $g/cm^3$ | 0.25 | 0.24 | 0.22 | 0.23 | 0.25 | 0.24 |
| pCs: Film thickness | μm | 64 | 65 | 64 | 63 | 63 | 65 |
| Average pore diameter (retention rate) | nm | 6.6<br>75% | 6.8<br>73% | 6.2<br>74% | 5.6<br>76% | 5.7<br>76% | 6.7<br>77% |
| BET specific surface area (retention rate) | $m^2/g$ | 472<br>89% | 488<br>88% | 461<br>88% | 642<br>86% | 632<br>86% | 449<br>86% |

(continued)

| Table 19: Example VI-1 | | | | | | | |
|---|---|---|---|---|---|---|---|
| | | Example 1 | Example 2 | Example 3 | Example 4 | Example 5 | Example 6 |
| Bulk density (increase rate) | $g/cm^3$ | 0.32 33% | 0.3 36% | 0.31 35% | 0.33 32% | 0.33 32% | 0.33 38% |
| Average pore size (D) | nm | 3.6 | 3.6 | 2.7 | 3.5 | 3.5 | 3.6 |
| Bending elastic modulus | MPa | 785 | 702 | 759 | 629 | 588 | 748 |
| Bending strength | MPa | 22.3 | 20.3 | 21.4 | 19.7 | 17.8 | 20.4 |
| BET specific surface area after heat treatment at 300°C | $m^2/g$ | 498 | 519 | 486 | 698 | 692 | 477 |

[Table 20]

| Table 20: Example VI-2 | | | | | | |
|---|---|---|---|---|---|---|
| | | Example 7 | Example 8 | Comparative Example 1 | Comparative Example 2 | Comparative Example 3 |
| Diamine | type | 1,5-DAN | 1,5-DAN | ODA/BAFL | DMBZ | PPDA |
| | mmol | 10 | 10 | 5.25/5.25 | 10 | 20 |
| | g | 1.58 | 1.58 | 1.05/1.83 | 2.123 | 2.16 |
| Acid dianhydride | type | PMDA | PMDA | BPDA | BPDA | PMDA |
| | mmol | 11 | 10.5 | 10 | 10.5 | 10 |
| | g | 2.4 | 2.29 | 2.94 | 3.09 | 2.18 |
| Polymerization solvent | type | NMP | NMP | NMP | NMP | NMP |
| | g | 33.5 | 33.7 | 51.5 | 41.6 | 31.6 |
| Crosslinking agent | type | TAB | TAB | BTC | TAPB | BTC |
| | mmol | 0.667 | 0.333 | 0.333 | 0.333 | 0.2 |
| | g | 0.234 | 0.117 | 0.088 | 0.133 | 0.053 |
| Crosslinking agent solvent | type | NMP | NMP | NMP | NMP | NMP |
| | g | 4.5 | 2.2 | 1.7 | 6.5 | 8 |
| Dehydrating agent | type | $Ac_2O$ | $Ac_2O$ | $Ac_2O$ | $Ac_2O$ | $Ac_2O$ |
| | mmol | 264 | 252 | 80 | 84 | 80 |
| | g | 27 | 25.7 | 8.16 | 8.58 | 8.16 |
| Amine | type | $NEt_3$ | $NEt_3$ | $NEt_3$ | Pyridine | Pyridine |
| | mmol | 33 | 32 | 10 | 84 | 80 |
| | g | 3.3 | 3.2 | 1 | 6.6 | 6.3 |
| Immersion solvent | type | NMP | NMP | - | - | - |
| | g | 270 | 260 | - | - | - |
| Concentration of dehydrating imidization agent | % by mass | 10.09 | 10.09 | - | - | - |

(continued)

| Table 20: Example VI-2 | | | | | | |
|---|---|---|---|---|---|---|
| | | Example 7 | Example 8 | Comparative Example 1 | Comparative Example 2 | Comparative Example 3 |
| Degree of polymerization n | - | 10 | 20 | 20 | 20 | 1 |
| Solid content | % by weight | 10 | 10 | 10 | 10 | 10 |
| pPIs: Film thickness | μm | 77 | 78 | 95 | 81 | 93 |
| Average pore diameter | nm | 9.7 | 10 | 7.8 | 13.1 | 14.2 |
| BET specific surface area | $m^2/g$ | 530 | 556 | 430 | 340 | 190 |
| Bulk density | $g/cm^3$ | 0.18 | 0.17 | 0.14 | 0.18 | 0.09 |
| pCs: Film thickness | μm | 67 | 69 | - | - | - |
| Average pore diameter (Retention rate) | nm | 7.5<br>77% | 7.7<br>77% | -<br>- | -<br>- | -<br>- |
| BET specific surface area (Retention rate) | $m^2/g$ | 489<br>92% | 522<br>94% | <10<br>- | <10<br>- | <10<br>- |
| Bulk density (Increase rate) | $g/cm^3$ | 0.27<br>50% | 0.25<br>47% | Impossible to measure | Impossible to measure | Impossible to measure |
| Average pore size (D) | nm | 2.6 | 2.8 | 8.6 | 25.3 | 20.3 |
| Bending elastic modulus | MPa | 557 | 643 | 32 | 55 | 58 |
| Bending strength | MPa | 15.9 | 15.7 | 0.7 | 1.5 | 0.7 |
| BET specific surface area after heat treatment at 300°C | $m^2/g$ | 500 | 519 | <10 | <10 | <10 |

[Table 21]

| Table 21: Example VI-3 | | | | | |
|---|---|---|---|---|---|
| | | Comparative Example 4 | Comparative Example 5 | Comparative Example 6 | Comparative Example 7 |
| Diamine | type | PPDA | ODA | BAP4/DMBZ | BAPN/DMBZ |
| | mmol | 10.5 | 10 | 7.5/2.5 | 7.5/2.5 |
| | g | 1.135 | 2 | 2.04/0.53 | 2.15/0.53 |
| Acid dianhydride | type | BPDA | BPDA | BPDA | BPDA |
| | mmol | 10 | 11 | 10.33 | 10.17 |
| | g | 2.94 | 3.24 | 3.04 | 2.99 |
| Polymerization solvent | type | NMP | NMP | NMP | NMP |
| | g | 31.1 | 44.8 | 45 | 45 |
| Crosslinking agent | type | BTC | TAB | TAPB | TAPB |
| | mmol | 0.333 | 0.667 | 0.222 | 0.111 |
| | g | 0.088 | 0.234 | 0.089 | 0.044 |

(continued)

| Table 21: Example VI-3 | | | | | | |
|---|---|---|---|---|---|---|
| | | | Comparative Example 4 | Comparative Example 5 | Comparative Example 6 | Comparative Example 7 |
| Crosslinking agent solvent | | type | NMP | NMP | NMP | NMP |
| | | g | 7 | 4.5 | 6.3 | 6.4 |
| Dehydrating agent | | type | $Ac_2O$ | $Ac_2O$ | $Ac_2O$ | $Ac_2O$ |
| | | mmol | 80 | 264 | 82.7 | 81.3 |
| | | g | 8.16 | 27 | 8.44 | 8.3 |
| Amine | | type | Pyridine | $NEt_3$ | $NEt_3$ | $NEt_3$ |
| | | mmol | 80 | 33 | 31 | 20.3 |
| | | g | 6.3 | 3.3 | 3.13 | 2.05 |
| Immersion solvent | | type | - | NMP | - | - |
| | | g | - | 270 | - | - |
| Concentration of dehydrating imidization agent | | % by mass | - | 10.09 | - | - |
| Degree of polymerization n | | - | 20 | 10 | 30 | 60 |
| Solid content | | % by weight | 10 | 10 | 10 | 10 |
| pPIs: | Film thickness | μm | 77 | 74 | 63 | 61 |
| Average pore diameter | | nm | 13.6 | 13.7 | 18.2 | 19.5 |
| BET specific surface area | | $m^2/g$ | 334 | 563 | 226 | 259 |
| Bulk density | | $g/cm^3$ | 0.24 | 0.23 | 0.31 | 0.32 |
| pCs: | Film thickness | μm | - | - | - | - |
| Average pore diameter (Retention rate) | | nm | -<br>- | -<br>- | -<br>- | -<br>- |
| BET specific surface area (Retention rate) | | $m^2/g$ | <10<br>- | <10<br>- | <10<br>- | <10<br>- |
| Bulk density (Increase rate) | | $g/cm^3$ | Impossible to measure | Impossible to measure | Impossible to measure | Impossible to measure |
| Average pore size (D) | | nm | 17.7 | 5.3 | 18.3 | 16.3 |
| Bending elastic modulus | | MPa | 51 | 344 | 92 | 128 |
| Bending strength | | MPa | 1.3 | 14.2 | 8 | 9.5 |
| BET specific surface area after heat treatment at 300°C | | $m^2/g$ | <10 | <10 | <10 | <10 |

[Example 9]

A polyvinylidene fluoride (PVDF) gel sheet was dehydrofluorinated and the resulting dehydrofluorinated PVDF gel sheet was supercritically dried to fabricate a PVDF gel sheet. Then, the resulting porous PVDF sheet was carbonized to obtain a porous carbon sheet. Specific procedures are as follows.

First, 35 ml of propylene carbonate (PC) was added to a 100 ml three-necked flask equipped with a cooling tube and a thermometer, and then 2.33 g of PVDF powder (Solef 6020, manufactured by Solvay) was added while stirring with a magnetic stirrer.

The flask was immersed in a hot bath, followed by heating to 90°C while stirring to dissolve the PVDF powder. The heated PVDF PC solution was transferred onto a Kapton film as a base material and spread on a bar coater (WET film thickness of about 100 μm) to about 200 mm width ×about 500 mm length, followed by standing at room temperature. After about 3 minutes, the solution was gelled to obtain a PVDF wet gel sheet.

The resulting PVDF wet gel sheet was dehydrofluorinated by immersed in a solution of 1,8-diazabicyclo[5.4.0]-7-undecene (DBU) which is a strong organic base. Specifically, the PVDF wet gel sheet still attached to the Kapton film was immersed in about 50 ml of a DBU solution having the concentration of 1M using a mixture of PC and ethanol (PC/EtOH = 75/25 vol) as the solvent at room temperature for 24 hours. Subsequently, the wet gel sheet was immersed at 70°C for 24 hours to obtain a dehydrofluorinated PVDF wet gel sheet.

The resulting dehydrofluorinated PVDF wet gel sheet was immersed in ethanol, and then repeatedly subjected to replacement of ethanol every 24 hours three times in total, thus replacing the solvent in the gel. The solvent-replaced dehydrofluorinated PVDF wet gel sheet was peeled from the Kapton film and subjected to supercritical drying under the same conditions as in the case of the polyimide wet gel sheet to obtain a porous PVDF sheet. The BET specific surface area, bulk density and average pore diameter of the resulting porous PVDF sheet were 256 $m^2/g$, 0.11 $g/cm^3$ and 131 nm, respectively.

The resulting porous PVDF sheet was carbonized under the same conditions as in the porous polyimide sheet to obtain a porous carbon sheet. The BET specific surface area, bulk density and average pore diameter of the resulting porous carbon sheet were 237 $m^2/g$ (retention rate of 92.6%), 0.13 $g/cm^3$ (increase rate of 18.1%) and 119 nm (retention rate of 90.8%), respectively.

INDUSTRIAL APPLICABILITY

The porous polyimide according to one aspect of the present disclosure can be suitably applied to various applications such as applications of materials for production of porous carbon sheets.

The method according to one aspect of the present disclosure can be employed for production of polyimide wet gels and porous polyimides.

The porous carbon sheet according to one aspect of the present disclosure include pores in the submicron order and can be employed in the fields, for example, catalyst carriers, electrode materials, filter materials and the like.

**Claims**

1. A porous polyimide, wherein an average pore size (D) determined by small-angle X-ray scattering is 1.0 nm or more and 7.0 nm or less.

2. The porous polyimide according to claim 1, wherein, in a range where the size of a scattering vector q of small-angle X-ray scattering is 0.025 $nm^{-1}$ or more and 0.075 $nm^{-1}$ or less, when a logarithmic value log[I(q)] of a scattering intensity I(q) is differentiated by a logarithmic value log[q] of the scattering vector q, the minimum value of a differential coefficient is -1.0 or more and 0.0 or less.

3. The porous polyimide according to claim 1, wherein an average pore diameter (L) determined by the following formula:

$$L = 4V/A$$

based on a pore volume (V) and a BET specific surface area (A) determined by a gas adsorption method is 5 nm or more and 500 nm or less.

4. The porous polyimide according to claim 1, wherein a bending elastic modulus in a three-point bending test is 100 MPa or more.

5. The porous polyimide according to claim 1, wherein a bending elastic modulus in a three-point bending test is 200 MPa or more.

6. The porous polyimide according to claim 1, wherein a bending strength in a three-point bending test is 5 MPa or more.

7. The porous polyimide according to claim 1, wherein a bending strength in a three-point bending test is 10 MPa or more.

8. The porous polyimide according to claim 1, wherein a bulk density is 0.05 g/cm$^3$ or more and 0.50 g/cm$^3$ or less.

9. The porous polyimide according to claim 1, wherein a BET specific surface area is 100 m$^2$/g or more and 2,000 m$^2$/g or less.

10. The porous polyimide according to claim 1, which has a sheet shape.

11. The porous polyimide according to claim 1, wherein a polyimide constituting the porous polyimide has a polyimide main skeleton and a crosslinked structure that crosslinks the polyimide main skeleton.

12. A porous polyimide, wherein an average pore diameter (L) determined by the following formula:

$$L = 4V/A$$

based on a pore volume (V) and a BET specific surface area (A) determined by a gas adsorption method is 5 nm or more and 500 nm or less, and
a bending elastic modulus in a three-point bending test is 150 MPa or more.

13. The porous polyimide according to claim 12, wherein the bending elastic modulus in a three-point bending test is 200 MPa or more.

14. A porous polyimide, wherein an average pore diameter (L) determined by the following formula:

$$L = 4V/A$$

based on a pore volume (V) and a BET specific surface area (A) determined by a gas adsorption method is 5 nm or more and 500 nm or less, and
a bending strength in a three-point bending test is 10 MPa or more.

15. The porous polyimide according to claim 12 or 14, wherein a polyimide constituting the porous polyimide has a polyimide main skeleton and a crosslinked structure that crosslinks the polyimide main skeleton.

16. A porous polyimide comprising a polyimide main skeleton having an aromatic group in a molecular backbone and a crosslinked structure having an aromatic group in a molecular backbone, wherein

an average pore diameter (L) determined by the following formula:

$$L = 4V/A$$

based on a pore volume (V) and a BET specific surface area (A) determined by a gas adsorption method is 5 nm or more and 500 nm or less, and
a bending elastic modulus in a three-point bending test is 50 MPa or more.

17. The porous polyimide according to claim 12, 14 or 16, wherein a bulk density is 0.05 g/cm$^3$ or more and 0.50 g/cm$^3$ or less.

18. The porous polyimide according to claim 12, 14 or 16, wherein a BET specific surface area is 10 m$^2$/g or more and 2,000 m$^2$/g or less.

19. The porous polyimide according to claim 12, 14 or 16, wherein, in a polyimide constituting the porous polyimide, a ratio of the number of carbonyl carbon atoms to the total number of carbon atoms is 13.5% or more.

20. A sheet-shaped porous polyimide, wherein an average pore diameter (L) determined by the following formula:

$$L = 4V/A$$

based on a pore volume (V) and a BET specific surface area (A) determined by a gas adsorption method is 5 nm or more and 500 nm or less, and
a BET specific surface area after heat treatment at 300°C for 1 hour is 10 $m^2$/g or more and 2,000 $m^2$/g or less.

**21.** The porous polyimide according to claim 20, wherein a bulk density is 0.05 g/$cm^3$ or more and 0.50 g/$cm^3$ or less.

**22.** The porous polyimide according to claim 20, wherein, in a polyimide constituting the porous polyimide, a ratio of the number of carbonyl carbon atoms to the total number of carbon atoms is 13.5% or more.

**23.** The porous polyimide according to claim 20, wherein a polyimide constituting the porous polyimide has a polyimide main skeleton and a crosslinked structure that crosslinks the polyimide main skeleton.

**24.** The porous polyimide according to claim 1, 12, 14, 16 or 20, wherein the crosslinked structure is a structure by a tri- or higher-valent group derived from an optionally substituted monocyclic or polycyclic aromatic ring, or a tri- or higher-valent group derived from a linked aromatic ring in which a plurality of optionally substituted aromatic rings are linked to each other by direct binding or by binding via a hetero atom.

**25.** The porous polyimide according to claim 1, 12, 14, 16 or 20, wherein the polyimide main skeleton has a structure represented by the following general formula (1):

[Chemical Formula 1]

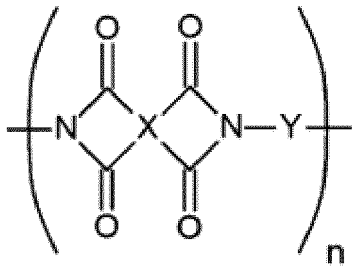

(1)

wherein

X is a tetravalent organic group,
Y is a divalent organic group, in which,
X is a tetravalent group derived from an optionally substituted monocyclic or polycyclic aromatic ring, or a tetravalent group derived from a linked aromatic ring in which a plurality of optionally substituted aromatic rings are linked to each other by direct binding or by binding via a hetero atom, and/or,
Y is a divalent group derived from an optionally substituted monocyclic or polycyclic aromatic ring, or a divalent group derived from a linked aromatic ring in which a plurality of optionally substituted aromatic rings are linked to each other by direct binding or by binding via a hetero atom, and
n is a positive integer, and

a degree of polymerization of the polyimide main skeleton is n in the general formula (1).

**26.** The porous polyimide according to claim 1, 12, 14, 16 or 20, wherein a polyimide constituting the porous polyimide contains a polymerization product of a polymerization component containing a tetracarboxylic dianhydride, a diamine, and a tri- or higher-functional amine, and a ratio of the tri- or higher-functional amine based on 100% by mass in total of the tetracarboxylic dianhydride, the diamine and the tri- or higher-functional amine is 1% by mass or more and 40% by mass or less.

**27.** The porous polyimide according to claim 1, 12, 14, 16 or 20, wherein an average thickness is 10 mm or less.

**28.** The porous polyimide according to claim 1, 12, 14, 16 or 20, wherein a polyimide constituting the porous polyimide

contains a polymerization product of a polymerization component containing a tetracarboxylic dianhydride and a diamine,

pyromellitic anhydride accounts for 50 mol% or more of the tetracarboxylic dianhydride, and
the end of the polyimide is an anhydride structure derived from pyromellitic anhydride.

**29.** A polyimide wet gel, wherein, when qI(q) obtained by multiplying the scattering intensity I(q) by q is plotted against the scattering vector q of small-angle X-ray scattering, qI(q) has a maximum value in a range of $0.04\ nm^{-1} < q < 2.0\ nm^{-1}$, and an average pore size $D_W$ calculated from the peak position of qI(q) is 0.8 nm or more and 8.0 nm or less.

**30.** The polyimide wet gel according to claim 29, wherein, in a range where the size of a scattering vector q of small-angle X-ray scattering is $0.080\ nm^{-1}$ or more and $0.12\ nm^{-1}$ or less, when a logarithmic value log[I(q)] of a scattering intensity I(q) is differentiated by a logarithmic value log[q] of the scattering vector q, the minimum value of a differential coefficient is -1.0 or more and 0.0 or less.

**31.** The polyimide wet gel according to claim 29, wherein a strain at break in a three-point bending test is 10% or more.

**32.** The polyimide wet gel according to claim 29, wherein a polyimide constituting the polyimide wet gel has a molecular chain represented by the following general formula (1):

[Chemical Formula 2]

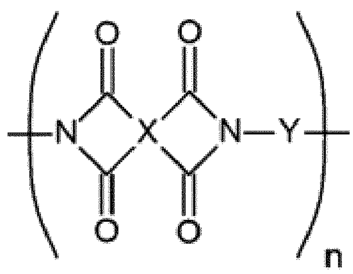

(1)

wherein X is a tetravalent organic group, Y is a divalent organic group and n is a positive integer, X and/or Y in the general formula (1) has/have a structure imparting linearity to the molecular chain, and n is a degree of polymerization of the polyimide.

**33.** The polyimide wet gel according to claim 29, wherein a polyimide constituting the polyimide wet gel has a molecular chain represented by the following general formula (1):

[Chemical Formula 3]

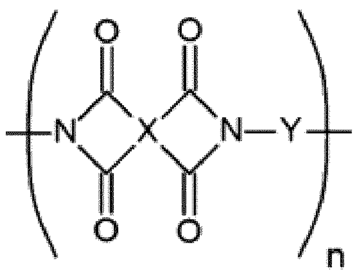

(1)

wherein X is a tetravalent organic group, Y is a divalent organic group and n is a positive integer, a ratio of a structure derived from pyromellitic anhydride to X present in the molecular chain is 50 mol% or more, and the end of the molecular chain is derived from pyromellitic anhydride.

**34.** The polyimide wet gel according to claim 29, which has a sheet shape.

**35.** The polyimide wet gel according to claim 29, wherein a porous polyimide obtained by subjecting to supercritical carbon dioxide drying after replacing the solvent in the polyimide wet gel with acetone has:

BET specific surface area: 100 $m^2/g$ or more and 2,000 $m^2/g$ or less,
bulk density: 0.05 $g/cm^3$ or more and 0.50 $g/cm^3$ or less,
bending strength: 5 MPa or more,
bending elastic modulus: 100 MPa or more, and
average pore size (D) determined by small-angle X-ray scattering; 1.0 nm or more and 7.0 nm or less.

**36.** A method for producing a polyimide wet gel, which comprises the steps of:

adding a crosslinking agent having three or more functional groups to a polyamide acid solution to obtain a polyamide acid wet gel, and
immersing the polyamide acid wet gel in a solution containing a dehydrating imidization agent to obtain a polyimide wet gel, wherein
the concentration of the dehydrating imidization agent in the solution is 1% by weight or more and 50% by weight or less.

**37.** The method according to claim 36, wherein the temperature in the step of obtaining a polyamide acid wet gel and the step of obtaining a polyimide wet gel is kept at 10°C or higher.

**38.** The method according to claim 36, wherein the temperature of the step of obtaining a polyamide acid wet gel and the step of obtaining a polyimide wet gel is kept at 120°C or lower.

**39.** The method according to claim 36, wherein the step of obtaining a polyamide acid wet gel is carried out by spreading a mixture obtained by adding the crosslinking agent having three or more functional groups to the polyamide acid solution into a sheet.

**40.** The method according to claim 36, wherein the dehydrating imidization agent is a combination of acetic anhydride and triethylamine.

**41.** The method according to claim 36, wherein a porous polyimide constituting the polyimide wet gel has a BET specific surface area after heat treatment at 300°C for 1 hour of 10 $m^2/g$ or more and 2,000 $m^2/g$ or less.

**42.** The method according to claim 36, wherein a porous polyimide constituting the polyimide wet gel has a bending strength in a three-point bending test of 10 MPa or more and a bending elastic modulus of 100 MPa or more.

**43.** The method according to claim 36, wherein a porous polyimide constituting the polyimide wet gel determined by small-angle X-ray scattering has an average pore size (D) of 1.0 nm or more and 7.0 nm or less.

**44.** The method according to claim 36, wherein a polyimide constituting the polyimide wet gel has a molecular chain represented by the following general formula (1):

[Chemical Formula 4]

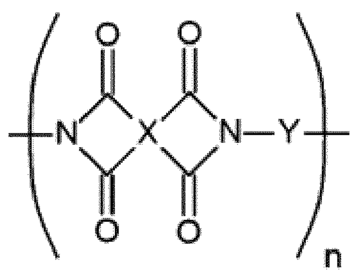

(1)

wherein X is a tetravalent organic group, Y is a divalent organic group and n is a positive integer, X and/or Y in the general formula (1) has/have a structure imparting linearity in the molecular chain, and n is a degree of polymerization of the polyimide.

**45.** A method for producing a porous polyimide, which comprises the steps of:

obtaining the polyimide wet gel by the method according to any one of claims 36 to 44, and
removing the solution from the polyimide wet gel to obtain a porous polyimide.

**46.** A porous carbon sheet which is a carbonized product of the porous polyimide according to claim 1, 12, 14, 16 or 20, and an average pore diameter (L) determined by the following formula:

$$L = 4V/A$$

based on a pore volume (V) and a BET specific surface area (A) determined by a gas adsorption method is 5 nm or more and 500 nm or less.

**47.** The porous carbon sheet according to claim 46, wherein a bulk density is 0.01 $g/cm^3$ or more and 0.80 $g/cm^3$ or less.

**48.** The porous carbon sheet according to claim 46, wherein an average thickness is 10 mm or less.

**49.** The porous carbon sheet according to claim 46, wherein a BET specific surface area is 10 $m^2$ or more and 2,000 $m^2$ or less.

**50.** A method for producing a porous carbon sheet, which comprises the step of carbonizing the porous polyimide sheet according to claim 1, 12, 14, 16 or 20 by heating to 400°C or higher to obtain a porous carbon sheet, wherein an average pore diameter (L) determined by the following formula:

$$L = 4V/A$$

based on a pore volume (V) and a BET specific surface area (A) determined by a gas adsorption method of the porous carbon sheet is 5 nm or more and 500 nm or less.

**51.** A method for producing a porous carbon sheet, which comprises the steps of:

obtaining a porous polyimide sheet by the method according to claim 45, and
carbonizing the sheet by heating to 400°C or higher to obtain a porous carbon sheet, wherein
an average pore diameter (L) determined by the following formula:

$$L = 4V/A$$

based on a pore volume (V) and a BET specific surface area (A) determined by a gas adsorption method of the porous carbon sheet is 5 nm or more and 500 nm or less.

FIG. 1

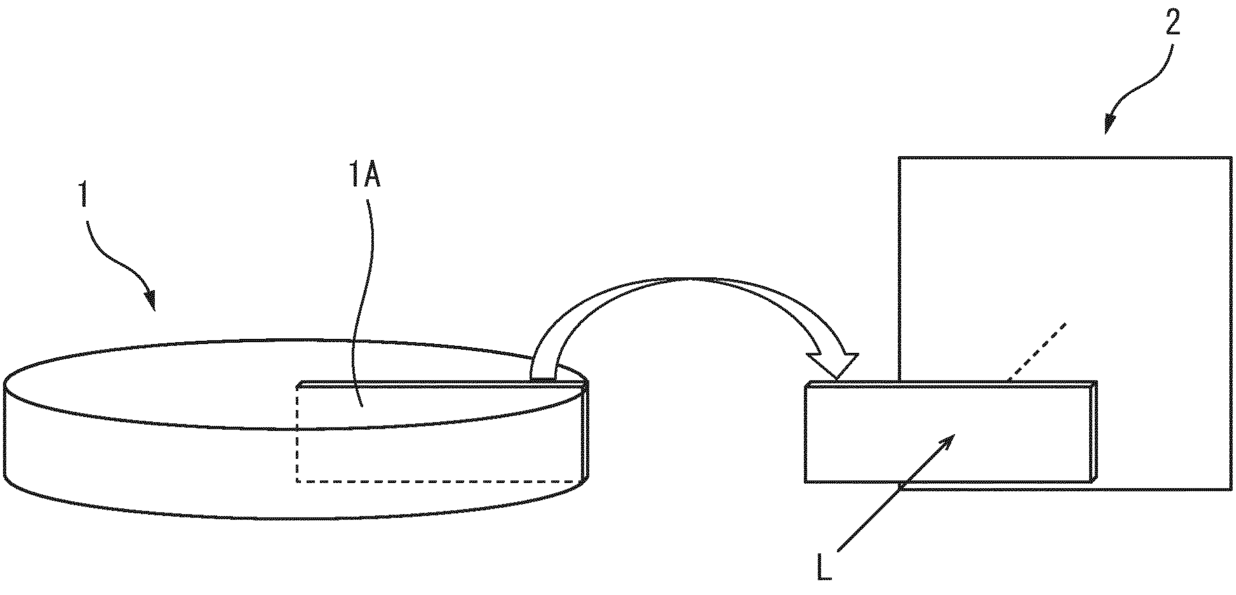

**INTERNATIONAL SEARCH REPORT**

International application No.
**PCT/JP2022/027586**

**A. CLASSIFICATION OF SUBJECT MATTER**

***C08J 9/28***(2006.01)i; ***C01B 32/05***(2017.01)i; ***C08G 73/06***(2006.01)i; ***C08G 73/10***(2006.01)i
FI: C08J9/28 CFG; C08G73/10; C08G73/06; C01B32/05

According to International Patent Classification (IPC) or to both national classification and IPC

**B. FIELDS SEARCHED**

Minimum documentation searched (classification system followed by classification symbols)

C08J9/00-9/42; C01B32/00-32/991; C08G73/00-73/26

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

JSTPlus/JST7580/JSTChina (JDreamIII)

**C. DOCUMENTS CONSIDERED TO BE RELEVANT**

| Category* | Citation of document, with indication, where appropriate, of the relevant passages | Relevant to claim No. |
|---|---|---|
| X<br>Y | CN 111253742 A (AEROSPACE RESEARCH INSTITUTE OF SPECIAL MATERIAL AND PROCESS TECHNOLOGY) 09 June 2020 (2020-06-09)<br>example 1, paragraph [0051] | 36-40, 44-45<br>40 |
| X<br>Y | JP 2005-23151 A (JSR CORPORATION) 27 January 2005 (2005-01-27)<br>paragraph [0021] | 36-37, 44<br>40 |
| A | WEBER, Jens et al., Microporous Networks of High-Performance Polymers: Elastic Deformations and Gas Sorption Properties, Macromolecules, 2008, vol. 41, no. 8, pp. 2880-2885<br>entire text | 1-45 |
| A | JP 2000-154273 A (MATSUSHITA ELECTRIC INDUSTRIAL CO., LTD) 06 June 2000 (2000-06-06)<br>entire text, particularly example 2, B method in fig. 3 | 1-45 |

☑ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **06 October 2022** | **18 October 2022** |
| Name and mailing address of the ISA/JP<br>**Japan Patent Office (ISA/JP)**<br>**3-4-3 Kasumigaseki, Chiyoda-ku, Tokyo 100-8915**<br>**Japan** | Authorized officer<br><br>Telephone No. |

Form PCT/ISA/210 (second sheet) (January 2015)

**INTERNATIONAL SEARCH REPORT**

International application No.
**PCT/JP2022/027586**

**C. DOCUMENTS CONSIDERED TO BE RELEVANT**

| Category* | Citation of document, with indication, where appropriate, of the relevant passages | Relevant to claim No. |
|---|---|---|
| A | WO 2015/198970 A1 (ASAHI KASEI KABUSHIKI KAISHA) 30 December 2015 (2015-12-30)<br>entire text | 1-45 |
| A | CN 106674587 A (BEIHANG UNIVERSITY) 17 May 2017 (2017-05-17)<br>entire text | 1-45 |
| X | JP 2013-49617 A (TOC CAPACITOR KK) 14 March 2013 (2013-03-14)<br>claims 9, paragraphs [0038], [0041], [0049]-[0051] | 46-49 |
| A | JP 2000-44214 A (MITSUBISHI HEAVY INDUSTRIES, LTD.) 15 February 2000 (2000-02-15)<br>entire text | 1-28, 46-51 |
| A | JP 2005-41769 A (TOYO TANSO CO., LTD.) 17 February 2005 (2005-02-17)<br>entire text | 1-28, 46-51 |

Form PCT/ISA/210 (second sheet) (January 2015)

**INTERNATIONAL SEARCH REPORT**

International application No.
**PCT/JP2022/027586**

**Box No. III Observations where unity of invention is lacking (Continuation of item 3 of first sheet)**

This International Searching Authority found multiple inventions in this international application, as follows:

Document 1: CN 111253742 A (AEROSPACE RESEARCH INSTITUTE OF SPECIAL MATERIAL AND PROCESS TECHNOLOGY) 09 June 2020 (2020-06-09), example 1 (Family: none)
Document 2: JP 2005-23151 A (JSR CORPORATION) 27 January 2005 (2005-01-27), paragraph [0021] (Family: none)

(Invention 1) Claims 1-28, 46, and 50

Claim 1 is a porous polyimide having the special technical feature of "the average hole size (D) found by small-angle X-ray diffraction is 1.0-7.0 nm." Furthermore, claims 12, 14, 16, and 20 are porous polyimides that share the special technical feature of "the average pore diameter (L) found by the following formula: L=4V/A on the basis of the pore volume (V) and the BET specific area (A) found by gas adsorption is 5-500 nm."

The aforementioned special technical features all have the purpose of providing a porous polyimide having favorable toughness and heat resistance. Therefore, it can be said that there is a technical relationship involving corresponding "special technical features" between the invention in claim 1 and the inventions in claims 12, 14, 16, and 20.

Therefore, the inventions in claims 1, 12, 14, 16, and 20, and the inventions in claims 2-11, 13, 15, 17-19, 21-28, 46, and 50 citing claims 1, 12, 14, 16, and 20, are classified as invention 1.

(Invention 2) Claims 29-45 and 51

Example 1 of document 1 and paragraph [0021] of document 2 each disclose "a method for manufacturing a polyimide wet gel, the method including: a step for obtaining a polyamic acid wet gel by adding a crosslinking agent having three or more functional groups to a polyamic acid solution; and a step for obtaining a polyimide wet gel by immersing the polyamic acid wet get into a solution containing a dehydrating imidizing agent, wherein the concentration of the dehydrating imidizing agent in the solution is 1-50% by weight." Claim 36 lacks novelty in light of documents 1 and 2 and thus does not have special technical features. Therefore, the invention as in claim 36 does not share identical or corresponding "special technical features" with invention 1. Furthermore, the invention as in claim 29 and the invention as in claim 36 both have the purpose of providing a polyimide wet gel having excellent physical strength. Thus, it can be said that there is a technical relationship involving corresponding "special technical features" between the inventions.

Therefore, the inventions in claims 29 and 36, and the inventions in claims 30-35, 37-45, and 51 citing claims 29 and 36 are classified as invention 2.

INTERNATIONAL SEARCH REPORT

International application No.
PCT/JP2022/027586

**Box No. III Observations where unity of invention is lacking (Continuation of item 3 of first sheet)**

1. ☑ As all required additional search fees were timely paid by the applicant, this international search report covers all searchable claims.

2. ☐ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest**

☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☑ No protest accompanied the payment of additional search fees.

Form PCT/ISA/210 (continuation of first sheet) (January 2015)

**INTERNATIONAL SEARCH REPORT**
**Information on patent family members**

International application No.
**PCT/JP2022/027586**

| Patent document cited in search report | Publication date (day/month/year) | Patent family member(s) | Publication date (day/month/year) |
|---|---|---|---|
| CN 111253742 A | 09 June 2020 | (Family: none) | |
| JP 2005-23151 A | 27 January 2005 | (Family: none) | |
| JP 2000-154273 A | 06 June 2000 | US 6399669 B1<br>entire text<br>EP 987294 A1<br>KR 10-2000-0023103 A | |
| WO 2015/198970 A1 | 30 December 2015 | KR 10-2017-0010383 A<br>entire text<br>CN 106414575 A | |
| CN 106674587 A | 17 May 2017 | (Family: none) | |
| JP 2013-49617 A | 14 March 2013 | (Family: none) | |
| JP 2000-44214 A | 15 February 2000 | (Family: none) | |
| JP 2005-41769 A | 17 February 2005 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 9434832 B
- US 10358539 B
- CN 108203516
- CN 08203516


### Non-patent literature cited in the description


- **MARY ANN B. MEADOR et al.** Polyimide Aerogels with Amide Cross-Links: A Low Cost Alternative for Mechanically Strong Polymer Aerogels. *ACS Appl. Mater. Interfaces,* 2015, vol. 7 (2), 1240-1249
- **JESSICA L. CASHMAN et al.** Flexible Polyimide Aerogels Derived from the Use of a Neopentyl Spacer in the Backbone. *ACS Appl. Polym. Mater.,* 2020, vol. 2, 2179-2189
- **MARCOS PANTOJA et al.** Increased Flexibility in Polyimide Aerogels Using Aliphatic Spacers in the Polymer Backbone. *ACS Appl. Mater. Interfaces,* 2019, vol. 11, 9425-9437
- **CHIDAMBARESWARAPATTAR et al.** Robust monolithic multiscale nanoporous polyimides and conversion to isomorphic carbon. *RSC Adv.z,* 2013, vol. 3, 26459-26469
- **MARY ANN B MEADOR et al.** Mechanically strong, flexible polyimide aerogels crosslinked with aromatic triamine. *ACS Appl. Mater. Interfaces,* 2012, vol. 4 (2), 536-544
- **ROCCO P. VIGGIANO et al.** Effect of Bulky Substituents in the Polymer Backbone on the Properties of Polyimide Aerogels. *ACS Appl. Mater. Interfaces,* 2017, vol. 9 (9), 8287-8296
- **SHAHRIAR GHAFFARI MOSANENZADEH et al.** Structure to properties relations of BPDA and PMDA backbone hybrid diamine polyimide aerogels. *Polymer,* 2019, vol. 176 (2), 213-226
- **NAOKI YOSHIHARA et al.** Rigid Polymer Networks End-Linked with Tri- and Tetra-armed Crosslinkers. *Macromol. Chem. Phys,* 2014, vol. 215 (10), 988-997
- **R.W. PEKALA et al.** Organic aerogels from the polycondensation of resorcinol with formaldehyde. *J. Mater. Sci.,* 1989, vol. 24 (9), 3221-3227
- **R. J. ROE.** Method of "X-ray and Neutron Scattering in Polymer Science. Oxford, Oxford University Press, 2000
- **M. SHIBAYAMA et al.** *J. Chem. Phys,* 1992, vol. 97, 6829
- Fundamentals and Applications. **YOSHIO IMAI ; RIKIO YOKOTA.** Latest Polyimides. NTS Inc, 2002
- Recent Advances in Polyimide Science and Technology. **R. J. ANGELO et al.** Soc. Plast. Eng. 1987, 67-91
- **R. J. ROE.** Method of "X-ray and Neutron Scattering in Polymer Science. Oxford University Press, 2000
- **M. SHIBAYAMA et al.** *J. Chem. Phys.,* 1992, vol. 97, 6829
- *ACS Appl. Mater. Interfaces,* 2015, vol. 7 (2), 1240-1249
- *ACS Appl. Mater. Interfaces,* 2012, vol. 4, 536-544
- *Polymer,* 2019, vol. 176, 213-226
- *ACS Appl. Mater. Interfaces,* 2017, vol. 9, 8287-8296
- *ACS Appl. Mater. Interfaces,* 2019, vol. 11, 9425-9437
- *ACS Appl. Polym. Mater,* 2020, vol. 2, 2179-2189
- *ACS Appl. Mater. Interfaces,* 2015, vol. 7, 1240-1249
- *ACS Appl. Polym. Mater.,* 2020, vol. 2, 2179-2189
- *ACS Appl. Mater. Interfaces,* 2012, vol. 4 (2), 536-544
- *Polymer,* 2019, vol. 176 (2), 213-226
- *ACS Appl. Mater. Interfaces,* 2017, vol. 9 (9), 8287-8296